# EUROPÄISCHE PATENTANMELDUNG

(11) **EP 4 079 619 A1**
(43) Veröffentlichungstag der Anmeldung: **26.10.2022**
(21) Anmeldenummer: 22020182.6
(22) Anmeldetag: 20.04.2022
(51) Int. Cl.: B62M 6/90, B62M 6/55, B62K 19/34, B62J 43/28

(54) **ELEKTRISCHE FAHRRAD-ANTRIEBSEINHEIT SOWIE FAHRRADRAHMEN, RAHMENSCHNITTSTELLEN-EINHEIT UND ENERGIESPEICHEREINRICHTUNG FÜR ELEKTRISCHE FAHRRAD-ANTRIEBSEINHEIT**

(30) Priorität: 20.04.2021 DE 102021002051; 30.10.2021 DE 102021005374; 19.04.2022 DE 102022109481
(71) Anmelder: SRAM Deutschland GmbH, 97424 Schweinfurt (DE)
(72) Erfinder: Braedt, Henrik, 97456 Dittelbrunn-OT Hambach (DE); Heyna, Sebastian, 97456 Dittelbrunn-OT Hambach (DE)

(57) **Zusammenfassung**

Die vorliegende Offenbarung betrifft eine elektrische Fahrrad-Antriebseinheit (Du) zur Anordnung in einem Tretlagerbereich (R) eines Fahrradrahmens. Die Antriebseinheit (Du) weist eine elektrische Motoreinrichtung (M_{E}) sowie eine Tretlagerbaugruppe (A_{B}) mit einer Tretlagerwelle (S_{B}) auf. Die vorliegende Offenbarung betrifft außerdem einen Fahrradrahmen bzw. eine Rahmenschnittstellen-Einheit (I_{U}), sowie eine Energiespeichereinrichtung (Sᵢ) für die elektrische Fahrrad-Antriebseinheit (Du).

Die Antriebseinheit (Du) umfasst eine integrative Energiespeichereinrichtung (Sᵢ) zur Energieversorgung der Motoreinrichtung (M_{E}). Die integrative Energiespeichereinrichtung (Sᵢ) ist benachbart zu der Motoreinrichtung (M_{E}) dergestalt anordenbar, dass die Schwerpunktlage (C_{GE}) der Energiespeichereinrichtung (Sᵢ) und die Schwerpunktlage (C_{GC}) der Antriebseinheit (Du) innerhalb des Tretlagerbereichs (R) liegen.

## Beschreibung

Die vorliegende Offenbarung betrifft eine elektrische Fahrrad-Antriebseinheit nach dem Oberbegriff von Anspruch 1, einen Fahrradrahmen bzw. eine Rahmenschnittstellen-Einheit nach dem Oberbegriff von Anspruch 30 sowie eine Energiespeichereinrichtung nach dem Oberbegriff von Anspruch 34.

In der nachfolgenden Beschreibung verwendete und nicht weiter konkretisierte Orts- bzw. Richtungsangaben wie "links", "rechts", "vorne", "hinten", "oben", "unten", "Seitenansicht" usw. entsprechen einer Fahrerperspektive auf einem Fahrrad.

Geländegängige Fahrräder mit elektrischem Unterstützungsantrieb erfreuen sich zunehmender Beliebtheit. Diese auch als E-Mountainbike oder abgekürzt E-MTB bezeichneten Fahrräder werden in Kategorien wie beispielsweise "Cross-Country", "Trail", "Enduro" und "Downhill" eingeteilt bzw. auch sportlich eingesetzt.

Bei solchen Einsätzen treten hohe Anforderungen an Robustheit, Rahmensteifigkeit und "Handling" des E-MTB auf. Beim Handling des E-MTB ist vor allem die Schwerpunktlage des Fahrrads von Bedeutung. Ein hoher Schwerpunkt des Fahrrads beeinträchtigt die Kurvenlage und erhöht das Risiko von Überschlägen bei starker Bremsverzögerung oder in steilen Abfahrtspassagen.

Von besonderer Bedeutung ist auch die Distanz zwischen dem Fahrrad-Schwerpunkt und der Hinterradachse. Je weiter sich der Schwerpunkt des Fahrrads in Fahrtrichtung vorne befindet, desto höher ist die Gefahr von Überschlägen, und desto schwieriger wird es für den Fahrer, das Vorderrad anzuheben, insbesondere in Fällen ohne Unterstützung eines Antriebsdrehmoments.

Das Anheben des Vorderrades ist eine der wichtigsten Fahrtechniken, die in den unterschiedlichsten Fahrsituationen angewandt wird. Auf diese Weise lassen sich größere Hindernisse und Stufen überwinden, oder mit hoher Geschwindigkeit Bodenwellen überfahren. Im Vergleich zu Fahrrädern bzw. Mountainbikes ohne Unterstützungsantrieb ist diesbezüglich vor allem das Gewicht der Akkus und des Motors von Bedeutung.

Weiterhin ist bei E-Mountainbikes der Abstand zwischen Hinterradachse und Tretlagerwelle im Vergleich zum Mountainbike ohne Zusatzantrieb tendenziell vergrößert, da der Elektromotor auch Bauraum im Bereich der Tretlagerwelle einnimmt, und da somit dort weniger radialer Freiraum für den Hinterradreifen zur Verfügung steht. Bei vollgefederten Fahrrädern wird durch den elektrischen Zusatzantrieb auch der Bauraum für die aus Stabilitätsgründen üblicherweise erforderliche Brücke zwischen den Kettenstreben im Bereich des Tretlagers beeinträchtigt. In Abhängigkeit von der für die Hinterradfederung verwendeten Hinterbaukinematik kann auch ein Bauraumkonflikt mit entsprechenden Drehgelenken der Hinterradfederung entstehen.

Überdies wird die Rahmensteifigkeit sowie das Rahmengewicht bei E-MTBs meist durch offene Unterrohrkonstruktionen kompromittiert, die bei bekannten E-MTBs zur Aufnahme der Antriebsbatterie zumeist erforderlich sind. Insbesondere die Torsionsbelastung durch Pedallasten oder auch Momenteintrag über den Steuersatz können über ein Unterrohr mit intaktem Rohrquerschnitt wesentlich besser aufgenommen werden, da bei einem geschlossenen Rohrquerschnitt das Widerstandsmoment gegen Torsion wesentlich höher als bei einem derartigen U-förmigen Profilquerschnitt ist.

Hieraus folgt auch, dass ein geschlossener Rohrquerschnitt einen besseren Quotienten aus Steifigkeit und Gewicht besitzt als die bekannten offenen Profilquerschnitte. Weiterhin erhöhen Verbindungselemente zur Aufnahme und Befestigung von Antriebsbatterien im oder am Unterrohr die Komplexität und das Gewicht des Fahrradrahmens. Durch die erhebliche Distanz derartiger Antriebsbatterien zur Hinterradachse wird der Schwerpunkt des Fahrrads zum Nachteil des Handlings weiter nach vorne verlagert.

Ausgehend von dem vorstehend beschriebenen Stand der Technik ist es die Aufgabe der vorliegenden Offenbarung, eine Lösung zur Anordnung bzw. Integration des Energiespeichers bzw. Akkus und der Antriebseinheit für ein E-Mountainbike bereitzustellen, mit der sich die oben beschriebenen Nachteile überwinden lassen

Diese Aufgabe wird durch eine elektrische Fahrrad-Antriebseinheit zur Anordnung in einem Tretlagerbereich eines Fahrradrahmens mit den Merkmalen des Patentanspruchs 1, durch einen Fahrradrahmen bzw. eine Rahmenschnittstellen-Einheit für die elektrische Fahrrad-Antriebseinheit mit den Merkmalen des Patentanspruchs 30 und durch eine Energiespeichereinrichtung für die eine elektrische Fahrrad-Antriebseinheit mit den Merkmalen des Patentanspruchs 34 gelöst. Bevorzugte Ausführungsformen sind Gegenstand der Unteransprüche.

Gattungsgemäß umfasst die Antriebseinheit eine elektrische Motoreinrichtung sowie eine Tretlagerbaugruppe mit einer Tretlagerwelle zur Aufnahme der Tretkurbeln des Fahrrads. Je nach Ausführung des Motors umfasst eine gattungsgemäße Antriebseinheit zumeist auch ein üblicherweise zusammen mit dem Motor in einem gemeinsamen Motorgehäuse angeordnetes Untersetzungsgetriebe zur Übertragung des unterstützenden Motormoments auf die Tretlagerwelle, wobei jedoch auch getriebelose Antriebseinheiten zum Direktantrieb der Tretlagerwelle bekannt sind.

Die Antriebseinheit zeichnet sich durch eine integrative Energiespeichereinrichtung zur Energieversorgung der Motoreinrichtung aus. Dabei ist die integrative Energiespeichereinrichtung benachbart zu der Motoreinrichtung anordenbar bzw. angeordnet, und der Massenschwerpunkt der integrativen Energiespeichereinrichtung liegt, nach Montage der Antriebseinheit an dem Fahrradrahmen, in dem Tretlagerbereich.

Dies bedeutet, dass der Energiespeicher mit der Motoreinrichtung und mit der Tretlagerbaugruppe, sowie ggf. zusammen mit dem Untersetzungsgetriebe zwischen Motoreinrichtung und Tretlagerwelle, räumlich zusammengelegt und als somit integrierte Antriebseinheit ausgebildet ist, die nach der Montage der Antriebseinheit im Tretlagerbereich des Fahrrades positioniert ist.

Mit "Tretlagerbereich" ist im Sinne der vorliegenden Offenbarung die unmittelbare räumliche Umgebung des Fahrrad-Tretlagers gemeint, einschließlich der unmittelbaren Endbereiche der an das Tretlager angrenzenden Sattel- und Unterrohre, in Abgrenzung insbesondere zum räumlichen Bereich des gesamten Fahrrad-Unterrohrs bis zum Fahrrad-Steuerkopf, welches beim Stand der Technik üblicherweise die Energiespeichereinrichtung für die elektrische Motoreinrichtung enthält.

Der Begriff "integrative Energiespeichereinrichtung" meint im Sinne der vorliegenden Offenbarung eine Energiespeichereinrichtung, die entweder in das Gehäuse der Motoreinrichtung integriert ist, oder zusammen mit der Motoreinrichtung in einem gemeinsamen Gehäuse angeordnet ist, oder die in einem eigenständigen Gehäuse direkt an einem Gehäuse der Motoreinrichtung anordenbar ist.

Im Unterschied zum eingangs beschriebenen Stand der Technik wird somit die Energiespeichereinrichtung gemäß der vorliegenden Offenbarung in unmittelbarer Nähe zu der Antriebseinheit und damit im Wesentlichen auf horizontaler Höhe der Tretlagerbaugruppe positioniert. Daraus resultiert eine vertikal sehr niedrige Schwerpunktlage der integrierten Antriebseinheit, die lediglich durch die Wahrung der jeweils gewünschten Bodenfreiheit im Bereich des Tretlagers limitiert ist.

Weiterhin wird auch der Abstand des Schwerpunkts der Antriebseinheit bzw. des gesamten Fahrrads zur Hinterradachse auf diese Weise vorteilhaft reduziert.

Da bei einem Fahrradrahmen, abgesehen vom Hinterbau, der breiteste Bereich zumeist die Tretlageraufnahme ist, lässt sich mit der Antriebseinheit gemäß der vorliegenden Offenbarung der in Axialrichtung (bezogen auf die Tretlagerwelle) zur Verfügung stehende Bauraum in diesem Bereich deutlich besser nutzen, als dies im Stand der Technik üblich ist.

Dies bedeutet mit anderen Worten, dass insbesondere die Querschnittsdimensionen des integrativen Energiespeichers (bezogen auf eine Schnittebene parallel zur Achse der Tretlagerwelle) deutlich größer ausfallen können als bei herkömmlichen, im Bereich des Unterrohrs bzw. im Unterrohr angeordneten Energiespeichern.

Dank der integrierten Antriebseinheit gemäß der vorliegenden Offenbarung kann der Fahrradrahmen, anders als beim Stand der Technik mit dem zur Akkuentnahme offenen und häufig einen U-förmigen Querschnitt aufweisenden Unterrohr, mit einem intakten, also geschlossenen Unterrohrquerschnitt realisiert werden, wodurch sich die Biege- und Torsionssteifigkeiten des Unterrohrs und damit des Fahrradrahmens entscheidend vergrößern, bzw. die Masse des Fahrradrahmens entsprechend reduzieren lässt.

Durch die Integration von Motoreinrichtung und Energiespeichereinrichtung lassen sich zudem die ansonsten zur elektrischen Verbindung dieser Baugruppen notwendigen Kabel und insbesondere lösbaren, aufwändigen Steckereinrichtungen reduzieren bzw. einsparen, was zu weiteren Kosten- und Gewichtseinsparungen führt.

Gemäß einer bevorzugten Ausführungsform ist vorgesehen, dass die integrative Energiespeichereinrichtung unmittelbar an einem Gehäuse der Motoreinrichtung angeordnet bzw. anordenbar ist. Bei dieser Ausführungsform kann die integrative Energiespeichereinrichtung ein eigenes Gehäuse oder zumindest Teilgehäuse aufweisen, welches mit einem Gehäuse bzw. Teilgehäuse der Motoreinrichtung verbunden bzw. verbindbar ist.

Diese Verbindung zwischen der integrativen Energiespeichereinrichtung und der Motoreinrichtung kann insbesondere trennbar ausgebildet sein, beispielsweise mit einem Schnellverschluss, wodurch dem Nutzer ermöglicht wird, den integrativen Energiespeicher unabhängig von der Motoreinrichtung zu entnehmen, beispielsweise zum Zweck der Aufladung unabhängig vom Standort des Fahrrads.

Auch lässt sich durch diese Entnahme der integrativen Energiespeichereinrichtung eine Öffnung zum Innenraum des Unterrohrs offenlegen, so dass dieser Bauraum genutzt werden kann, z.B. zur Unterbringung von Werkzeug, kleineren Gepäckstücken oder auch für eine Zusatzbatterie, ohne dass hierdurch der geschlossene Rohrquerschnitt des Unterrohrs beeinträchtigt wird.

Nach einer weiteren bevorzugten Ausführungsform ist die integrative Energiespeichereinrichtung zumindest teilweise von einem Gehäuse der Motoreinrichtung umschlossen bzw. umschließbar. Bei einem Gehäuse der Motoreinrichtung muss es sich dabei nicht um ein geschlossenes Gehäuse handeln, insbesondere nicht in demjenigen Bereich des Gehäuses, welches zur Umschließung der Energiespeichereinrichtung ausgebildet ist. Vielmehr kann zumindest dieser Gehäusebereich auch im wesentlichen skelettartig die Energiespeichereinrichtung umschließend ausgebildet sein. Auf diese Weise wird Gewicht gespart, und die Zugänglichkeit der Batterie wird verbessert, insbesondere zum Zweck des Batteriewechsels und/oder zum Aufladen.

Eine weitere bevorzugte Ausführungsform sieht vor, dass die integrative Energiespeichereinrichtung zusammen mit der Motoreinrichtung in Form einer vollintegrierten Bauweise in einem gemeinsamen Gehäuse angeordnet bzw. anordenbar ist. Bei dieser Ausführungsform lassen sich insbesondere Masse und Kosten durch nicht benötigte Verbindungs- und separate Gehäuseelemente einsparen. Ein etwa erforderlicher Austausch der integrativen Energiespeichereinrichtung erfolgt bei dieser Ausführungsform vorzugsweise durch Fachpersonal nach entsprechender Öffnung des gemeinsamen Gehäuses von Motoreinrichtung und integrativer Energiespeichereinrichtung.

Besonders bevorzugt ist vorgesehen, dass die integrative Energiespeichereinrichtung im betriebsbereiten Zustand ausschließlich an der Motoreinrichtung, oder an einem Gehäuse der Motoreinrichtung, oder an dem gemeinsamen Gehäuse befestigt ist, nicht jedoch an dem Fahrradrahmen. Dies verbessert entscheidend die Handhabung bzw. die Entnahme und das Wiedereinsetzen der Energiespeichereinrichtung. Überdies lassen sich Kosten zur Teilebeschaffung und Montage eines mit der Antriebseinheit gemäß der vorliegenden Offenbarung ausgestatteten Fahrrads deutlich reduzieren, da die beim Stand der Technik üblichen, aufwändigen zusätzlichen Befestigungseinrichtungen für die Batterie am Fahrradrahmen entfallen.

Eine weitere besonders bevorzugte Ausführungsform sieht vor, dass die integrative Energiespeichereinrichtung, nach Montage der Antriebseinheit an einem Fahrradrahmen, zumindest teilweise in einem Unterrohr des Fahrradrahmens angeordnet bzw. anordenbar ist. Auf diese Weise kann die integrative Energiespeichereinrichtung weiter vergrößert werden, insbesondere kann sich ein Teil der integrativen Energiespeichereinrichtung, im Wesentlichen entlang einer Längsachse des Unterrohrs, von unten in das Unterrohr erstrecken. Das Unterrohr kann somit weiterhin einen geschlossenen Rohrquerschnitt aufweisen und dennoch zumindest einen Teil der integrativen Energiespeichereinrichtung, gemäß einer weiteren Ausführungsform auch die gesamte integrative Energiespeichereinrichtung, enthalten.

Nach einer ebenfalls bevorzugten Ausführungsform ist der Antriebseinheit neben der integrativen Energiespeichereinrichtung auch eine Zusatz-Energiespeichereinrichtung zugeordnet. Nach Montage der Antriebseinheit mit der Zusatz-Energiespeichereinrichtung ist dabei die Zusatz-Energiespeichereinrichtung zumindest teilweise, vorzugsweise vollständig, in einem Unterrohr des Fahrradrahmens angeordnet bzw. anordenbar. Mittels der Zusatz-Energiespeichereinrichtung kann der Energievorrat der Antriebseinheit entsprechend vergrößert werden, wozu auch hier wieder Bauraum in dem Unterrohr des Fahrradrahmens genutzt werden kann, ohne dessen geschlossenen Rohrquerschnitt zu beeinträchtigen.

Gemäß einer weiteren bevorzugten Ausführungsform ist die Zusatz-Energiespeichereinrichtung mechanisch direkt mit der Antriebseinheit oder mit der integrativen Energiespeichereinrichtung verbunden bzw. verbindbar. Bei direkter mechanischer Verbindung der Zusatz-Energiespeichereinrichtung mit der integrativen Energiespeichereinrichtung umfasst die mechanische Verbindung vorzugsweise auch eine elektrische Verbindung zwischen den beiden Energiespeichereinrichtungen, die beispielsweise als elektrische Steckverbindung ausgebildet ist.

Bei direkter mechanischer Verbindung oder auch einstückiger Ausführung der Zusatz-Energiespeichereinrichtung mit der integrativen Energiespeichereinrichtung werden die beiden Energiespeichereinrichtungen somit zu einer Energiespeicher-Baugruppe, bzw. zu einer Energiespeichereinrichtung zusammengefasst, welche dann vorzugsweise an einem Gehäuse der Motoreinrichtung fixiert wird. Durch diese Verbindung der Zusatz-Energiespeichereinrichtung mit der integrativen Energiespeichereinrichtung zu einer ggf. einstückigen integrativen Energiespeichereinrichtung kann der Bauraum im Unterrohr für zusätzliche Energiespeicherkapazität genutzt werden, ohne dass zusätzliche Fixierungseinrichtungen bzw. mechanische Schnittstellen zur Befestigung bzw. Fixierung der Zusatz-Energiespeichereinrichtung bzw. der integrativen Energiespeichereinrichtung im Unterrohr benötigt wird.

Bevorzugt ist die integrative Energiespeichereinrichtung in einem montierten Zustand der Antriebseinheit an dem Fahrradrahmen zu einem größeren Teil außerhalb eines Unterrohrs des Fahrradrahmens anordenbar bzw. angeordnet. Ebenfalls vorzugsweise befindet sich die integrative Energiespeichereinrichtung in einer dem montierten Zustand der Antriebseinheit an dem Fahrradrahmen entsprechenden Lage der Antriebseinheit zumindest teilweise unterhalb der Drehachse der Tretlagerwelle. Dies kommt dem gewünschten niedrigen Schwerpunkt des Fahrrads entgegen, und erleichtert sowohl die konstruktive Integration der Antriebseinheit in den Fahrradrahmen als auch die Handhabung der Energiespeichereinrichtung bei Entnahme und beim Wiedereinsetzen.

Im Hinblick auf die gewünschte möglichst niedrige Schwerpunktlage sieht eine weitere bevorzugte Ausführungsform vor, dass sich der Massenschwerpunkt der integrativen Energiespeichereinrichtung, oder der gemeinsame Massenschwerpunkt von integrativer Energiespeichereinrichtung und Zusatz-Energiespeichereinrichtung, oder der Massenschwerpunkt der den integrativen Energiespeicher umfassenden Antriebseinheit, in einer Fahrrad-Seitenansicht innerhalb eines Umkreises von 350 mm, bevorzugt 250 mm, besonders bevorzugt von 200 mm um die Tretlagerwelle befindet. Hierzu wird die integrative Energiespeichereinheit vorzugsweise so angeordnet, dass sich diese im montierten Zustand der Antriebseinheit am Fahrrad zumindest teilweise unterhalb der Tretlagerwelle befindet.

Auf diese Weise wird ein niedriger Massenschwerpunkt des Fahrrads erreicht, welcher, wie eingangs beschrieben, vorteilhaft für das Fahrverhalten ist. Gleichzeitig lässt sich hierdurch auch gewährleisten, dass der Massenschwerpunkt des Fahrrades möglichst weit fahrtrichtungsbezogen nach hinten verlagert ist, was ebenfalls dem Fahrverhalten zugutekommt.

Nach einer bevorzugten Ausführungsform der Antriebseinheit befindet sich ein Massenschwerpunkt der Energiespeichereinrichtung und/oder ein Massenschwerpunkt der Antriebseinheit in einer Seitenansicht von rechts und bezogen auf die Drehachse der Tretlagerwelle innerhalb eines rechts oben liegenden Tretlager-Quadranten mit der Seitenlänge 175 mm, bevorzugt innerhalb eines Tretlager-Quadranten mit der Seitenlänge 125 mm, besonders bevorzugt innerhalb eines Tretlager-Quadranten mit der Seitenlänge 100 mm.

Ebenfalls bevorzugt befindet sich der Batterie-Massenschwerpunkt und/oder der Antriebseinheits-Massenschwerpunkt, bezogen auf die Drehachse der Tretlagerwelle, in einer Höhe von 50 mm, bevorzugt von 30 mm, besonders bevorzugt von 20 mm oberhalb der Drehachse der Tretlagerwelle.

Mit dieser Lage der Schwerpunkte von Batterie und/oder Antriebseinheit lassen sich die in der Beschreibungseinleitung ausgeführten Nachteile bekannter E-Mountainbikes insbesondere bezüglich Handling und Fahrsicherheit maßgeblich verbessern bzw. beheben.

Eine weitere bevorzugte Ausführungsform der Antriebseinheit umfasst ein ausschließlich an dem Gehäuse der Motoreinrichtung oder an dem gemeinsamen Gehäuse der Antriebseinheit befestigtes Antriebsschutzschild, wobei das Antriebsschutzschild gleichzeitig eine bewegliche Verschlussklappe zur Abdeckung und/oder Halterung der integrativen Energiespeichereinrichtung bildet.

Dies ist vorteilhaft, insbesondere da sich hiermit die erheblichen Kräfte, die beispielsweise bei einem Aufsetzen des Fahrrads im Tretlagerbereich auf ein Hindernis auftreten können, direkt vom Antriebsschutzschild auf die Antriebseinheit, und von dieser ggf. in den Fahrradrahmen eingeleitet werden können.

Der Fahrradrahmen wird zudem weiter maßgeblich entlastet dadurch, dass der Fahrer beim Aufsetzen des Fahrrads im Tretlagerbereich auf ein Hindernis häufig in den Pedalen steht. Hierbei können die Stoßkräfte dank einer Befestigung des Antriebsschutzschilds ausschließlich an der Antriebseinheit direkt in die Tretlagerwelle der Antriebseinheit und von dort in die dämpfenden und abfedernden Beine des Fahrers eingeleitet werden, ohne den Rahmen nennenswert zu belasten.

Beim Stand der Technik hingegen sind Antriebsschutzschilde üblicherweise nicht mit dem Antriebsgehäuse, sondern direkt mit dem Fahrradrahmen verbunden. Aus diesem Grund besteht beim Stand der Technik ein erhebliches Risiko, den Fahrradrahmen beispielsweise beim Aufsetzen auf Hindernisse zu beschädigen.

Nach einer besonders bevorzugten Ausführungsform umfasst die Antriebseinheit genau zwei Rahmenschnittstellenanordnungen. Diese definieren wiederum eine vordere und eine hintere Befestigungsachse.

Nachfolgend werden bevorzugte Positionen der Rahmenschnittstellenanordnungen, Antriebseinheits-Schnittstellenanordnungen bzw. Befestigungsachsen relativ zur Antriebseinheit bzw. relativ zur Rahmenschnittstellen-Einheit kurz beschrieben.

Bevorzugt liegen die Rahmenschnittstellen und damit die beiden Befestigungsachsen als Schnittstellen zwischen Antriebseinheit und Hauptrahmen in einem vertikalen Bereich oberhalb einer gedachten Horizontalebene, welche die Drehachse der Tretlagerwelle enthält, sowie unterhalb einer Horizontalebene, welche den Angriffspunkt der Kettenzugkraft am Kettenrad enthält.

Zur Minimierung von durch die Kettenzugkraft erzeugten Drehmomenten und entsprechenden Belastungen bzw. Verformungen von Antriebseinheit oder Hauptrahmen ist dabei der vertikale Abstand zwischen der hinteren Befestigungsachse und dem Angriffspunkt der Kettenzugkraft möglichst klein, vorzugsweise kleiner als 30 mm, besonders bevorzugt kleiner als 21 mm.

Ebenfalls bevorzugt liegen die beiden Befestigungsachsen weiter vorn als eine gedachte Vertikalebene, welche die Drehachse der Tretlagerwelle S_{B} enthält, bevorzugt mehr als 15 mm weiter vorn als die gedachte Vertikalebene.

Dabei liegen die beiden Befestigungsachsen vorzugsweise vor einer gedachten schrägen Ebene, welche die Drehachse der Tretlagerwelle enthält, wobei die schräge Ebene relativ zu einer Horizontalebene um einen Winkel β von 50° nach vorne gekippt ist, mit anderen Worten im Uhrzeigersinn gekippt, bezogen auf eine Ansicht von rechts auf ein Fahrrad.

Ebenfalls bevorzugt liegen, von rechts betrachtet, die beiden Befestigungsachsen innerhalb eines im rechts oben liegenden Tretlager-Quadranten lokalisierten Winkels α von 30° bis 80°, besonders bevorzugt innerhalb eines Winkels α von 50° bis 60°, wobei der Scheitel des Winkels mit der Drehachse der Tretlagerwelle zusammenfällt.

Eine solche Positionierung der beiden Befestigungsachsen wird erst durch das Zusammenwirken einer Mehrzahl von besonderen Merkmalen der Antriebseinheit nach der vorliegenden Offenbarung möglich, darunter insbesondere die Zuordnung nahezu aller Kräfte, Momente und Toleranzen zur hinteren Rahmenschnittstelle und die damit erreichten kurzen Toleranzketten und Kraftübertragungswege sowie hohen Steifigkeiten der Antriebseinheit, die wiederum den Verzicht auf die im Stand der Technik übliche dritte Befestigungsachse weit hinter und teilweise sogar unterhalb der Tretlagerwelle ermöglicht.

Mit einer derartigen Positionierung der der beiden Befestigungsachsen als Schnittstellen zwischen Antriebseinheit und Hauptrahmen lassen sich gegenüber dem Stand der Technik zahlreiche Vorteile erzielen.

Zunächst steht hierdurch wesentlich mehr Bauraum für Baugruppen der Hinterbaufederung wie Schwingenlager und Dämpferanlenkung zur Verfügung, da der Hauptrahmen nicht mehr, wie beim Stand der Technik verhältnismäßig weit bis hinter das Tretlager und dabei teilweise sogar bis unterhalb der Tretlagerhöhe reichen muss, um die elektrische Antriebseinheit dort abzustützen. Hierdurch verringern sich auch Komplexität, Gewicht und Kosten, und der Rahmenhersteller erhält wesentlich mehr Gestaltungsfreiheit in dem funktional sehr wichtigen Bereich direkt hinter dem Tretlager.

Weiterhin verbessern sich gegenüber dem Stand der Technik, bei dem der Rahmen die Antriebseinheit zumindest im Verbindungsbereich mit der Antriebseinheit oftmals zu einem großen Teil umschließt, besteht mit den vorstehend beschriebenen Bauweisen auch die Möglichkeiten zur Kühlung der elektrischen und elektronischen Komponenten der Antriebseinheit. Dies spielt eine zunehmende Rolle bei den aktuell immer weiter abnehmenden Baugrößen dieser Komponenten bei gleichzeitig tendenziell steigenden Motorleistungen.

Bezüglich der seitlichen Positionierung der Rahmenschnittstellen an der Antriebseinheit ist bevorzugt vorgesehen, dass vorzugsweise parallel zu einer Fahrrad-Längsebene verlaufende Schnittstellenebenen zwischen den hinteren Rahmenschnittstellen der Antriebseinheit und den zugehörigen rahmenseitig hinteren Antriebseinheits-Schnittstellen im Hinblick auf optimale Momenten- und Kraftübertragung von der Antriebseinheit auf den Hauptrahmen, und im Hinblick auf hohe Steifigkeit der Antriebseinheit, links und rechts jeweils outboardseitig außerhalb des Hauptrahmens positioniert sind, wodurch sich eine entsprechend vorteilhaft große Abstützbreite ergibt.

In diesem Zusammenhang kann als Quotient aus dieser Abstützbreite und einer Pedalkraft-Wirkungsbreite, welche dem horizontalen Abstand der effektiven Pedalkraft-Angriffspunkte auf die Verbindungsflächen zwischen Tretkurbel und Tretlagerwelle entspricht, ein Abstützungsfaktor gebildet werden. Der Abstützungsfaktor ist größer als 0,5, bevorzugt größer als 0,55 und besonders bevorzugt größer als 0,6.

Alternativ bzw. zusätzlich zu den bevorzugten Werten des Abstützungsfaktors wird die Abstützbreite so gewählt, dass ein als Quotient aus der Abstützbreite und einem Kettenzug-Horizontalabstand zwischen dem Angriffspunkt der Kettenzugkraft am Kettenrad und der rechtsseitigen Schnittstellenebene gebildeter Kettenzugfaktor größer ist als 5, bevorzugt größer als 5,5 und besonders bevorzugt größer als 6.

Auf diese Weise wird eine optimale Übertragung der auf die Antriebseinheit wirkenden Querkräfte, insbesondere der Pedalkräfte, und ebenso der Kettenzugkräfte, auf kürzestem Weg in den Fahrradrahmen gewährleistet. Auch erhalten hierdurch die an dieser Kraftübertragung beteiligten Strukturen der Antriebseinheit und des Hauptrahmens bei geringem Gewicht eine besonders hohe Steifigkeit, was unerwünschten Verwindungen und damit verbundenen Kraftverlusten im Betrieb der Antriebseinheit entgegenwirkt.

Bei Antriebseinheiten aus dem Stand der Technik liegen Werte für den Abstützungsfaktor hingegen zumeist deutlich unter 0,4, und Werte für den Kettenzugfaktor zumeist deutlich unter 3.

Die Werte für den Abstützungsfaktor bzw. für den Kettenzugfaktor werden insbesondere dadurch möglich, dass die Antriebseinheit gemäß der vorliegenden Offenbarung den Fahrradrahmen im Tretlagerbereich, bzw. die dort angeordnete Rahmenschnittstellen-Einheit außen umgreift. Beim Stand der Technik ist es zumeist umgekehrt, mit anderen Worten, der (für sich genommen oftmals schon relativ schmale) Fahrradrahmen umgreift zumindest in den Bereichen der Rahmenschnittstellen bzw. Befestigungsachsen die Antriebseinheit, wodurch insbesondere die Abstützbreiten erheblich schmäler ausfallen als diese gemäß der vorliegenden Offenbarung erzielt werden können.

Damit ergeben sich beim Stand der Technik hohe Biegemomente durch die Wirkung der Pedalkräfte und der Kettenzugkräfte, die entweder zu entsprechend großen Verformungen der Antriebseinheit bzw. des Fahrradrahmens im Tretlagerbereich führen, oder mit großen Wandstärken in diesen Bereichen aufgefangen und kompensiert werden müssen, was zu entsprechend hohen Gewichten von Antriebseinheit und/oder Rahmen führt.

Weiterhin bevorzugt sind über die hintere Rahmenschnittstellenanordnung sämtliche Bewegungsfreiheitsgrade der Antriebseinheit gegenüber dem Fahrradrahmen bzw. gegenüber einer Rahmenschnittstellen-Einheit, außer einem Rotationsfreiheitsgrad um eine zur Drehachse der Tretlagerwelle parallele Rotationsachse, festgelegt bzw. festlegbar. Im Sinne der vorliegenden Offenbarung soll dies auch umfassen, dass über die hintere Rahmenschnittstellenanordnung sämtliche Kräfte und Drehmomente zwischen der Antriebseinheit und dem Fahrradrahmen bzw. der Rahmenschnittstellen-Einheit übertragbar sind, mit der Ausnahme von Drehmomenten, die um eine Drehachse bzw. Befestigungsachse der hinteren Rahmenschnittstellenanordnung wirken. Der verbleibende Rotationsfreiheitsgrad gegenüber dem Fahrradrahmen bzw. gegenüber der Rahmenschnittstellen-Einheit ist dabei mittels der vorderen Rahmenschnittstellenanordnung festgelegt bzw. festlegbar.

Ebenfalls vorzugsweise umfasst die die hintere Rahmenschnittstellenanordnung der Antriebseinheit einen Rahmen-Ausgleichsadapter zum Ausgleich von Breitentoleranzen des Fahrradrahmens bzw. der Rahmenschnittstellen-Einheit. Der Rahmen-Ausgleichsadapter umfasst zur radialen Fixierung der hinteren Rahmenschnittstellenanordnung relativ zum Fahrradrahmen bzw. relativ zur Rahmenschnittstellen-Einheit, sowie zum stufenlos spielfrei einstellbaren Axial-Toleranzausgleich zwischen hinterer Rahmenschnittstellenanordnung und Fahrradrahmen bzw. Rahmenschnittstellen-Einheit eine in eine Aufnahmebohrung des Antriebsgehäuses axial verstellbar einschraubbare Stufenhülse, oder eine in eine Aufnahmebohrung des Antriebsgehäuses axial verschiebbar aufnehmbare Radialklemmeinrichtung.

Dieser Toleranzausgleich ist von erheblicher Bedeutung, da die Antriebseinheit in der Praxis des Fahrradmarkts mit verschiedensten Fahrradrahmen bzw. mit ggf. unterschiedlichen Rahmenschnittstellen-Einheiten kombiniert werden kann, wobei die Fahrradrahmen, oder ggf. die Rahmenschnittstellen-Einheiten, von verschiedensten Herstellern stammen bzw. zugeliefert sein können.

Hierdurch ergeben sich erfahrungsgemäß, je nach Ursprung bzw. Hersteller des Fahrradrahmens oder der Rahmenschnittstellen-Einheit, unterschiedlichste Toleranzsituationen in Bezug auf die Abstützbreite. Derartige unterschiedliche Toleranzsituationen lassen sich mit dem Ausgleichsadapter einfach und stufenlos kompensieren.

Weiterhin bevorzugt umfasst die Antriebseinheit ein in einem Raumbereich zwischen Motoreinrichtung und Energiespeichereinrichtung angeordnetes, hermetisch geschlossenes Controllergehäuse zur Aufnahme einer Controllereinrichtung für die Steuerung von Motoreinrichtung und/oder Energiespeichereinrichtung.

Das Controllergehäuse kann eine für sich genommen im Stand der Technik bekannte Steckereinrichtung zur Verbindung von Controllereinrichtung und Energiespeichereinrichtung aufweisen.

Besonders bevorzugt umfasst das Controllergehäuse jedoch eine steckerlose Stromschnittstelle für die Verbindung von Controllereinrichtung und Energiespeichereinrichtung. Die steckerlose Stromschnittstelle weist Schnittstellenebenen auf, die parallel zu einer Entnahmerichtung der Energiespeichereinrichtung angeordnet sind. Auf diese Weise kann die Stromschnittstelle durch Entnahme der Batterie automatisch geöffnet und durch Einsetzen und/oder Befestigen der Batterie automatisch verbunden werden.

Um genügenden Bauraum für möglichst große Energiespeicher bereitzustellen, wird für die Antriebseinheit vorzugsweise eine Motoreinrichtung mit kompakter Bauart eingesetzt. Besonders vorteilhaft sind diesbezüglich sog. konzentrische bzw. koaxiale Antriebseinheiten, bei denen die Motoreinrichtung und das zumeist benötigte Untersetzungsgetriebe, bzw. deren jeweilige Abtriebswellen, koaxial zur Tretlagerwelle bzw. konzentrisch zur Tretlagerwelle angeordnet sind.

Alternativ kann die Motoreinrichtung der Antriebseinheit auch eine Abtriebswelle aufweisen, welche achsparallel oder auch winklig bzw. rechtwinklig zur Tretlagerwelle ausgerichtet ist. Insbesondere Motoreinrichtungen mit achsparallel zur Tretlagerwelle ausgerichteten Abtriebswellen sind weit verbreitet und kostengünstig. In diesem Fall ist es vorteilhaft, die Motoreinrichtung so anzuordnen, dass der für die integrative Energiespeichereinheit oder für die integrative Energiespeicher-Baugruppe vorgesehene Bauraum nicht mit dem für die Motoreinrichtung vorgesehenen Bauraum der Antriebseinheit überlappt.

Hierzu wird die Motoreinrichtung vorzugsweise so angeordnet, dass sich der Bereich maximaler radialer Ausdehnung der Motoreinrichtung vertikal oberhalb der Tretlagerbaugruppe bzw. Tretlagerwelle, und damit außerhalb des gemäß der vorliegenden Offenbarung bevorzugten Bauraumbereichs für den integrativen Energiespeicher angeordnet ist. Bei derartiger im Wesentlichen vertikaler Ausrichtung der Motoreinrichtung erstreckt sich das Gehäuse der Motoreinrichtung in einen Bereich, in dem bei gefederten Fahrradrahmen üblicherweise ein Hauptdrehlager für die Hinterbaufederung angeordnet ist.

Mit diesem Hintergrund sieht eine weitere bevorzugte Ausführungsform vor, dass das Gehäuse der Motoreinrichtung oder das gemeinsame Gehäuse von Motoreinrichtung und integrativer Energiespeichereinrichtung gleichzeitig eine Schnittstelle bzw. Lageraufnahme für ein Hauptdrehlager bzw. für eine Schwinge der Hinterbaufederung eines gefederten Hinterbaurahmens aufweist bzw. bildet.

Hierdurch ergibt sich vorteilhaft eine weitere Funktionsintegration bei gleichzeitiger Gewichtsreduktion und Einsparung von Bauraum und Kosten. Zudem wird auf diese Weise die wünschenswert hohe Seitensteifigkeit der Hinterbaufederung verbessert.

Nach einer weiteren bevorzugten Ausführungsform enthält die Energiespeichereinrichtung und/oder die Zusatz-Energiespeichereinrichtung im Wesentlichen prismatisch geformte Energiespeicherzellen, wobei die Definition von "prismatisch" insbesondere auch zylindrische Formen umfasst. Die Energiespeicherzellen sind dabei so angeordnet, dass die Längsachsen eines überwiegenden Teils der Energiespeicherzellen im Wesentlichen achsparallel zur Tretlagerwelle verlaufen, wobei die Längsachsen des übrigen Teils der Energiespeicherzellen im Wesentlichen parallel zu einer zur Tretlagerwelle senkrechten Richtung verlaufen.

Vorzugsweise beläuft sich dabei das Verhältnis der Zahl der im Wesentlichen achsparallel zur Tretlagerwelle angeordneten Energiespeicherzellen zu der Zahl der im Wesentlichen parallel zu einer zur Tretlagerwelle senkrechten Richtung angeordneten Energiespeicherzellen auf einen Wert zwischen 3 bis 5 zu 1.

Mit einer solchen überwiegend zur Tretlagerwelle parallelen Lage der Energiespeicherzellen wird eine Zellpackungskonfiguration erreicht, welche eine optimale Ausnutzung des im Tretlagerbereich verfügbaren Volumens erlaubt.

Alternativ können auch sämtliche Energiespeicherzellen der integrativen Energiespeichereinrichtung und/oder der Zusatz-Energiespeichereinrichtung im Wesentlichen parallel zu einer oder mehreren zur Tretlagerwelle senkrechten Richtungen angeordnet werden, wodurch sich zumeist eine entsprechend geringere Packungsdichte der Energiespeicherzellen ergibt.

Die Ausrichtung der Polarität der Energiespeicherzellen kann dabei nach Bedarf gewählt werden, indem die positiven bzw. negativen Polseiten der Energiespeicherzellen vorzugsweise abwechselnd nach links/rechts bzw. vorne/hinten bzw. oben/unten zeigen.

Die vorliegende Offenbarung betrifft ferner einen Fahrradrahmen bzw. eine Rahmenschnittstellen-Einheit. Der Fahrradrahmen bzw. die Rahmenschnittstellen-Einheit weist eine hintere Antriebseinheits-Schnittstellenanordnung sowie eine vordere Antriebseinheits-Schnittstellenanordnung zur Verbindung mit einer Antriebseinheit auf wie vorstehend beschrieben.

Der Fahrradrahmen bzw. die Rahmenschnittstellen-Einheit besitzt damit genau zwei Antriebseinheits-Schnittstellenanordnungen, welche eine vordere und eine hintere Befestigungsachse zur Befestigung der Antriebseinheit definieren. Über die hintere Rahmenschnittstellenanordnung lassen sich sämtliche Bewegungsfreiheitsgrade der Antriebseinheit gegenüber dem Fahrradrahmen bzw. gegenüber der Rahmenschnittstellen-Einheit festlegen, außer dem verbleibenden Freiheitsgrad der Rotation um die hintere Befestigungsachse. Die vordere Rahmenschnittstellenanordnung ist als Drehmomentstütze zur Festlegung des verbleibenden Rotationsfreiheitsgrads ausgebildet.

Dies bedeutet mit anderen Worten, dass die hintere Rahmenschnittstellenanordnung sämtliche Kräfte und Drehmomente von und zur Antriebseinheit überträgt, außer Drehmomenten um die hintere Befestigungsachse als Rotationsachse. Dies ermöglicht, anders als beim Stand der Technik, insbesondere eine eindeutige Festlegung aller Lastpfade, und eine eindeutige Zuordnung aller wesentlichen Toleranzen zur hinteren Rahmenschnittstelle, während die vordere Rahmenschnittstelle als Drehmomentausleger lediglich vergleichsweise geringe Kräfte übertragen muss und nur sehr geringen Anforderungen hinsichtlich Genauigkeit und Toleranzen unterliegt.

Die genau zwei Befestigungsachsen des Fahrradrahmens bzw. der Rahmenschnittstellen-Einheit sind dabei vorzugsweise analog zur Anordnung der Befestigungsachsen bei der Antriebseinheit angeordnet wie obenstehend hinsichtlich der Antriebseinheit beschrieben. Ebenso vorzugsweise liegen Abstützungsfaktor und Kettenzugfaktor in gleichen Größen vor wie weiter oben bei der Antriebseinheit angegeben.

Vorzugsweise umfasst der Fahrradrahmen bzw. die Rahmenschnittstellen-Einheit Lageraufnahmen für eine Schwinge eines gefederten Hinterbaurahmens. Insbesondere im Fall der Rahmenschnittstellen-Einheit ermöglicht dies eine besonders kompakte und gewichtsreduzierte Ausbildung eines gefederten Hinterbaurahmens bei gleichzeitig reduziertem Kostenaufwand gegenüber dem Stand der Technik.

Die vorliegende Offenbarung betrifft ferner eine Energiespeichereinrichtung für eine Antriebseinheit wie vorstehend beschrieben. Die Energiespeichereinrichtung weist vorzugsweise diejenigen Merkmale auf, die bereits weiter oben bei der Beschreibung der Antriebseinheit genannt, und die in der nachfolgenden Figurenbeschreibung ausführlich dargestellt sind.

Nachstehend werden bevorzugte Ausführungsformen des Gegenstands der vorliegenden Offenbarung anhand der Figuren beispielhaft beschrieben.

Es zeigt:
- Fig. 1:: ein E-Mountainbike nach dem Stand der Technik in einer antriebsseitigen Seitenansicht;
- Fig. 2:: in einer Fig. 1 entsprechenden Ansicht und in schematisierter Darstellung ein E-Mountainbike mit einer Ausführungsform ein Antriebseinheit nach der vorliegenden Offenbarung, bei der die integrative Energiespeichereinrichtung unmittelbar an der Motoreinrichtung montiert ist;
- Fig. 3:: das E-Mountainbike gemäß Fig. 2 in Seitenansicht von der Nicht-Antriebsseite;
- Fig. 4:: in einer Fig. 2 entsprechenden Ansicht und Darstellung ein E-Mountainbike gemäß Fig. 2 und 3 mit einer Zusatz-Energiespeichereinrichtung;
- Fig. 5:: das E-Mountainbike gemäß Fig. 4 in Seitenansicht von der Nicht-Antriebsseite;
- Fig. 6:: in einer Fig. 2 entsprechenden Ansicht und Darstellung ein E-Mountainbike mit einer Ausführungsform der Antriebseinheit, bei der integrative Energiespeichereinrichtung und Motoreinrichtung in einem gemeinsamen Gehäuse vollintegriert sind;
- Fig. 7:: das E-Mountainbike gemäß Fig. 6 in Seitenansicht von der Nicht-Antriebsseite;
- Fig. 8:: in einer Fig. 2 entsprechenden Ansicht und Darstellung ein E-Mountainbike mit einer Ausführungsform der Antriebseinheit ähnlich Fig. 2, bei der sich die integrative Energiespeichereinrichtung bzw. die Zusatz-Energiespeichereinrichtung in das Unterrohr erstreckt;
- Fig. 9:: das E-Mountainbike gemäß Fig. 8 in Seitenansicht von der Nicht-Antriebsseite;
- Fig. 10:: in einer Fig. 2 entsprechenden Ansicht und Darstellung ein E-Mountainbike mit einer Ausführungsform der Antriebseinheit ähnlich Fig. 2 und 3, bei der die Motoreinrichtung einschließlich Untersetzungsgetriebe koaxial zur Tretlagerwelle ausgebildet und angeordnet ist;
- Fig. 11:: das E-Mountainbike gemäß Fig. 10 in Seitenansicht von der Nicht-Antriebsseite;
- Fig. 12:: in einer Fig. 2 entsprechenden Ansicht und Darstellung das E-Mountainbike gemäß Fig. 10 und 11 mit einer eingezeichneten Schwerpunktlage;
- Fig. 13:: das E-Mountainbike gemäß Fig. 12 in Seitenansicht von der Nicht-Antriebsseite;
- Fig. 14:: in einer Fig. 2 entsprechenden Ansicht und Darstellung ein E-Mountainbike mit einer Ausführungsform der Antriebseinheit ähnlich Fig. 4 und 5 mit zusätzlich integrierter Schwingenlagerung für eine Hinterbaufederung;
- Fig. 15:: das E-Mountainbike gemäß Fig. 14 in Seitenansicht von der Nicht-Antriebsseite; und
- Fig. 16:: die Antriebseinheit des E-Mountainbikes gemäß Fig. 14 und 15 in einer schematischen isometrischen Darstellung.
- Fig. 17:: einen schematischen Umriss eines E-Mountainbikes mit einem darin eingebauten ersten Ausführungsbeispiel einer Antriebseinheit mit integrativer bzw. integrierter Energiespeichereinrichtung;
- Fig. 18:: die Antriebseinheit gemäß Fig. 17 in einer Seitenansicht von der Antriebsseite;
- Fig. 19:: die Antriebseinheit gemäß Fig. 17 und 18 in einer Seitenansicht von der Nicht-Antriebsseite;
- Fig. 20:: die Antriebseinheit gemäß Fig. 17 bis 19 in einer hinteren Schrägansicht von der Nicht-Antriebsseite;
- Fig. 21:: die Antriebseinheit gemäß Fig. 17 bis 20 in einer vorderen Schrägansicht von der Nicht-Antriebsseite;
- Fig. 22:: die Antriebseinheit gemäß Fig. 17 bis 21 in einer Explosionsdarstellung;
- Fig. 23:: die Antriebseinheit gemäß Fig. 17 bis 22 in einer Querschnittsdarstellung sowie den zugehörigen Schnittverlauf;
- Fig. 24:: die Antriebseinheit gemäß Fig. 17 bis 23 in Querschnittsdarstellung gemäß Fig. 23 mit zur Batterieentnahme geöffnetem Antriebsschutzschild sowie den zugehörigen Schnittverlauf;
- Fig. 25:: die Antriebseinheit gemäß Fig. 17 bis 24 in einer Schrägansicht von der Nicht-Antriebsseite mit geöffnetem Antriebsschutzschild bei der Batterieentnahme, wobei der Öffnungswinkel des Antriebsschutzschilds zur besseren Erkennbarkeit der Einzelteile gegenüber dem bei bevorzugten Ausführungsformen tatsächlich realisierten Öffnungswinkel darstellungshalber vergrößert ist;
- Fig. 26:: die Antriebseinheit gemäß Fig. 17 bis 25 in einer Längsschnittdarstellung durch die Rahmenschnittstellen, sowie den zugehörigen Schnittverlauf;
- Fig. 27:: die Antriebseinheit gemäß Fig. 17 bis 26 in einer Längsschnittdarstellung durch Tretlagerwelle und hintere Rahmenschnittstellenanordnung sowie den zugehörigen Schnittverlauf;
- Fig. 28:: das Motor-/Getriebegehäuse der Antriebseinheit gemäß Fig. 17 bis 27 in einer Explosionsdarstellung;
- Fig. 29A/B:: Teile des Antriebsgehäuses sowie die Batterie der Antriebseinheit nach dem ersten Ausführungsbeispiel gemäß Fig. 17 bis 26;
- Fig. 29C/D:: ein zweites Ausführungsbeispiel für eine Antriebseinheit;
- Fig. 30:: die Antriebseinheit nach dem zweiten Ausführungsbeispiel gemäß Fig. 29C und 29D mit geöffnetem Antriebsschutzschild und ausgeschwenkter Batterie;
- Fig. 31:: die Antriebseinheit nach dem zweiten Ausführungsbeispiel gemäß Fig. 29C bis 30 ohne Batterie und in einer teilweisen Explosionsdarstellung;
- Fig. 32A-C:: eine Stromschnittstelle zur Stromübertragung zwischen Batterie und Motorcontroller bei der Antriebseinheit nach dem zweiten Ausführungsbeispiel gemäß Fig. 29C bis 31;
- Fig. 33A-C:: einen Rahmen-Ausgleichsadapter zum Ausgleich unterschiedlicher Toleranzen zwischen Antriebseinheit und Fahrradrahmen bzw. zwischen Antriebseinheit und Rahmenschnittstellen-Einheit bei der Antriebseinheit nach dem zweiten Ausführungsbeispiel gemäß Fig. 29C bis 32C; und
- Fig. 34:: die Antriebseinheit nach dem zweiten Ausführungsbeispiel gemäß Fig. 29C bis 33C einschließlich der Energiespeichereinrichtung.

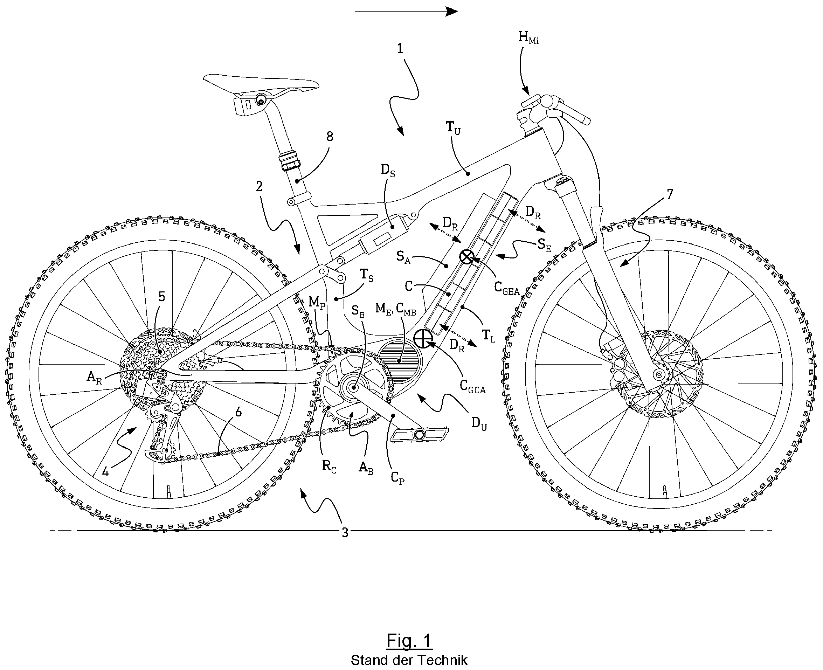

Fig. 1 zeigt ein Mountainbike mit elektrischem Zusatzantrieb gemäß dem Stand der Technik. Das Mountainbike besitzt einen Hauptrahmen 1 mit einem gefederten Hinterbau 2. Der Antriebsstrang 3 des Mountainbikes umfasst ein Kettenrad R_{C}, ein hinteres Schaltwerk 4, eine Mehrfach-Ritzelkassette 5 sowie eine Antriebskette 6. Weiterhin ist das Mountainbike mit einer den Fahrer unterstützenden elektrischen Antriebseinheit Du ausgestattet, welche eine elektrische Motoreinrichtung M_{E} aufweist, die als Mittelmotor ausgebildet ist, also im Bereich der Tretlagerbaugruppe A_{B} angeordnet ist.

Der Antriebseinheit Du ist eine Energiespeichereinrichtung S_{E} sowie eine Zusatz-Energiespeichereinrichtung S_{A} zugeordnet. Zur Steuerung von Motor M_{E} und/oder Batterie S_{E}, S_{A} umfasst die Antriebseinheit D_{U} einen Controller C_{MB}.

Die Energiespeichereinrichtung S_{E} ist im Inneren des Unterrohrs T_{L} des Hauptrahmens 1 angeordnet, und lässt sich auf das Unterrohr T_{L} bezogen im Wesentlichen radial in Entnahmerichtung D_{R} aus dem Unterrohr T_{L} entnehmen sowie in umgekehrter Richtung wieder einsetzen. Hierzu ist es erforderlich, dass das Unterrohr T_{L} einen nach vorne unten offenen, insbesondere U-förmigen Rohrquerschnitt aufweist, mit den in der Beschreibungseinleitung beschriebenen Nachteilen insbesondere hinsichtlich verringerter Steifigkeit bzw. Gewichtserhöhung.

Auch ist eine vergleichsweise aufwändige Abdichtung des Unterrohrs T_{L} gegenüber eindringendem Schmutz bzw. Wasser, sowie eine ebenfalls aufwändige elektrische Anbindung mit Verkabelung und lösbaren Steckvorrichtungen, sowie eine mechanische Verriegelungseinrichtung für die Energiespeichereinrichtung S_{E} erforderlich.

Die Zusatz-Energiespeichereinrichtung S_{A} ist auf das Fahrrad bezogen oben auf dem Unterrohr T_{L} angeordnet und besitzt eine ebenfalls im Wesentlichen radial zum Unterrohr T_{L} verlaufende Entnahmerichtung D_{R}. Auch für die Zusatz-Energiespeichereinrichtung S_{A} ist eine weitere Steckerverbindung mit entsprechender Verkabelung sowie eine mechanische Verriegelungseinrichtung zum Unterrohr T_{L} des Hauptrahmens 1 erforderlich.

Aufgrund der Positionierung der Motoreinrichtung M_{E} sowie der Energiespeichereinrichtungen S_{E}, S_{A} vor bzw. weit vor dem Tretlager A_{B}, welche die in Fig. 1 eingezeichnete Schwerpunktlage C_{GEA} von Energiespeichereinrichtung S_{E} + S_{A}, bzw. die gemeinsame Schwerpunktlage C_{GCA} von Antriebseinheit Du und Energiespeichereinrichtung S_{E}, S_{A} mit sich bringt, wird deutlich, dass sich der Schwerpunkt des Fahrrads durch diese eine erhebliche Masse aufweisenden Baugruppen weit nach oben und nach vorne verlagert, mit den in der Beschreibungseinleitung ausgeführten Nachteilen insbesondere bezüglich Handling und Fahrsicherheit.

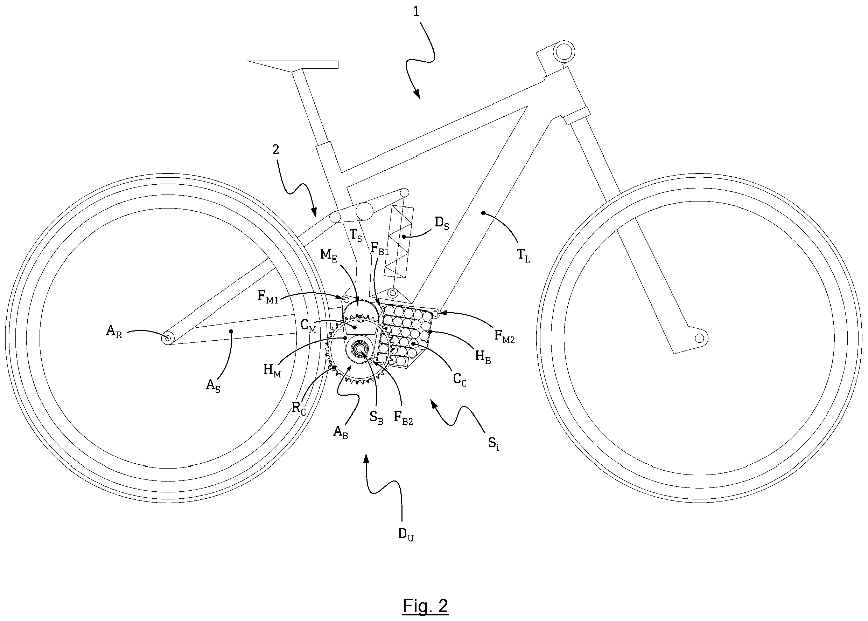

Fig. 2 zeigt in schematisierter Darstellung die wesentlichen Baugruppen und Komponenten eines E-Mountainbikes, welches mit einer Ausführungsform der Antriebseinheit Du gemäß der vorliegenden Offenbarung ausgestattet ist.

Der Einfachheit und besseren Deutlichkeit halber sind in Fig. 2 bis 15 außer der schematisierten Darstellung der meisten Komponenten auch die meisten Teile des Antriebsstrangs 3 gemäß Fig. 1 ebenso wie die vor einer Längsmittelebene des Fahrrads liegenden Teile der Radaufhängung nicht dargestellt. Weiterhin ist das Kettenrad Rc teilweise transparent gezeichnet, um die dahinter befindlichen Komponenten erkennen zu können.

Man erkennt, dass die Motoreinrichtung M_{E} bauraumsparend oberhalb der Tretlagerbaugruppe A_{B} bzw. Tretlagerwelle S_{B} angeordnet ist. Hierdurch wird vor und schräg oberhalb der Tretlagerbaugruppe A_{B} Bauraum frei, welcher hier für die integrative Energiespeichereinrichtung Si genutzt wird. Die integrative Energiespeichereinrichtung Si besitzt bei dieser Ausführungsform ein eigenes Gehäuse H_{B}. Das Gehäuse H_{B} der integrativen Energiespeichereinrichtung Si ist bei der dargestellten Ausführungsform mittels einer Hakeneinrichtung F_{B1} an dem die Motoreinrichtung M_{E} mit Motorcontroller C_{M}, Getriebe sowie Tretlagerbaugruppe A_{B} enthaltenden Gehäuse H_{M} eingehängt und zusätzlich mittels einer lösbaren Verbindung F_{B2} mit dem Motorgehäuse H_{M} verbunden, beispielsweise verschraubt. Das Motorgehäuse H_{M}, und damit auch das an dem Motorgehäuse H_{M} befestigte Akkugehäuse H_{B} ist vorliegend an zwei Rahmenschnittstellen bzw. Befestigungsachsen F_{M1} und F_{M2} mit dem Hauptrahmen 1 verbindbar bzw. verbunden. Bei dem Motorcontroller C_{M} kann es sich auch um einen kombinierten Controller C_{MB} für Motor und/oder Batterie handeln. Vorzugsweise besitzen jedoch Motor und Batterie getrennte Controller C_{M} und C_{B}, wobei der Batteriecontroller C_{B} insbesondere Steuerung und Kontrolle der Batterie-Ladevorgänge übernimmt.

Die integrative Energiespeichereinrichtung bzw. der integrierte Akku Si ist aus im Wesentlichen prismatischen, hier zylindrischen Energiespeicherzellen C aufgebaut, von denen zumindest ein Großteil Cc achsparallel zur Tretlagerwelle S_{B} angeordnet ist.

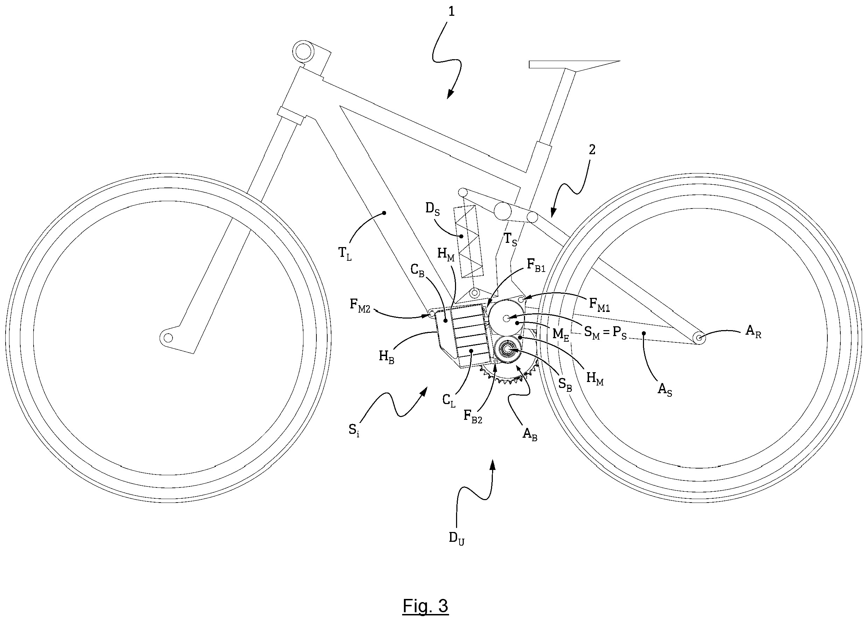

In Fig. 3 wird erkennbar, dass bei dieser Ausführungsform ein kleinerer Teil C_{L} der Energiespeicherzellen C parallel zu einer senkrecht zur Tretlagerwelle S_{B} verlaufenden Richtung angeordnet ist. Zusammen mit der achsparallelen Anordnung des größeren Teils Cc der Energiespeicherzellen C gemäß Fig. 2 ergibt sich so eine hohe Packungsdichte der Energiespeicherzellen C und gleichzeitig eine optimale Ausnutzung der gesamten im Tretlagerbereich zur Verfügung stehenden erheblichen Bauraumbreite.

Außer den oben mit Bezug auf Fig. 2 beschriebenen Baugruppen ist in Fig. 3 insbesondere die Anordnung des Batteriecontrollers C_{B} ersichtlich, welcher denjenigen Teil im Gehäuse H_{B} der integrativen Energiespeichereinrichtung Si einnimmt, welcher weder von den achsparallel angeordneten Batteriezellen Cc noch von den senkrecht hierzu bzw. longitudinal angeordneten Batteriezellen C_{L} eingenommen wird. Auf diese Weise wird der im Tretlagerbereich für die integrative Energiespeichereinrichtung Si zur Verfügung stehende Bauraum optimal ausgenutzt.

Weiterhin ist aus Fig. 3 in Zusammenschau mit Fig. 2 ersichtlich, dass bei dieser Ausführungsform die Schwenkachse der Schwinge As des gefederten Hinterbaus 2 mit der Drehachse der Abtriebswelle S_{M} des Motors M_{E} zusammenfällt. Dies kann dazu genutzt werden, die Schnittstelle zur Hinterbauschwinge As, bzw. die Schwenklagerung Ps der Hinterbauschwinge As zusammen mit rotierenden Bauteilen der Antriebseinheit, beispielsweise zusammen mit einem Rotor und/oder mit einer Abtriebswelle S_{M} oder einem Abtriebszahnrad der Motoreinrichtung M_{E} auf derselben Welle anzuordnen, wodurch sich eine besonders kompakte und verwindungssteife Einheit aus der Antriebseinheit und der Schwenklagerung Ps der Hinterbauschwinge As ergibt.

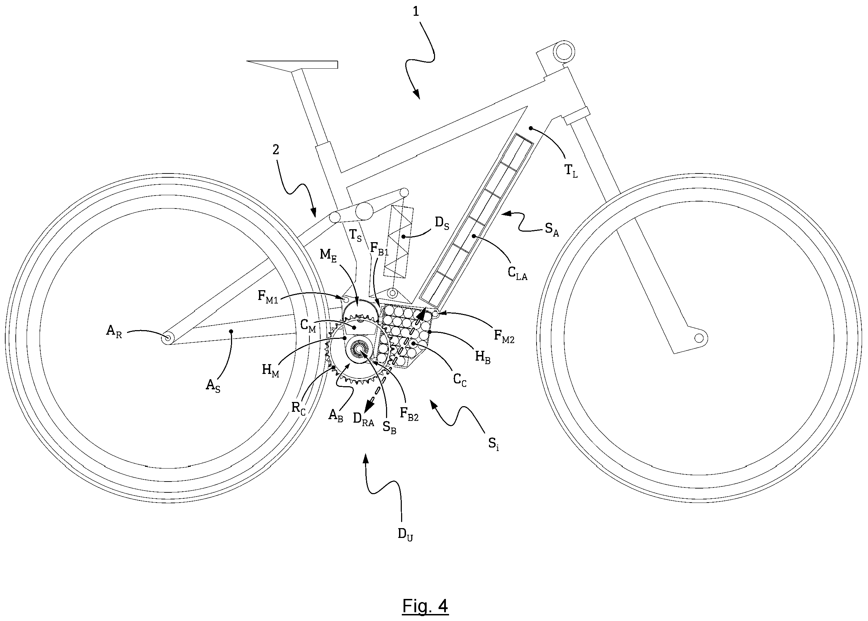

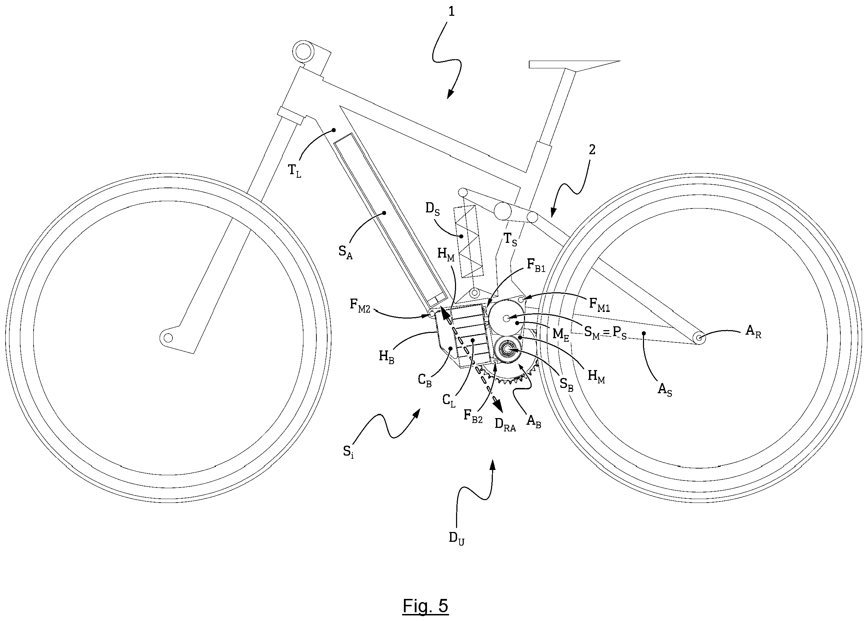

Das in Fig. 4 und 5 dargestellte E-Mountainbike bzw. dessen Antriebseinheit D_{U} stimmt mit dem E-Mountainbike sowie dessen Antriebseinheit D_{U} gemäß Fig. 2 und 3 überein, mit dem Unterschied, dass das E-Mountainbike gemäß Fig. 4 und 5 neben der integrativen Energiespeichereinrichtung Si auch eine Zusatz-Energiespeichereinrichtung S_{A} mit Energiespeicherzellen C_{LA} aufweist. Die Zusatz-Energiespeichereinrichtung S_{A} ist ähnlich wie beim Stand der Technik gemäß Fig. 1 im Inneren des Unterrohrs T_{L} angeordnet.

Aufgrund der bei der Antriebseinheit Du gemäß Fig. 4 und 5 vertikal oberhalb der Tretlagerbaugruppe A_{B} angeordneten Motoreinrichtung M_{E} ergibt sich jedoch die Möglichkeit, die Zusatzbatterie S_{A} in einer koaxial zum Unterrohr T_{L} verlaufenden Entnahmerichtung D_{RA} zu entnehmen bzw. wieder einzusetzen. Hierzu ist lediglich zuvor die integrative Energiespeichereinrichtung Si oder die Antriebseinheit Du zusammen mit der integrativen Energiespeichereinrichtung Si aus dem Tretlagerbereich zu entnehmen bzw. zu entfernen.

Auf diese Weise kann der geschlossene Rohrquerschnitt des Unterrohrs T_{L} beibehalten werden, was der Steifigkeit und dem wünschenswert geringen Gewicht des Rahmens 1 zugutekommt.

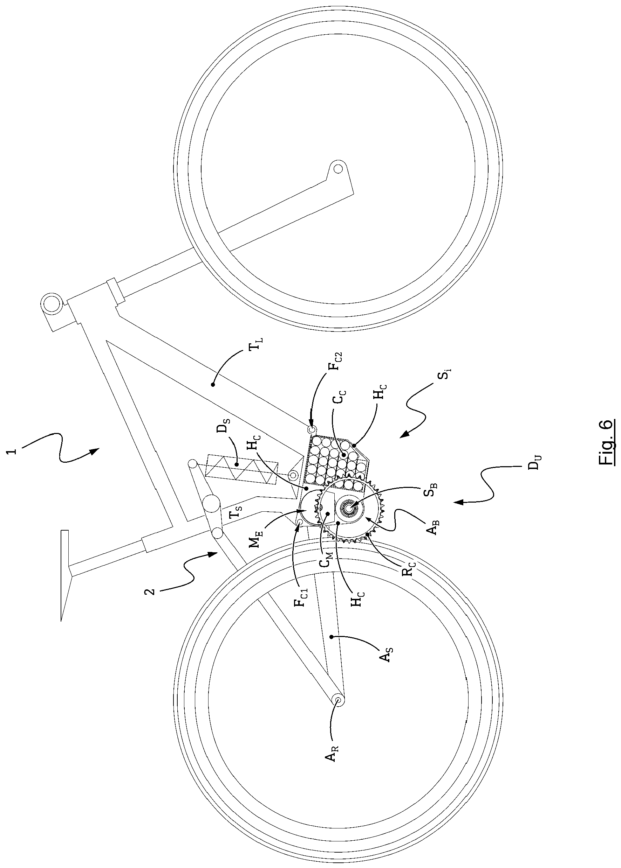

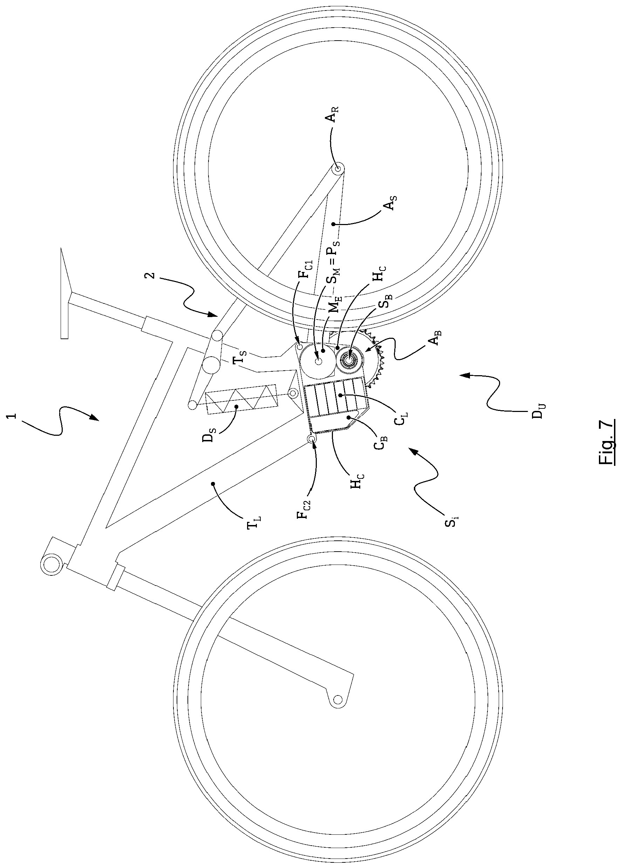

Das E-Mountainbike bzw. die Antriebseinheit Du gemäß Fig. 6 und 7 stimmt in wesentlichen Teilen mit dem E-Mountainbike bzw. der Antriebseinheit Du gemäß Fig. 2 und 3 überein, mit dem Unterschied, dass bei der Antriebseinheit Du gemäß Fig. 6 und 7 Motoreinrichtung M_{E}, Getriebe, integrative Energiespeichereinrichtung Si sowie Motorcontroller C_{M}, Batteriecontroller C_{B} und Tretlagerbaugruppe A_{B} in einem einzigen gemeinsamen Gehäuse Hc angeordnet sind. Das gemeinsame Gehäuse Hc und damit die gesamte Antriebseinheit Du ist, ähnlich wie bei der Ausführungsform gemäß Fig. 2 und 3, vermittels zweier Befestigungsachsen F_{C1} und F_{C2} mit dem Hauptrahmen 1 verbindbar bzw. verbunden.

Bei den in der vorliegenden Offenbarung teilweise als "Befestigungsachsen" bezeichneten Schnittstellen zwischen einer Antriebseinheit Du und einem Fahrradhauptrahmen 1 muss es sich nicht zwangsläufig um achsenförmige Befestigungen bzw. Schnittstellen handeln. Vielmehr soll der Begriff "Befestigungsachsen" in der vorliegenden Offenbarung generell voneinander entlang einer Längsachse und/oder entlang einer Hochachse des Fahrrads beabstandete Verbindungsstrukturen bzw. Befestigungsbereiche einer Antriebseinheit D_{U}, eines Fahrradrahmens oder einer Rahmenschnittstellen-Einheit Iu implizieren. Dabei kann jede Befestigungsachse wiederum mehrere entlang einer Querachse des Fahrradrahmens beabstandete Verbindungsstrukturen umfassen. Diese Verbindungsstrukturen, beispielsweise Verschraubungen, müssen auch nicht zwangsläufig in Querrichtung des Fahrrads verlaufen bzw. angeordnet sein. Vielmehr können die Längsachsen derartiger Verschraubungen beispielsweise auch innerhalb von Längsebenen verlaufen, bezogen auf ein Fahrrad.

Durch die Anordnung sämtlicher Bauteile bzw. Baugruppen der elektrischen Antriebseinheit Du in einem gemeinsamen Gehäuse Hc ergeben sich erhebliche Integrationsvorteile, darunter insbesondere Gewichts- und Kostenvorteile sowie Vorteile bezüglich Wartung und Lebensdauer.

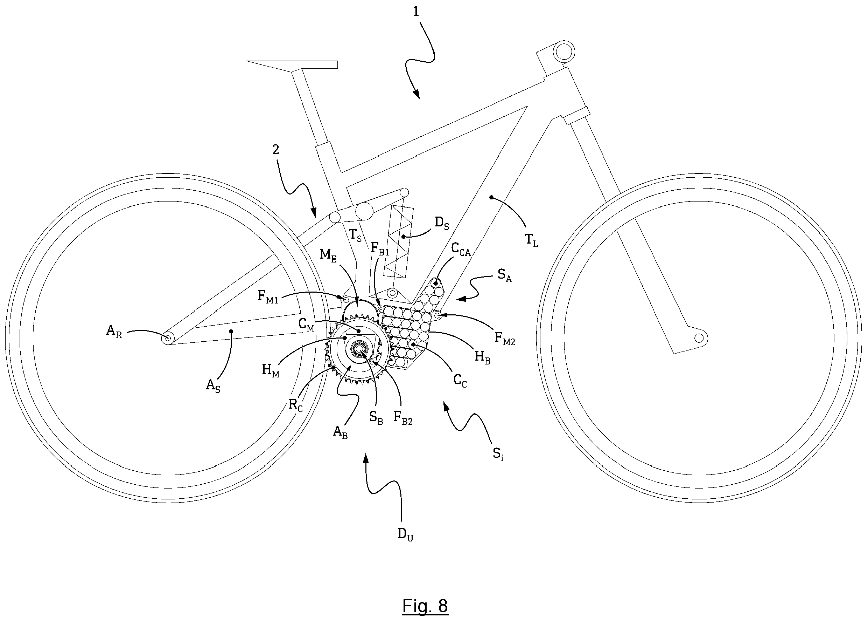

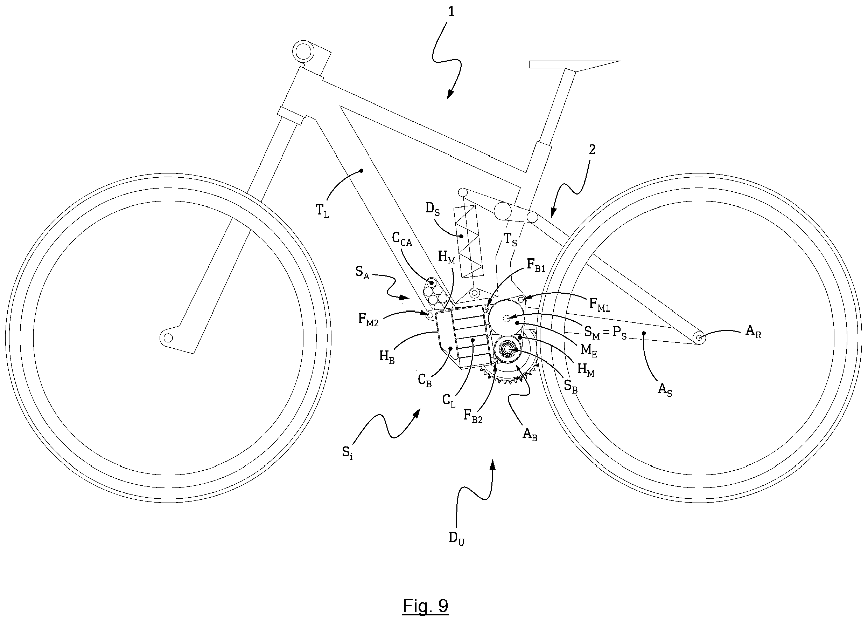

Das E-Mountainbike bzw. die Antriebseinheit Du gemäß Fig. 8 und 9 stimmt ebenfalls in wesentlichen Teilen mit dem E-Mountainbike bzw. der Antriebseinheit Du gemäß Fig. 2 und 3 überein. Jedoch besitzt die Antriebseinheit Du der Ausführungsform gemäß Fig. 8 und 9 eine Zusatz-Energiespeichereinrichtung S_{A} mit Energiespeicherzellen C_{CA}, wobei die Zusatz-Energiespeichereinrichtung S_{A} bei dieser Ausführungsform in Form einer Erweiterung der integrativen Energiespeichereinrichtung Si vorliegt. Mit anderen Worten ist die Zusatz-Energiespeichereinrichtung S_{A} hier in die integrative Energiespeichereinrichtung Si einteilig bzw. einstückig integriert und in einem gemeinsamen Gehäuse H_{B} angeordnet. Bei der vorliegenden Ausführungsform erstreckt sich die integrative Energiespeichereinrichtung Si teilweise in das Unterrohr T_{L} des Hauptrahmens 1.

Die integrative Energiespeichereinrichtung Si ist bei dieser Ausführungsform mittels zweier Befestigungspunkte bzw. Befestigungsachsen F_{B1} und F_{B2} mit dem Motorgehäuse H_{M} verbunden. Hierdurch erübrigt sich eine eigene Befestigungsschnittstelle zwischen der Energiespeichereinrichtung Si und dem Rahmen 1, was wiederum eine Reduktion von Komplexität, Gewicht und Kosten mit sich bringt.

Alternativ zur Darstellung in Fig. 8 und 9 kann die Energiespeichereinrichtung Si, ähnlich wie bei der Ausführungsform gemäß Fig. 6 und 7, auch zusammen mit den sonstigen Baugruppen der Antriebseinheit Du, insbesondere zusammen mit Motoreinrichtung M_{E}, Getriebe, Motorcontroller C_{M}, Batteriecontroller C_{B} und Tretlagerbaugruppe A_{B} in einem einzigen gemeinsamen Gehäuse Hc angeordnet sein.

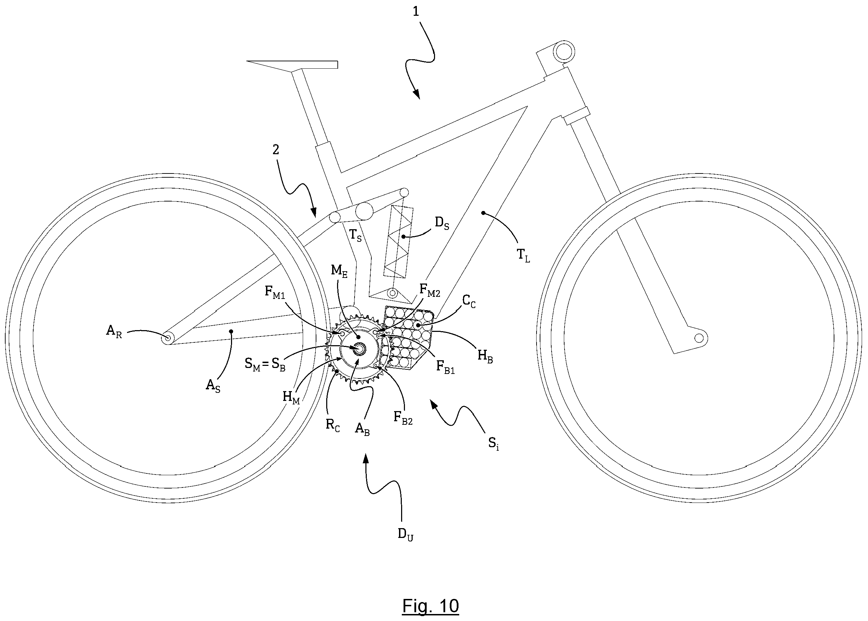

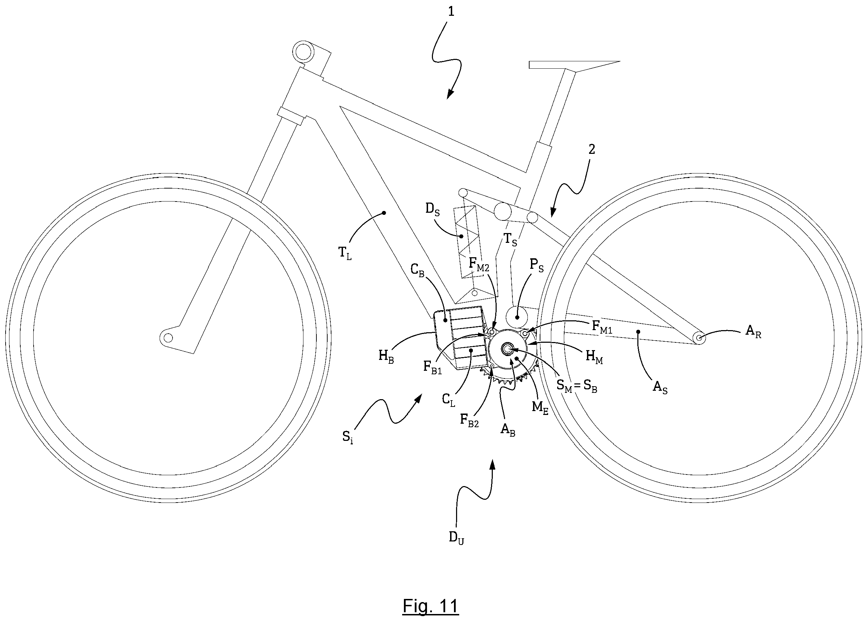

Das E-Mountainbike bzw. die Antriebseinheit Du gemäß Fig. 10 und 11 stimmt wiederum in wesentlichen Aspekten mit dem E-Mountainbike bzw. der Antriebseinheit Du gemäß Fig. 2 und 3 überein. Jedoch ist die Motoreinrichtung M_{E} mit Untersetzungsgetriebe bei der Ausführungsform gemäß Fig. 10 und 11 koaxial bzw. konzentrisch zur Tretlagerwelle S_{B} ausgeführt und angeordnet.

Die integrative Energiespeichereinrichtung Si ist dabei, ähnlich wie bei den Ausführungsformen gemäß Fig. 2 und 3 bzw. Fig. 8 und 9, mittels zweier Befestigungspunkte bzw. Befestigungsachsen F_{B1} und F_{B2} mit dem Motorgehäuse H_{M} verbunden, und das Motorgehäuse H_{M} einschließlich der daran befestigten integrativen Energiespeichereinrichtung Si ist mittels zweier weiterer Befestigungspunkte bzw. Befestigungsachsen F_{M1} und F_{M2} mit dem Hauptrahmen 1 verbindbar bzw. verbunden.

Der Einsatz einer koaxialen Motor-Getriebeeinrichtung M_{E} bei dieser Ausführungsform führt zu einer außerordentlich kompakten Antriebseinheit, so dass zusätzlich freiwerdender Bauraum für andere Komponenten, beispielsweise für die Schwenklagerung Ps bzw. Anbindung der Hinterbauschwinge As, oder auch zur weiteren Vergrößerungen der integrativen Energiespeichereinrichtung Si genutzt werden kann. Es sind auch Ausführungsformen denkbar und vorgesehen, bei denen die Schwenklagerung Ps der Hinterbauschwinge As koaxial mit der Welle S_{B} der koaxialen Motor-Getriebeeinrichtung M_{E} angeordnet ist, bei denen die Hinterbauschwinge As also auf einer Abtriebswelle S_{M} der koaxialen Motor-Getriebeeinrichtung M_{E} bzw. auf der hierzu koaxialen Tretlagerwelle S_{B} gelagert ist.

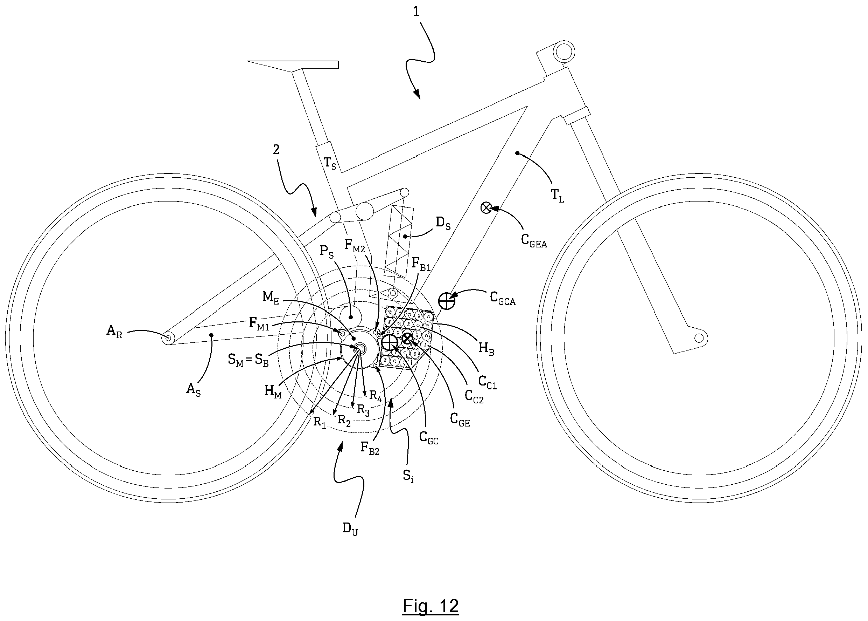

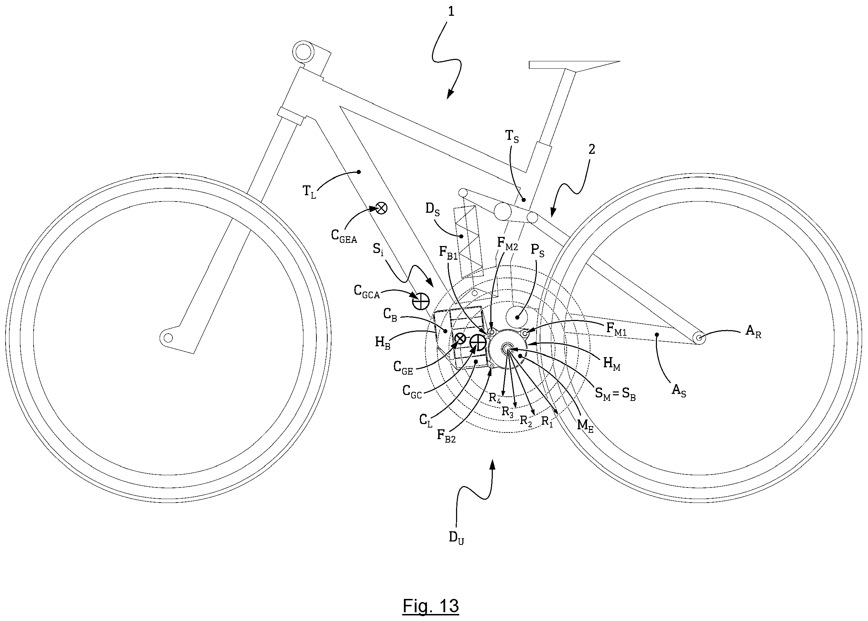

Fig. 12 und 13 zeigen das E-Mountainbike bzw. die Antriebseinheit Du gemäß Fig. 10 und 11 mit zusätzlich eingezeichneter Schwerpunktlage C_{GE} der integrativen Energiespeichereinrichtung Si sowie mit eingezeichneter Schwerpunktlage C_{GC} der gesamten Antriebseinheit Du, also der gemeinsamen Schwerpunktlage C_{GC} insbesondere einschließlich Motor-Getriebeeinrichtung M_{E} und integrativer Energiespeichereinrichtung Si.

Im Vergleich mit dem Stand der Technik gemäß Fig. 1 wird deutlich, dass die Massenschwerpunkte C_{GE}, C_{GC} mit der Antriebseinheit Du gemäß der vorliegenden Offenbarung im Fahrrad entscheidend tiefer und erheblich weiter hinten liegen als die (in Fig. 12, 13, 17, 18, 19 und 23 nochmals strichliert eingezeichneten) Massenschwerpunkte C_{GEA}, C_{GCA} beim Stand der Technik.

Hierdurch werden die in der Beschreibungseinleitung ausgeführten Nachteile bekannter E-Mountainbikes insbesondere bezüglich Handling und Fahrsicherheit maßgeblich verbessert bzw. behoben.

In Fig. 12 und 13 sind weiterhin mit strichlierten Linien Umkreise R₁, R₂, R₃ und R₄ mit Radien von 175 mm, 150 mm, 125 mm und 100 mm eingezeichnet, die jeweils einen Tretlagerbereich definieren, innerhalb dessen sich die Schwerpunktlage C_{GE} der Energiespeichereinrichtung Si sowie die Schwerpunktlage C_{GC} der Antriebseinheit Du befindet, wenn die Antriebseinheit Du in einer Lage betrachtet wird, die einer am Fahrrad montierten Lage der Antriebseinheit Du entspricht.

Es wird erkennbar, dass sich die Schwerpunktlage C_{GC} der Antriebseinheit Du bei der Ausführungsform gemäß Fig. 10 bis 13 innerhalb des kleinsten Kreises R₄, also mit einem geringeren Abstand als 100 mm von der Drehachse der Tretlagerwelle S_{B} befindet. Außerdem ist in Fig. 12 die abwechselnde Ausrichtung der Polarität der Energiespeicherzellen C_{C1} bzw. C_{C2} fahrtrichtungsbezogen nach rechts bzw. nach links erkennbar.

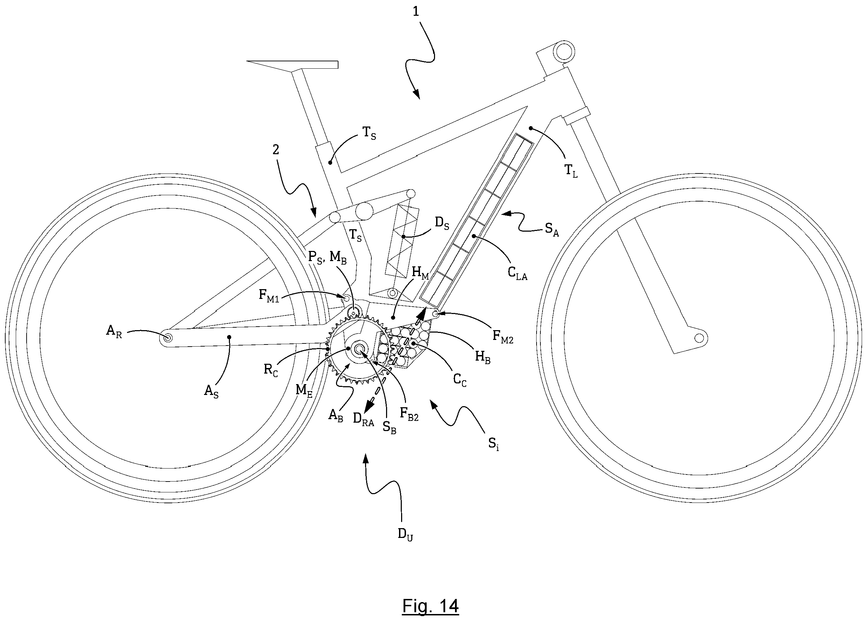

Fig. 14 bis 16 zeigen ein E-Mountainbike bzw. eine Antriebseinheit Du ähnlich Fig. 4 und 5, also insbesondere mit einer Zusatzbatterie S_{A} sowie mit einer integrierten Batterie Si, welche am Motorgehäuse H_{M} befestigt ist, wobei Motorgehäuse H_{M} samt daran befestigter integrierter Batterie wiederum an Rahmenschnittstellen bzw. Befestigungsachsen F_{M1} und F_{M2} mit dem Hauptrahmen 1 verbunden sind. Auch hier lässt sich nach Abnahme der integrierten Batterie Si die Zusatzbatterie S_{A} in axialer Entnahmerichtung D_{RA} aus dem Unterrohr T_{L} entnehmen, was wieder einen geschlossenen Rohrquerschnitt des Unterrohrs T_{L} mit dessen weiter oben beschriebenen Vorteilen ermöglicht.

Weiterhin erkennt man, dass die Antriebseinheit Du gemäß der Ausführungsform nach Fig. 14 bis 16 Lageraufnahmen Mp für die Schwenklagerung Ps der Hinterbauschwinge As aufweist. Hierdurch wird eine besonders kompakte und verwindungssteife Einheit aus Antriebseinheit und Schwenklagerung Ps erhalten. Auch lässt sich auf diese Weise der Abstand zwischen der Hinterradachse und der Tretlagerwelle S_{B} vorteilhaft möglichst kurz ausführen, was dem Handling und der Wendigkeit des Fahrrads ebenso wie der Steifigkeit des Hinterbaus 2 zugutekommt.

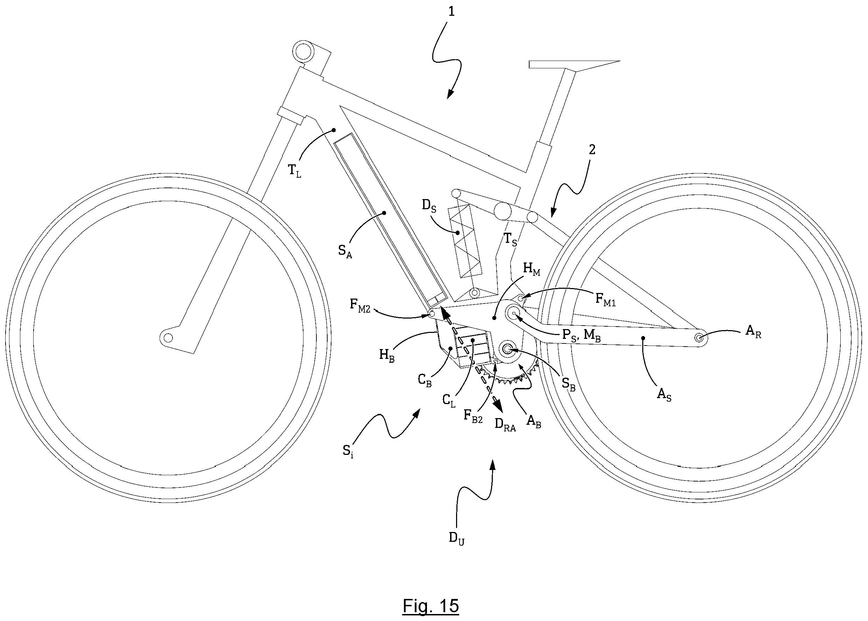

Durch Zusammenschau von Fig. 14 und 15 mit dem Stand der Technik gemäß Fig. 1 wird insbesondere der hohe Grad an Funktions- und Bauteilintegration deutlich, der mit dem Gegenstand der vorliegenden Offenbarung erreichbar ist.

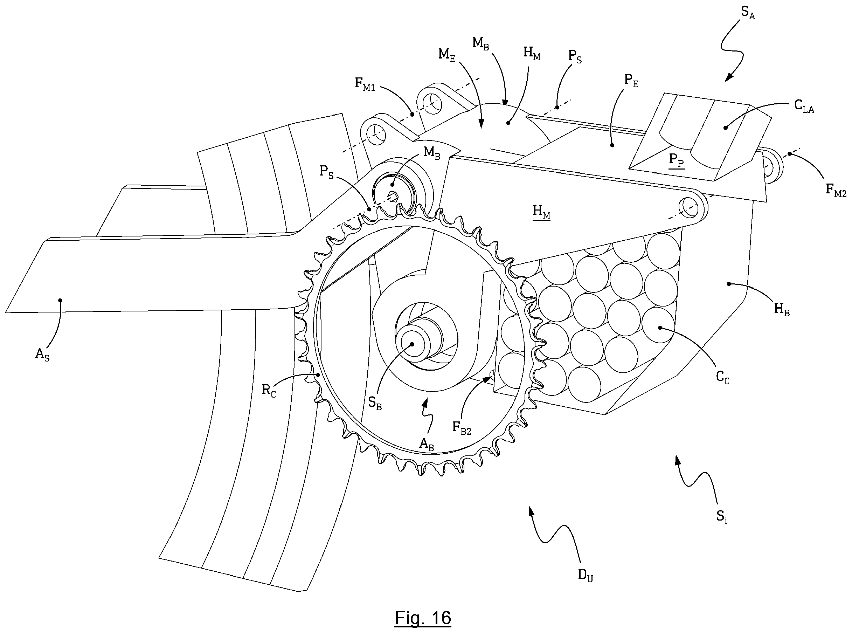

Fig. 16 zeigt die Antriebseinheit Du des E-Mountainbikes gemäß Fig. 14 und 15 in schematischer isometrischer Ausschnittsdarstellung. Man erkennt insbesondere das Motorgehäuse H_{M} mit dessen Rahmenschnittstellen bzw. Befestigungsachsen F_{M1} und F_{M2} zur Verbindung mit dem hier nicht dargestellten Hauptrahmen 1.

Die dargestellte Ausführungsform der Antriebseinheit Du besitzt eine oberhalb der Tretlagerbaugruppe A_{B} angeordnete Motoreinrichtung M_{E}, welcher über eine Getriebeeinrichtung, beispielsweise über ein Stirnradgetriebe und/oder über einen Riementrieb, auf die Tretlagerwelle S_{B} wirkt. Insbesondere aufgrund dieser bauraumsparenden Anordnung und Funktionsintegration wird es möglich, den Energiespeicher Si direkt im Tretlagerbereich sowie unmittelbar benachbart zum Motor M_{E} zu positionieren.

Die Darstellung in Fig. 16 insbesondere der Zusatzbatterie S_{A} sowie eines Abschlussblechs P_{E} des Hauptrahmens 1, welches bei Pp von der Zusatzbatterie S_{A} beispielsweise durchdrungen wird, ist lediglich beispielhaft und schematisch zu verstehen, ebenso wie die hier longitudinale Ausrichtung der Zellen C_{LA} der Zusatzbatterie S_{A}. Diesbezüglich wird auf alternative Ausführungsformen der Zusatzbatterie S_{A} verwiesen, wie beispielsweise in Fig. 8 und 9 dargestellt, welche mit den sonstigen Merkmalen der Ausführungsform gemäß Fig. 14 bis 16, insbesondere mit der integrierten Schwingenlagerung P_{S}, Mp kombiniert werden können.

Ähnliches gilt für die in Fig. 10 bis 13 dargestellte Ausführungsform mit koaxialem Motor M_{E}. Auch diese Ausführungsform lässt sich mit einer integrierten Schwingenlagerung P_{S}, Mp gemäß Fig. 14 bis 16 kombinieren.

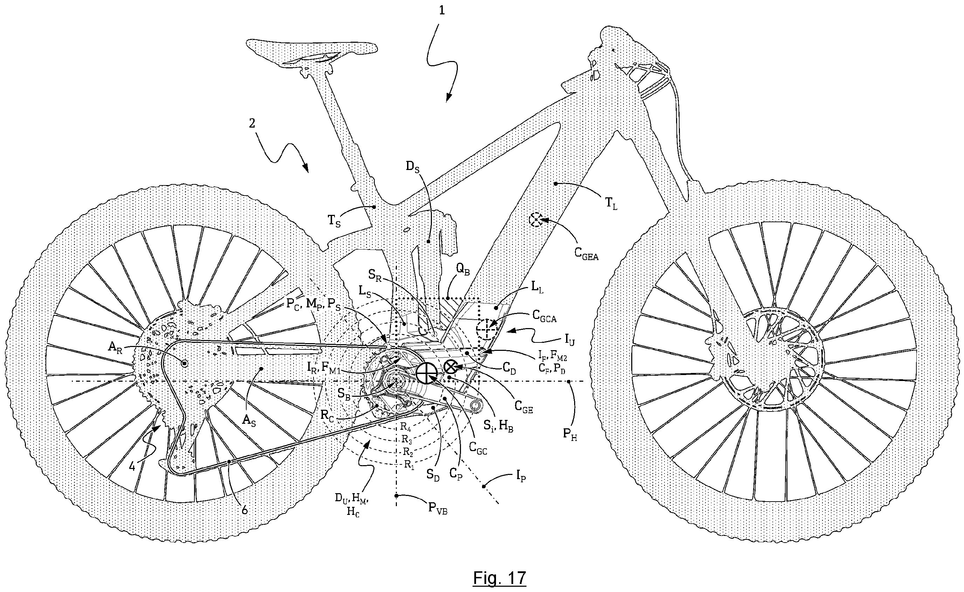

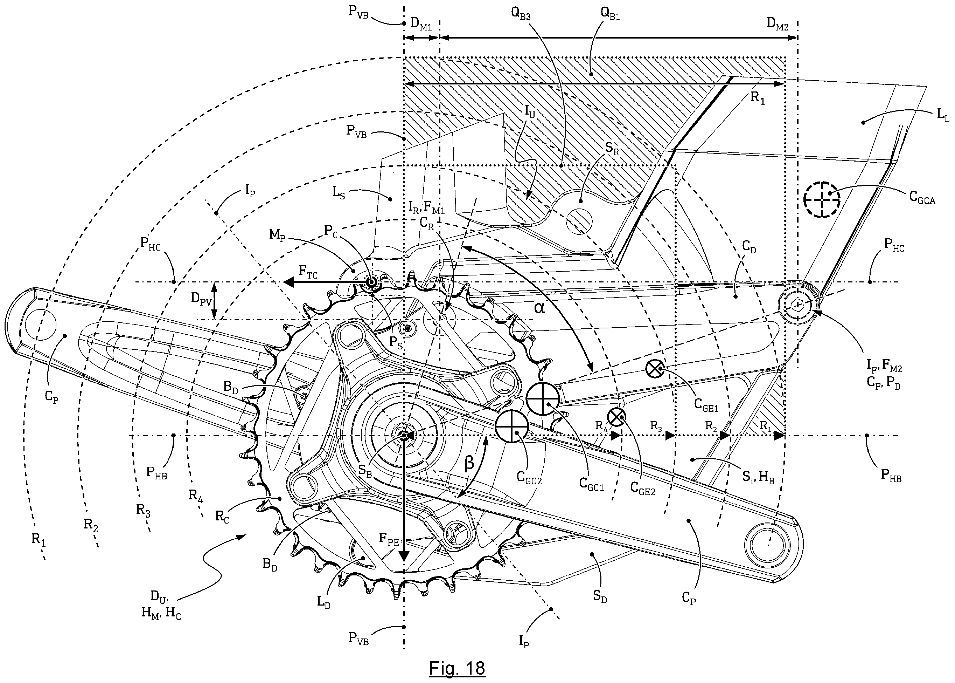

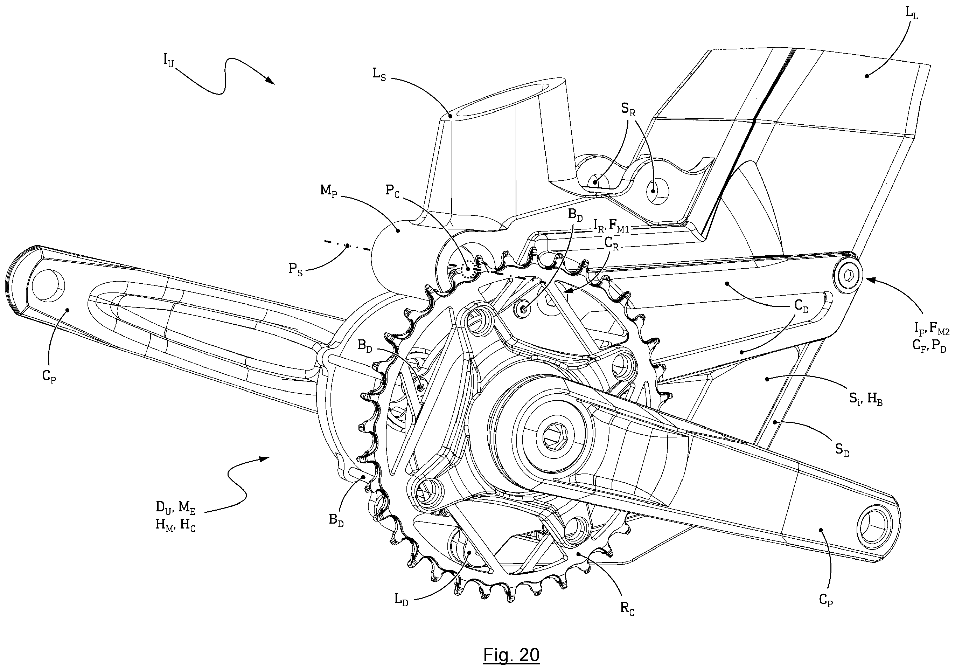

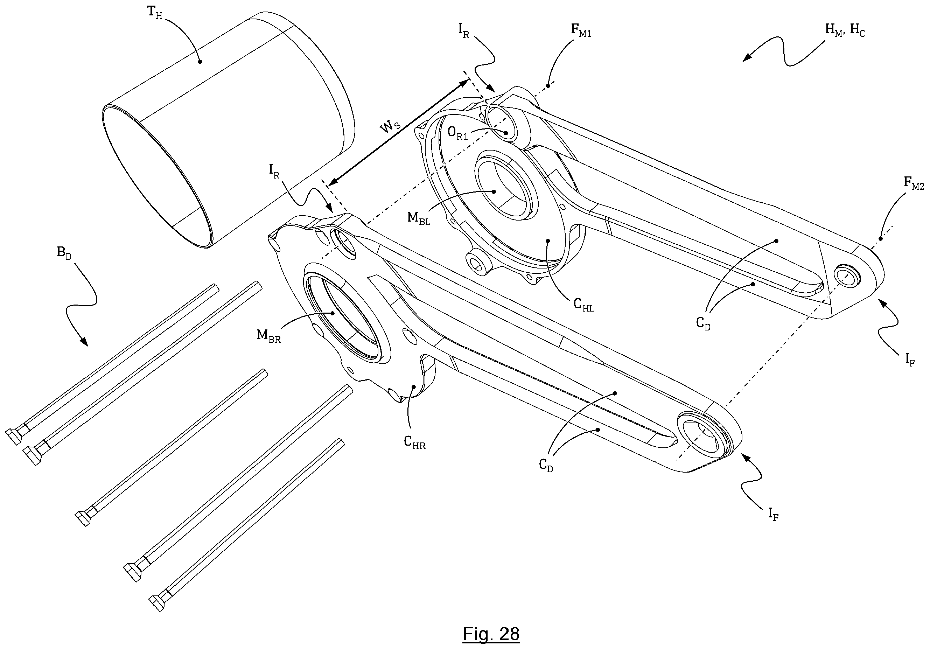

Fig. 17 zeigt ein in ein E-Mountainbike eingebautes, erstes bevorzugtes Ausführungsbeispiel einer Antriebseinheit Du mit integrativer bzw. integrierter Energiespeichereinrichtung. Fig. 18 bis 27 zeigen verschiedene Ansichten und Schnittdarstellungen der Antriebseinheit Du gemäß Fig. 17, und Fig. 28 zeigt das Antriebsgehäuse Hc der Antriebseinheit Du gemäß Fig. 17 bis 27 in einer Explosionsdarstellung.

Bereits in Fig. 17, deutlicher in Fig. 18, 19, 23, 24 und 26, wird erkennbar, dass mit der Antriebseinheit Du eine erhebliche Reduktion der Komplexität und damit der Masse und der Kosten insbesondere des Fahrradrahmens erreicht wird dadurch, dass die beim Stand der Technik üblichen weiteren Aufhängungspunkte in einem hinteren Bereich der Antriebseinheit Du, insbesondere hinter einer durch die Tretlagerwelle S_{B} verlaufenden, gedachten Vertikalebene P_{VB}, weggelassen bzw. vor diese Vertikalebene P_{VB} verlegt sind. Auf diese Weise ergibt sich eine erhebliche Reduktion des beim Stand der Technik vorhandenen Bauteilvolumens hinter der Vertikalebene P_{VB}, insbesondere auch zwischen Tretlagerwelle S_{B} und Hinterradachse A_{R}, und damit eine höhere Gestaltungsfreiheit bezüglich der Geometrie insbesondere bei gefederten Hinterbaurahmen 2.

Die Antriebseinheit Du nach dem ersten Ausführungsbeispiel gemäß Fig. 17 bis 27 besitzt bzw. vereint Eigenschaften zumindest mehrerer der vorstehend beschriebenen und in Fig. 2 bis 16 dargestellten Antriebseinheiten Du, was im Einzelnen den Figuren 17 bis 28 sowie der nachfolgenden Beschreibung der in den Figuren 17 bis 28 mit entsprechenden Bezugszeichen versehenen Baugruppen bzw. Bauteile entnommen werden kann.

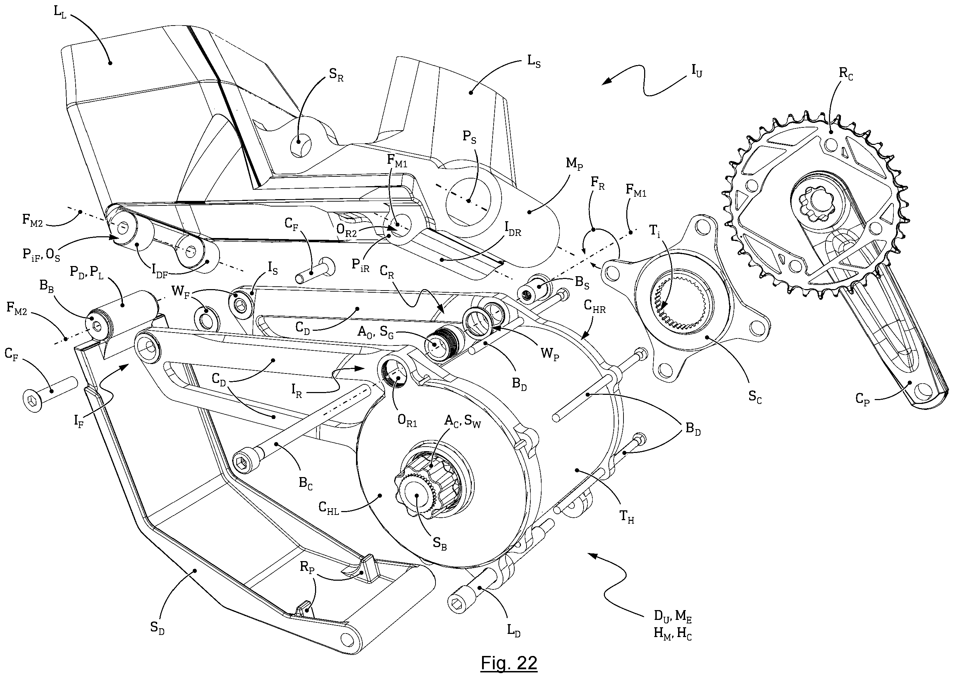

Zunächst erkennt man in Fig. 17 einen Fahrrad-Hauptrahmen 1, ähnlich dem in Fig. 1 bis 15 dargestellten Rahmen 1. Weiterhin erkennt man eine Hinterbaufederung 2, eine hintere Rahmenschnittstellenanordnung I_{R} sowie eine vordere Rahmenschnittstellenanordnung I_{F}. Vorliegend werden die Rahmenschnittstellen I_{R}, I_{F} der Antriebseinheit Du an entsprechenden Antriebseinheits-Schnittstellenanordnungen I_{DR}, I_{DF} einer Rahmenschnittstellen-Einheit Iu angeordnet, welche insbesondere aus Fig. 22 ersichtlich ist.

Die hintere Rahmenschnittstellenanordnung I_{R}, und dementsprechend auch die hintere Antriebseinheits-Schnittstellenanordnung I_{DR} der Rahmenschnittstellen-Einheit Iu, liegt dabei bevorzugt auf einer geradlinigen Befestigungsachse F_{M1} (vgl. Fig. 16, 20, 22 und 26 bis 28). Wie insbesondere aus Fig. 18 hervorgeht, ist im montierten Zustand von Antriebseinheit Du und Rahmenschnittstellen-Einheit Iu der vertikale Abstand D_{PV} zwischen der Befestigungsachse F_{M1} und dem Angriffspunkt Pc der Kettenzugkraft F_{TC} gering, vorzugsweise kleiner als 30 mm, besonders bevorzugt kleiner als 21 mm.

In ähnlicher Weise ist auch der horizontale Abstand D_{M1} zwischen Befestigungsachse F_{M1} und Drehachse der Tretlagerwelle S_{B} (Angriffspunkt der Fahrer-Gewichtskraft und Fahrer-Antriebskraft, also der effektiven Pedalkraft F_{PE}, welche näherungsweise in der Tretlagerachsen-Vertikalebene P_{VB} gemäß Fig. 18 verläuft) gering, vorzugsweise kleiner als 30 mm, besonders bevorzugt kleiner als 18 mm.

Auf diese Weise werden die Drehmomente, die durch diese beiden ggf. sehr hohen Kräfte erzeugt werden, und die von der Antriebseinheit auf den Rahmen übertragen werden müssen, minimiert. Insbesondere die Kettenzugkraft F_{TC} kann in dynamischen Belastungsfällen ohne weiteres Größenordnungen von 5000 N erreichen und überschreiten. Durch die mit dieser Bauweise erzielte Minimierung der durch Kettenzugkraft F_{TC} und Fahrer-Gewichtskraft/Antriebskraft F_{PE} erzeugten Drehmomente, und aufgrund der großen effektiven Länge D_{M2} der Antriebsgehäuse-Ausleger C_{D} sind die zur Abstützung dieser Drehmomente erforderlichen Reaktionskräfte an der vorderen Rahmenschnittstellenanordnung I_{F} klein und können dort durch eine vorzugsweise rein reibschlüssige Verbindung zwischen Antriebseinheit Du und Rahmenschnittstellen-Einheit Iu, welche zudem nur geringen Anforderungen bezüglich der Einhaltung von Maßtoleranzen unterliegt, leicht in den Rahmen eingeleitet werden.

Im Umkehrschluss bedeutet dies, dass von den beiden Rahmenschnittstellenanordnungen I_{F} und I_{R} lediglich an die hintere Rahmenschnittstellenanordnung I_{R} hohe Anforderungen bezüglich Kraftübertragung, Steifigkeit und Einhaltung von Toleranzen gestellt werden, während die vordere Rahmenschnittstellenanordnung I_{F} kräftemäßig nur gering belastet wird, und nur geringen Toleranz- bzw. Genauigkeitsanforderungen unterliegt.

Diese spezifische Verteilung der Aufgaben auf die beiden Rahmenschnittstellenanordnungen I_{F} (Drehmomentabstützung) und I_{R} (auf kürzestem

Weg Abstützung aller Kräfte sowie maßliche Referenzierung) bedeutet auch, dass die Verbindung zwischen Antriebseinheit Du und hinterer Rahmenschnittstellenanordnung I_{R} besonders hohe Steifigkeit sowie einen direkten Kraftfluss bietet.

Weiterhin werden alle Bewegungsfreiheitsgrade der Antriebseinheit Du (außer des Rotationsfreiheitsgrads F_{R} um die hintere Befestigungsachse F_{M1}, vgl. Fig. 22) gegenüber dem Hauptrahmen 1 nur mittels der hinteren Rahmenschnittstellenanordnung I_{R} festgelegt. Wie insbesondere aus Fig. 22 hervorgeht, umfasst die hintere Rahmenschnittstellenanordnung I_{R} beim ersten Ausführungsbeispiel gemäß Fig. 17 bis 29A eine Verschraubung C_{R} zur Verbindung der hinteren Rahmenschnittstellenanordnung I_{R} mit der Antriebseinheit Du.

Die Verschraubung C_{R} (vgl. insbesondere Fig. 22, 26, 27) umfasst beim ersten Ausführungsbeispiel einen Rahmen-Ausgleichsadapter Ao in Form einer bzw. mit einer abgestuften Hülse S_{G}, die ein Außengewinde zur variablen spielfreien Einstellung der Klemmung in Axialrichtung zwischen Motorgehäuse H_{M} bzw. Antriebsgehäuse Hc und hinterer Antriebseinheits-Schnittstellenanordnung I_{DR} der Rahmenschnittstellen-Einheit Iu, ferner eine Schraubhülse B_{S}, eine Druckscheibe Wp, und einen Verbindungsbolzen B_{C} zum Einschrauben in die Schraubhülse B_{S}, wodurch die vorstehend beschriebene, in alle drei Raumrichtungen spielfrei lastübertragende Verbindung zwischen Motorgehäuse H_{M} bzw. Antriebsgehäuse Hc und hinterer Antriebseinheits-Schnittstellenanordnung I_{DR} hergestellt wird.

Die Verbindung zwischen Motorgehäuse H_{M} bzw. Antriebsgehäuse Hc und hinterer Antriebseinheits-Schnittstellenanordnung I_{DR} der Rahmenschnittstellen-Einheit Iu mittels des Rahmen-Ausgleichsadapters Ao ist dabei nicht nur in axialer Richtung spielfrei, bezogen auf die Längsachse des Ausgleichsadapters Ao. Durch eine entsprechende Wahl der Passungen zwischen dem Außendurchmesser des Rahmen-Ausgleichsadapters Ao und den diesen aufnehmenden Bohrungen O_{R1}, O_{R2} im Motorgehäuse H_{M} bzw. Antriebsgehäuse Hc und in der Antriebseinheits-Schnittstellenanordnung I_{DR} der Rahmenschnittstellen-Einheit Iu lässt sich sicherstellen, dass die Verbindung zwischen Motorgehäuse H_{M} bzw. Antriebsgehäuse Hc und hinterer Antriebseinheits-Schnittstellenanordnung I_{DR} auch in radialer Richtung spielfrei ist, bezogen auf die Längsachse des Ausgleichsadapters Ao.

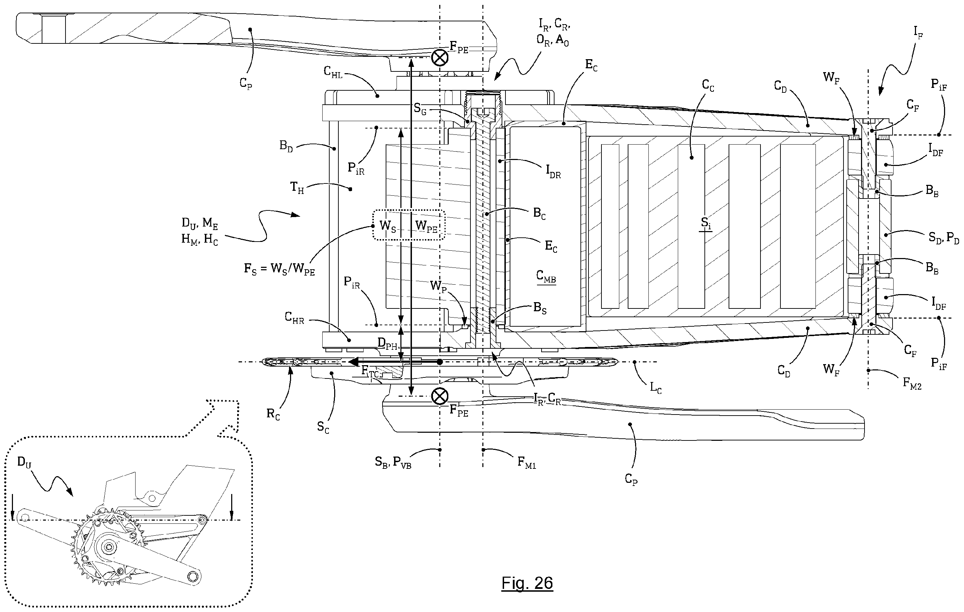

Dabei dient der Rahmen-Ausgleichsadapter Ao insbesondere der Aufgabe, etwaige am Fahrradrahmen 1 bzw. an der Antriebseinheits-Schnittstellenanordnung I_{DR} vorhandene Toleranzen insbesondere in Bezug auf die Abstützbreite Ws (vgl. Fig. 26 bis 28 und 33B) auszugleichen.

Dieser Toleranzausgleich ist von erheblicher Bedeutung, da die Antriebseinheit D_{U} in der Praxis des Fahrradmarkts mit verschiedensten Fahrradrahmen bzw. mit ggf. unterschiedlichen Rahmenschnittstellen-Einheiten Iu kombiniert werden kann, wobei die Fahrradrahmen, oder ggf. die Rahmenschnittstellen-Einheiten I_{U}, von verschiedensten Herstellern stammen bzw. zugeliefert sein können.

Hierdurch ergeben sich erfahrungsgemäß, je nach Ursprung bzw. Hersteller des Fahrradrahmens oder der Rahmenschnittstellen-Einheit Iu, unterschiedlichste Toleranzsituationen in Bezug auf die Abstützbreite Ws. Derartige unterschiedliche Toleranzsituationen lassen sich mit dem Ausgleichsadapter Ao einfach und stufenlos kompensieren.

Wie vorstehend schon ausgeführt, dient die vordere Rahmenschnittstellenanordnung I_{F} der Antriebseinheit Du lediglich der Drehmomentabstützung über die Antriebsgehäuse-Ausleger C_{D} (und damit der Festlegung des sechsten Freiheitsgrads F_{R} von sechs Bewegungsfreiheitsgraden der Antriebseinheit Du gegenüber dem Hauptrahmen 1). Aufgrund des großen horizontalen Abstands D_{M2} zwischen vorderer Rahmenschnittstellenanordnung I_{F} bzw. vorderer Befestigungsachse F_{M2} und der Drehachse der Tretlagerwelle S_{B} ergeben sich dabei lediglich geringe an der vorderen Rahmenschnittstellenanordnung I_{F} abzustützende Reaktionskräfte.

Beim Stand der Technik kommen üblicherweise drei Befestigungsachsen zur Verbindung von Antriebseinheit und Fahrradrahmen zum Einsatz, bei denen jedoch, anders als bei der vorliegenden Offenbarung, unter den verschiedenen Befestigungsachsen keine spezifische Aufgabenteilung hinsichtlich Kraftübertragung, Momentenübertragung und Festlegung der Bewegungsfreiheitsgrade der Antriebseinheit relativ zum Fahrradrahmen getroffen wird. Insbesondere existiert kein eindeutiger Lastpfad für die Einleitung der Kräfte und Momente aus der Antriebseinheit in den Fahrradrahmen. Vielmehr ist beim Stand der Technik der tatsächliche Lastpfad sowie die Frage, welcher Aufhängungspunkt oder welche Befestigungsachse welchen Anteil der Kräfte und Momente überträgt, im Wesentlichen von zufälligen Toleranzverhältnissen und -verteilungen zwischen den mehreren gleichberechtigten Befestigungsachsen an der Antriebseinheit und am Fahrradrahmen abhängig.

Hierdurch ergeben sich beim Stand der Technik häufig erhebliche Schwierigkeiten hinsichtlich des Toleranzausgleichs bei der Montage der Antriebseinheit im Fahrradrahmen, sowie im Hinblick auf eine dauerhaft feste und spielfreie Verbindung zwischen Antriebseinheit und Fahrradrahmen.

Zudem befindet sich beim Stand der Technik eine der dort üblicherweise drei Befestigungsachsen zur Verbindung von Antriebseinheit und Fahrradrahmen in einem Bereich hinter oder sogar erheblich weit hinter der Vertikalebene P_{VB}, welche die Drehachse der Tretlagerwelle S_{B} enthält, typischerweise mehr als ca. 40 mm hinter dieser Vertikalebene P_{VB}, und dabei häufig sogar unterhalb der Horizontalebene P_{HB}, welche die Drehachse der Tretlagerwelle S_{B} enthält. Dies bedeutet, dass der Fahrradrahmen, bzw. eine Rahmenschnittstellen-Einheit des Fahrradrahmens, bis weit hinter das Tretlager und häufig sogar bis unterhalb der Tretlagerhöhe um das Tretlager herum gebaut werden muss, um dort die erforderliche Befestigungsachse bzw. Befestigungsaufnahme zur Verbindung mit der Antriebseinheit bereitzustellen.

Eine derartige, in der Branche auch als sog. "Rahmenlappen" bekannte Verlängerung bzw. Ausstülpung des Rahmens hinter dem Tretlager, um dort die Antriebseinheit befestigen zu können, ist jedoch aufwändig zu fertigen, insbesondere wenn diese gleichzeitig den genannten hohen Anforderungen bezüglich der Einhaltung von Toleranzen und der Aufnahme von Kräften erfüllen soll. Zudem steht eine derartige Verlängerung bzw. Ausstülpung des Rahmens hinter dem Tretlager in Konflikt mit der üblicherweise in demselben Bauraumbereich angeordneten Aufnahme für die Hinterbauschwingen-Lageraufnahme M_{P} (vgl. Fig. 1 und Fig. 17 bis 25), was deren konstruktive Auslegung und Optimierung entscheidend erschweren kann.

Diese problematische Gemengelage wird mit der Antriebseinheit Du gemäß der vorliegenden Offenbarung nachhaltig behoben insbesondere dadurch, dass besonders bevorzugt genau zwei Rahmenschnittstellen I_{R}, I_{F} bzw. genau zwei Befestigungsachsen F_{M1}, F_{M2} vorgesehen sind, von denen die hintere Rahmenschnittstellenanordnung I_{R} bzw. Befestigungsachse F_{M1} sehr nahe an den wesentlichen Kraftangriffslinien sowohl der Kettenzugkraft F_{TC} als auch der Fahrer-Gewichtskraft/Antriebskraft F_{PE} positioniert ist und alle Toleranzausgleichs- und Kraftübertragungsaufgaben ebenso wie die Festlegung aller Bewegungsfreiheitsgrade der Antriebseinheit Du übernimmt (außer einem Rotations-Freiheitsgrad F_{R} um eine zur Tretlagerwelle S_{B} parallele Rotationsachse, vgl. Fig. 22), wodurch die vordere Rahmenschnittstellenanordnungen I_{F} bzw. Befestigungsachse F_{M2} in Form eines Drehmomentauslegers lediglich noch zur Festlegung des verbleibenden, vorgenannten Rotationsfreiheitsgrads F_{R} der Antriebseinheit Du benötigt wird.

Die Antriebseinheit Du besitzt dementsprechend besonders bevorzugt genau zwei Rahmenschnittstellen I_{R}, I_{F}, die zur Verbindung mit den jeweils zugehörigen Antriebseinheits-Schnittstellen I_{DR}, I_{DF} der Rahmenschnittstellen-Einheit Iu ausgebildet sind.

Vorzugsweise ist die vordere Rahmenschnittstellenanordnung I_{F} der Antriebseinheit Du dabei in Funktionsvereinigung mit einer Schwenklagerung P_{D} für das Antriebsschutzschild S_{D} ausgebildet, was insbesondere aus Fig. 22 bis 26 und Fig. 30 hervorgeht.

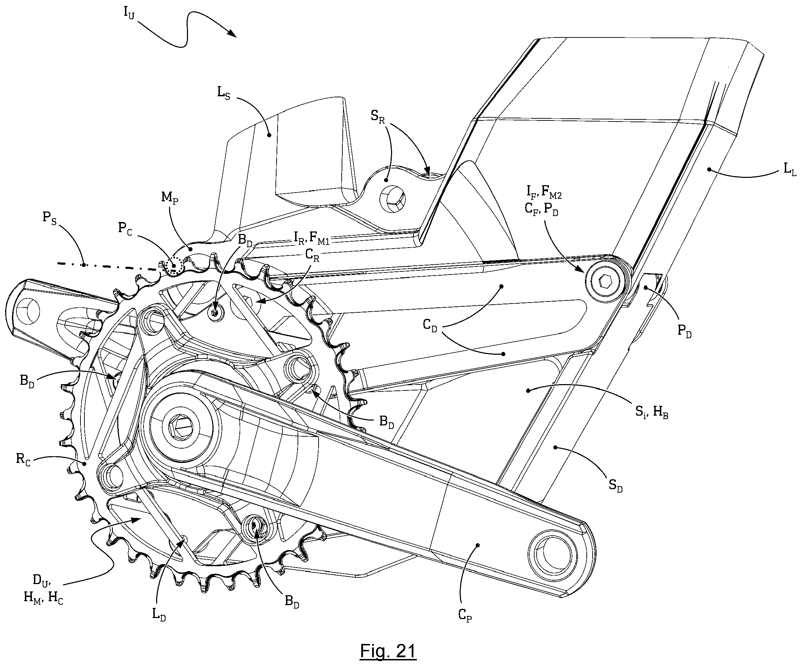

Dabei ist das Antriebsschutzschild S_{D} vorzugsweise am Motorgehäuse H_{M} und/oder an der Rahmenschnittstellen-Einheit Iu schwenkbar gelagert. Diese Lagerung des Antriebsschutzschilds S_{D} erfolgt bevorzugt auf der Achse F_{M2} koaxial mit der Verschraubung C_{F} der vorderen Rahmenschnittstellenanordnung I_{F} der Antriebseinheit Du mit der Antriebseinheits-Schnittstellenanordnung I_{DF} der Rahmenschnittstellen-Einheit Iu (vgl. Fig. 21 bis 26 sowie Fig. 33B), vorzugsweise mittels Lagerbuchsen B_{B}, beispielsweise mittels Kunststoff- oder Sinterlagerbuchsen. Alternativ kann das Antriebsschutzschild S_{D} auch bei L_{D} schwenkbar mit dem Antriebsgehäuse H_{C} verbunden sein. In diesem Fall befindet sich der Verschluss des Antriebsschutzschilds S_{D}, welcher zur Entnahme der Batterie geöffnet werden kann, im Bereich der vorderen Befestigungsachse F_{M2} (vgl. Fig. 22 bis 25).

Das Antriebsschutzschild S_{D} schützt die Antriebseinheit Du und insbesondere deren entnehmbare Batterie Si, und bildet bevorzugt gleichzeitig eine bewegbare Klappe zum Zweck der Batteriehalterung und Batterieentnahme. Die Aufnahme der Batterie Si erfolgt beim ersten Ausführungsbeispiel vorzugsweise durch Klemmung zwischen Antriebsschutzschild S_{D} und Motorgehäuse H_{M}.

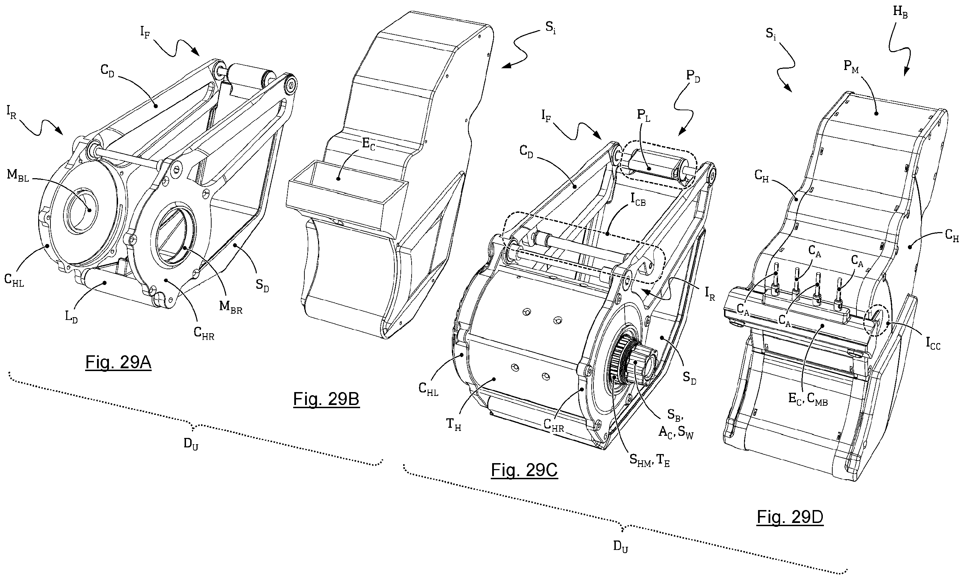

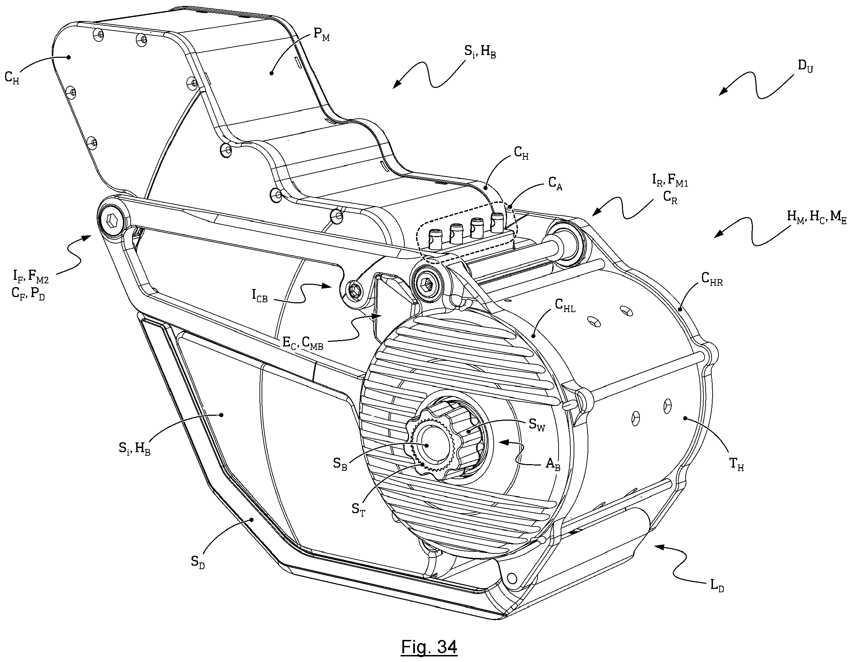

Wie insbesondere aus Fig. 29A und 34 hervorgeht, ist das Antriebsschutzschild S_{D} direkt am Motorgehäuse H_{M} bzw. am gemeinsamen Gehäuse Hc von Motor M_{E} und Batterie Si befestigt.

Dies ist besonders vorteilhaft, da auf diese Weise die erheblichen Kräfte, die insbesondere beim Aufsetzen des Fahrrads im Tretlagerbereich beispielsweise auf Hindernisse auftreten, was beim sportlichen Einsatz durchaus häufig vorkommen kann, direkt vom Antriebsschutzschild S_{D} über die Befestigungsschnittstellen P_{D}, L_{D} des Antriebsschutzschilds S_{D} am Antriebsgehäuse Hc in das Antriebsgehäuse Hc, und von diesem über die Rahmenschnittstellen I_{R}, I_{F} der Antriebseinheit D_{U} und über die Antriebseinheits-Schnittstellenanordnungen I_{DR}, I_{DF} in den Hauptrahmen 1 eingeleitet werden können. Da sowohl das Antriebsgehäuse Hc mit den Rahmenschnittstellen I_{R}, I_{F} als auch die Antriebseinheits-Schnittstellenanordnungen I_{DR}, I_{DF} für die Aufnahme hoher Kräfte ausgelegt sind, lassen sich solche beispielsweise beim Aufsetzen des Fahrrads auftretenden Kräfte problemlos aufnehmen und sicher in den Fahrradrahmen einleiten.

Der Fahrradrahmen wird zudem weiter maßgeblich entlastet dadurch, dass der Fahrer beim Aufsetzen des Fahrrads im Tretlagerbereich auf ein Hindernis häufig auf den Pedalen steht. Hierbei können die Stoßkräfte dank der Befestigung des Antriebsschutzschilds S_{D} am Motorgehäuse H_{M} direkt über die Lagerung B_{R}, B_{L} der Tretlagerwelle S_{B} vom Motorgehäuse H_{M} in die Tretlagerwelle S_{B} und von dort in die dämpfenden und abfedernden Beine des Fahrers eingeleitet werden.

Beim Stand der Technik hingegen sind Antriebsschutzschilde üblicherweise nicht mit dem Antriebsgehäuse, sondern direkt mit dem Hauptrahmen 1 verbunden. Aus diesem Grund besteht beim Stand der Technik ein erhebliches Risiko, den Fahrradrahmen beispielsweise beim Aufsetzen auf Hindernisse zu beschädigen.

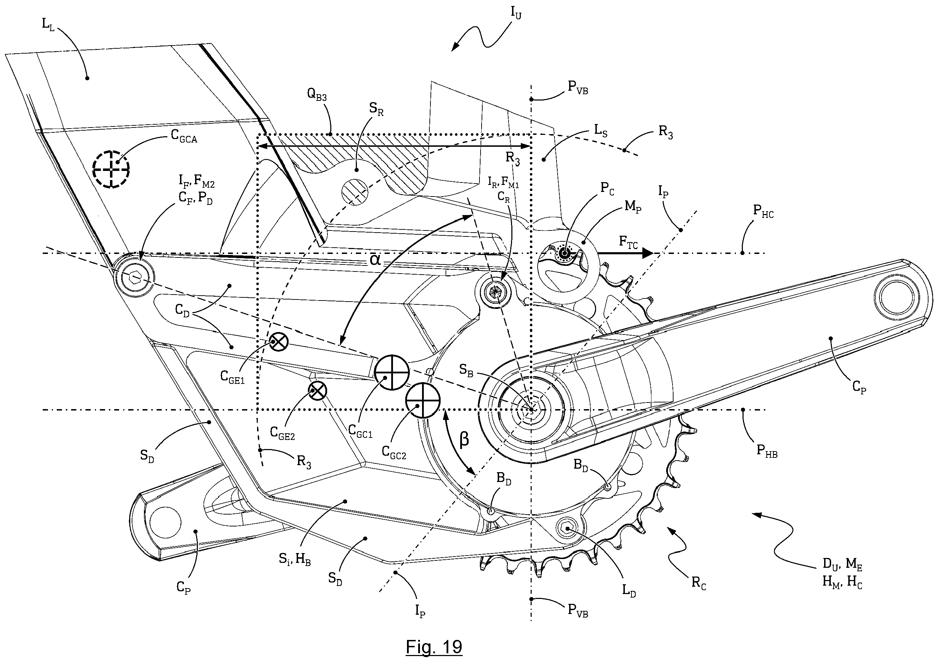

Um die Möglichkeit zur Aufnahme von Kraftstößen durch das Antriebsschutzschild S_{D} weiter zu verbessern, kann insbesondere die in Fahrtrichtung hintere Befestigung L_{D} des Antriebsschutzschilds S_{D}, anders als in Fig. 19, 22, 23, 25, 30 und 34 gezeigt, auch weiter vorne angeordnet sein, so dass sich die freitragende Länge des Antriebsschutzschilds S_{D} entsprechend verkürzt.

Zwischen dem Antriebsschutzschild S_{D} und der Batterie Si befindet sich, zumindest über die freitragende Länge des Antriebsschutzschilds S_{D}, vorzugsweise ein Luftspalt, damit die freitragende Länge des Antriebsschutzschilds S_{D} bei auftretenden Kraftstößen nachgeben und die Kraftstöße entsprechend abfangen kann, ohne dass es zu einer Kollision des Antriebsschutzschilds S_{D} mit der Batterie Si und zu unzulässig hohen mechanischen Belastungen der Batterie Si kommt.

Alternativ ist auch eine zumindest teilweise Ableitung von Kraftstößen über den freitragenden Bereich des Antriebsschutzschilds S_{D} auf die Batterie Si möglich. Hierzu wird das Batteriegehäuse H_{B} entsprechend robust ausgebildet, und vorzugsweise eine dämpfende und die Kraft verteilende Elastomerzwischenlage zumindest zwischen dem freitragenden Bereich des Antriebsschutzschilds S_{D} und dem vorderen unteren Bereich der Batterie Si vorgesehen.

Mit dem Antriebsschutzschild S_{D} gemäß der vorliegenden Offenbarung kann zudem auf die beim Stand der Technik (vgl. Fig. 1) üblicherweise erforderlichen weiteren mechanischen Schnittstellen zwischen Hauptrahmen 1 und Batterie Si zum Zweck der Batteriebefestigung verzichtet werden, wodurch Aufwand, Kosten und mögliche Fehlerquellen weiter entscheidend verringert werden.

Das Antriebsschutzschild S_{D} ist bevorzugt mit Haltevorsprüngen Rp versehen (vgl. Fig. 22 bis 25), welche das Einsetzen und Herausnehmen der Batterie erleichtern, insbesondere ein unkontrolliertes Herausfallen der Batterie beim Öffnen des Antriebsschutzschilds S_{D} vermeiden.

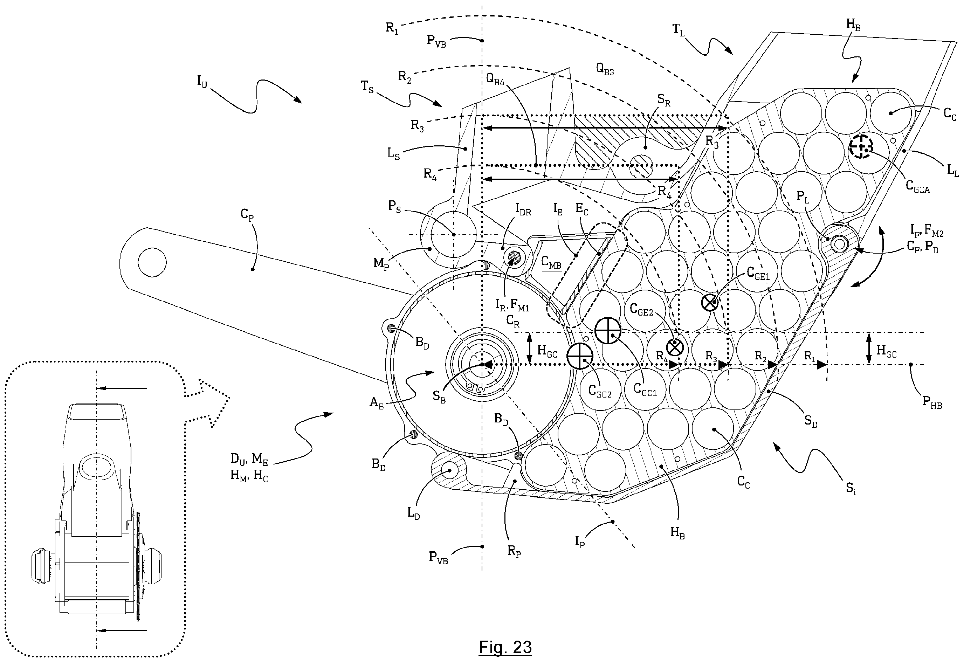

Wie aus Fig. 29C hervorgeht, kann das Antriebsschutzschild S_{D} einen bezogen auf die Rotationsachse F_{M2} des Antriebsschutzschilds S_{D} exzentrisch geformten, vorzugsweise elastisch nachgiebig gestalteten Klemmvorsprung P_{L} oder eine entsprechend exzentrisch geformten Nocke aufweisen, der bzw. die beim Schließen des Antriebsschutzschilds S_{D} (vgl. Fig. 23/24 sowie Fig. 25, 30 und 33B) die Batterie Si gegen entsprechende Widerlager beispielsweise am Motorgehäuse H_{M}, T_{H} presst. Auf diese Weise wird die Batterie Si fest und auch bei anspruchsvollen Einsatzzwecken des Fahrrads klapperfrei in der Antriebseinheit Du gehalten, ohne dass hierfür weitere Verriegelungen oder Befestigungsmittel erforderlich sind, die vom Benutzer eigens betätigt werden müssten.

Diese Befestigung und Verriegelung der Batterie Si mittels einem elastischen nachgiebigen Klemmvorsprung P_{L} hat den weiteren Vorteil, dass im Betrieb auftretende Verwindungen des Fahrradrahmens und/oder der Antriebseinheit Du im Bereich zwischen Tretlager und Unterrohr T_{L} keine nachteiligen Auswirkungen auf den festen Einschluss der Batterie Si in der Antriebseinheit Du haben, da der elastisch nachgiebige Klemmvorsprung P_{L} derartige Verwindungen ohne weiteres ausgleicht.

Fig. 17 bis 19 und 23 zeigen auch bei diesem Ausführungsbeispiel die Schwerpunktlagen C_{GE1} (Batterieschwerpunkt der abgebildeten Batterie Si) und C_{GC1} (Gesamtschwerpunkt der Antriebseinheit Du einschließlich Batterie Si) bzw. die Schwerpunktlagen C_{GE2} (Batterieschwerpunkt einer kleineren, hier nicht abgebildeten Batterie Si ähnlich dem Ausführungsbeispiel gemäß Fig. 12 und 13, bei dem sich die Batterie nicht in das Unterrohr erstreckt) und C_{GC2} (Gesamtschwerpunkt der Antriebseinheit einschließlich der kleineren Batterie). Insbesondere Fig. 19 und 23 zeigen, dass bei dieser Ausführungsform sämtliche Schwerpunkte C_{GE1}, CGE2, C_{GC1} und CGC2 vorteilhaft innerhalb des kleinen Quadranten Q_{B3} mit dem Radius R₃, und somit sowohl bezüglich ihrer Höhe als auch bezüglich ihrer horizontalen Lage in unmittelbarer Nähe der Tretlagerwelle S_{B} liegen.

In Fig. 17 sind zum Vergleich weiterhin nochmals die entsprechenden Schwerpunktlagen C_{GEA} (Batterieschwerpunkt beim Stand der Technik gemäß Fig. 1) und C_{GCA} eingezeichnet (Gesamtschwerpunkt von Motoreinrichtung M_{E} sowie Batterien Si und S_{A}). In Fig. 18, 19 und 23 ist entsprechend zum Vergleich nochmals der Gesamtschwerpunkt C_{GCA} eingezeichnet. Dadurch wird erkennbar, besonders deutlich in Fig. 17, dass der Gesamtschwerpunkt C_{GC} der Antriebseinheit Du gemäß der vorliegenden Offenbarung maßgeblich tiefer und weiter hinten und damit vorteilhaft weitaus zentraler im Fahrradrahmen liegt als beim Stand der Technik beispielsweise gemäß Fig. 1.

Dies bringt entscheidende Vorteile mit Bezug auf die in der Beschreibungseinleitung ausgeführte Schwerpunktsproblematik bei bekannten E-Mountainbikes mit sich, insbesondere deutliche Verbesserungen bezüglich Handling und Fahrsicherheit.

Weiterhin zeigt Fig. 17 einen vom Tretlager S_{B} aus gesehen rechts oben liegenden Quadranten Q_{B}, dort mit einer Seitenlänge R₁, die dem Umkreis-Radius R₁ um das Tretlager S_{B} entspricht, und welcher die Schwerpunktlage C_{GE} der Batterie Si sowie die gemeinsame Schwerpunktlage C_{GC} der Antriebseinheit D_{U} einschließlich der Batterie Si enthält. Bereits hier wird erkennbar, wie viel weiter unten und weiter hinten im Fahrrad die Schwerpunkte C_{GE} und C_{GC} angeordnet sind, bezogen auf die entsprechenden Schwerpunktlagen C_{GEA} und C_{GCA} des Standes der Technik (vgl. Fig. 1). Insbesondere die Schwerpunktlagen C_{GE} und C_{GC} gehen nochmals besonders deutlich aus den vergrößerten Darstellungen gemäß Fig. 18, Fig. 19 und Fig. 23 hervor.

Fig. 18 und 19 zeigen zudem eine schräge Ebene Ip, welche die Drehachse der Tretlagerwelle S_{B} enthält. Die schräge Ebene Ip ist relativ zu einer Horizontalebene um einen Winkel β von 50° nach vorne gekippt, und grenzt einen Bereich vor und oberhalb des Tretlagers S_{B} ab, innerhalb dem die beiden Befestigungsachsen F_{M1} und F_{M2} zwischen Antriebseinheit Du und Fahrradrahmen bzw. zwischen Antriebseinheit Du und Rahmenschnittstellen-Einheit Iu bevorzugt angeordnet sind. Ebenfalls vorzugsweise sind die beiden Befestigungsachsen F_{M1} und F_{M2} innerhalb eines Winkels α von 30° bis 80°, besonders bevorzugt innerhalb eines Winkels α von 50° bis 60° angeordnet, wobei der Scheitel des Winkels α mit der Drehachse der Tretlagerwelle S_{B} zusammenfällt, und wobei der Winkel α in dem Tretlager-Quadranten Q_{B1} lokalisiert ist.

Diese Anordnung der Befestigungsachsen F_{M1}, F_{M2} mit ihren entscheidenden, bereits weiter oben beschriebenen Vorteilen wird durch das Zusammenwirken einer Mehrzahl besonderer Merkmale der Antriebseinheit nach der vorliegenden Offenbarung möglich, darunter die Zuordnung nahezu aller Kräfte, Momente und Toleranzen zur hinteren Rahmenschnittstelle, und die damit erreichten kurzen Kraftübertragungswege und hohen Steifigkeiten der Antriebseinheit. Dies bringt wiederum die Möglichkeit zum Verzicht auf die im Stand der Technik übliche dritte Befestigungsachse weit hinter und oft sogar unterhalb der Tretlagerwelle mit sich.

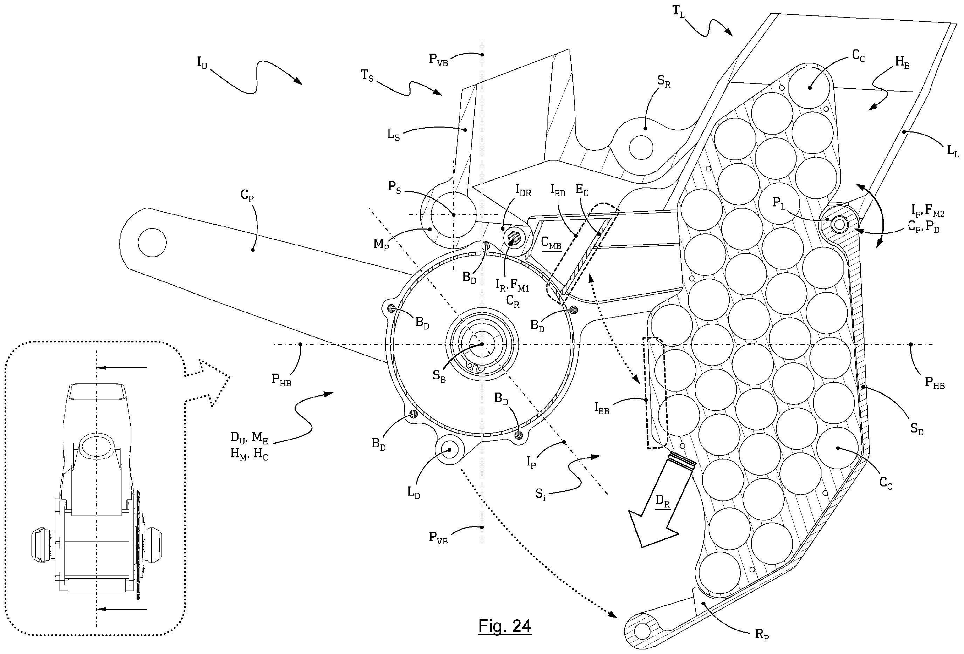

Fig. 23 und 24 zeigen insbesondere das (das hier geschnitten dargestellte) Batteriegehäuse H_{B} mit darin enthaltenen Akkuzellen Cc. Wie in Fig. 23 und 24 erkennbar, sind die Akkuzellen Cc vorzugsweise in einer hexagonalen Packung mit minimalem gegenseitigen Abstand angeordnet. Da die hexagonale Packung der räumlichen Anordnung von zylindrischen Körpern mit der höchsten Packungsdichte entspricht, lässt sich hierdurch eine hohe Batteriekapazität in einem geringem Volumen erzielen.

Gleichzeitig ermöglicht es die hexagonale Packung zusammen mit der Anordnung der meisten oder aller Akkuzellen Cc achsparallel zur Tretlagerwelle, der Batterie Si eine optimal an die irregulär geformten räumlichen Randbedingungen zwischen Motorgehäuse H_{M}/T_{H}, Controller C_{MB}, Unterrohr T_{L} bzw. Unterrohrmuffe L_{L} angepasste Form zu verleihen (vgl. Zusammenschau von Fig. 23 und 24).

Hierdurch lässt sich der Energieinhalt der Batterie Si maximieren, es wird eine einfache Entnahme der Batterie Si durch Ausschwenken aus der Antriebseinheit Du sichergestellt (vgl. Fig. 24, 25 und 30), und ein fester und klapperfreier Einschluss der Batterie in der Antriebseinheit Du wird gewährleistet, obwohl vorzugsweise keine weiteren Verriegelungen oder Befestigungsmittel für die Batterie außer des Antriebsschutzschilds S_{D} vorhanden oder erforderlich sind, insbesondere keine Verriegelungen oder Befestigungsmittel seitens des Fahrradrahmens.

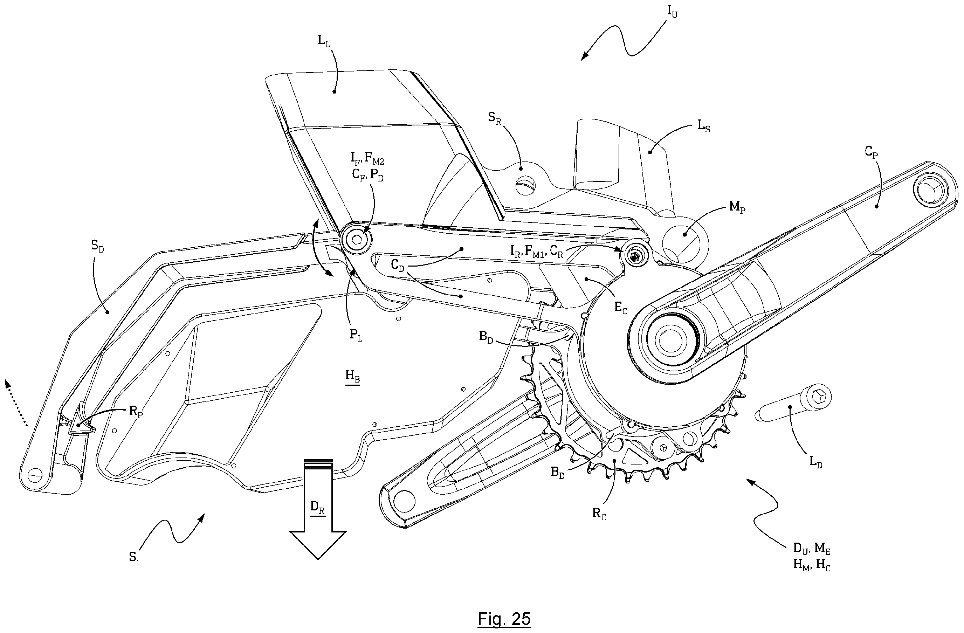

Weiter erkennt man in Fig. 23 und 24 ein zusätzliches Gehäuse zur Aufnahme eines Controllers C_{MB} für Motor und/oder Batterie Si (vgl. auch Fig. 25 und 26). Im Batteriegehäuse kann zusätzlich ein Batteriecontroller C_{B} enthalten sein (in Fig. 23/24 nicht dargestellt, vgl. jedoch z.B. Fig. 9), der insbesondere für das Aufladen der Batterie Si zuständig ist.

Gemäß Fig. 23 und 24 befindet sich zwischen Controller C_{MB} und Batterie Si eine elektrische Schnittstelle I_{E} zur Energie- und vorzugsweise drahtlosen Informationsübertragung zwischen Controller C_{MB} und Batterie Si. Die elektrische Schnittstelle I_{E}, die beispielsweise in Form einer Steckerverbindung ausgebildet sein kann, wird beim Öffnen des Antriebsschutzschilds S_{D} und damit verbundenem Schwenken der Batterie Si gemäß Fig. 24 automatisch getrennt in ihre beiden Schnittstellen-Teile I_{ED} (zugeordnet der Antriebseinheit) und I_{EB} (zugeordnet der Batterie). Ebenso werden die beiden Schnittstellen-Teile I_{ED} und I_{EB} nach dem Einsetzen der Batterie Si und beim nachfolgenden Schließen des Antriebsschutzschilds S_{D} automatisch und kinematisch eindeutig bestimmt wieder zusammengeführt, wodurch Fehlbedienungen und eine damit verbundene fehlerhafte Kontaktierung oder Beschädigung der Schnittstellenkontakte ausgeschlossen sind. Aus einer Zusammenschau von Fig. 23 und 24 geht hervor, dass die Batterie Si beim Öffnen des Antriebsschutzschilds S_{D} zusammen mit dieser um die vordere Antriebseinheits-Schnittstellenanordnung I_{F} rotiert bzw. geschwenkt wird. Die besondere Formgebung der Batterie Si in deren oberem Bereich ermöglicht diese Schwenkbewegung, ohne dass die Batterie Si dabei mit der Innenwandungen des Unterrohrs T_{L} bzw. der Unterrohrmuffe L_{L} kollidiert.

Das Antriebsschutzschild S_{D} weist einen Antriebsschutzschild-Verschluss L_{D} auf, der vorzugsweise als mit üblichem Innensechskantschlüssel leicht entfernbarer Bolzen zum einfachen Öffnen des Antriebsschutzschilds S_{D} ausgebildet ist (vgl. Fig. 22, 25, 27). Auf diese Weise bildet das Antriebsschutzschild S_{D} somit gleichzeitig wesentliche Teile des Batteriefachs zur Aufnahme und Halterung der Batterie Si.

Im Unterschied zu den in Fig. 23 bis 25 und 30 dargestellten Ausführungsbeispielen kann ein Antriebsschutzschild S_{D} auch mit der Batterie verbunden oder einstückig mit einem Teil des Batteriegehäuses ausgebildet sein, so dass die Batterie selbst die Funktion des Antriebsschutzschilds S_{D} mit übernimmt.

Insbesondere in Fig. 18 bis 25 erkennbar ist weiterhin eine Hinterbauschwingen-Lageraufnahme Mp, die in Form einer in das Motorgehäuse H_{M}, in ein Motoreinrichtung M_{E} und Batterie Si gemeinsames Antriebsgehäuse Hc, oder, gemäß der hier betrachteten Ausführungsform, in die Rahmenschnittstellen-Einheit I_{U} integrierte Lageraufnahme Mp zur schwenkbaren Lagerung der gefederten Hinterbauschwinge 2 des Fahrradrahmens vorliegt.

Die Hinterbauschwingen-Lageraufnahme Mp kann auch ähnlich wie beim Stand der Technik gemäß Fig. 1 am Fahrradrahmen angeordnet bzw. befestigt sein.

Die Lagerachse Ps der Hinterbauschwinge As (vgl. Fig. 11 bis 24) verläuft idealerweise und daher bevorzugt durch den bzw. sehr nahe beim Haupt-Kraftangriffspunkt Pc der Kettenzugkraft F_{TC} am Kettenrad Rc (vgl. Fig. 11 bis 24), um keine unerwünschten Einfederungsbewegungen der Hinterbauschwinge As in Abhängigkeit der Kettenzugkraft F_{TC} zu verursachen.

In Fig. 17. 25 bezeichnet S_{R} eine Aufnahme für eine Feder/Dämpfereinheit Ds (vgl. Fig. 1 bis 15 und 17) der gefederten Hinterbauschwinge 2 des Fahrradrahmens.

In das Sattelrohr Ts (vgl. Fig. 1 bis 15 und 17) des Hauptrahmens 1 greift bei dem ersten Ausführungsbeispiel gemäß Fig. 17 bis 29B eine Sattelrohrmuffe Ls ein (vgl. Fig. 17 bis 25), die vorzugsweise einstückig zusammen mit der Hinterbauschwingen-Lageraufnahme Mp, der Hinterbaudämpfer-Aufnahme S_{R} und einer Unterrohrmuffe L_{L} (vgl. Fig. 17 bis 25), die in das Unterrohr T_{L} (vgl. Fig. 1 bis 15 und 17) des Hauptrahmens 1 greift, ausgebildet ist.

Besonders bevorzugt bilden Sattelrohrmuffe Ls, Unterrohrmuffe T_{L}, Hinterbauschwingen-Lageraufnahme Mp, Hinterbaudämpfer-Aufnahme S_{R}, zusammen mit den Antriebseinheits-Schnittstellenanordnungen I_{DR} und I_{DF} einstückig die Rahmenschnittstellen-Einheit Iu, welche somit insbesondere zur Verbindung der Antriebseinheit Du mit dem Hauptrahmen 1 und ggf. mit der gefederten Hinterbauschwinge 2 eingerichtet ist (vgl. Fig. 16, 17 und 22).

Wie bereits weiter oben ausgeführt, dienen die Antriebsgehäuse-Ausleger C_{D} der Festlegung des sechsten (rotatorischen) Bewegungsfreiheitsgrads F_{R} (vgl. Fig. 22) der Antriebseinheit Du gegenüber dem Fahrradrahmen 1 bzw. gegenüber der Rahmenschnittstellen-Einheit Iu, indem die Antriebsgehäuse-Ausleger C_{D} mit der vorderen Antriebseinheits-Schnittstellenanordnung I_{DF} der Rahmenschnittstellen-Einheit Iu verbunden werden.

Da die Verbindung der Antriebsgehäuse-Ausleger C_{D} mit der vorderen Antriebseinheits-Schnittstellenanordnung I_{DF} der Rahmenschnittstellen-Einheit Iu, wie ebenfalls bereits weiter oben bei der Diskussion der Aufgabenverteilung der beiden Rahmenschnittstellenanordnungen I_{F} und I_{R} ausgeführt, nur vergleichsweise geringe Kräfte übertragen und keine hohen Genauigkeitsanforderungen bzw. Toleranzanforderungen erfüllen muss, genügt es und ist daher bevorzugt, dass die Verbindung zwischen Antriebsgehäuse-Ausleger C_{D} und vorderer Antriebseinheits-Schnittstellenanordnung I_{DF} durch Reibschluss erfolgt.

Hierzu dienen beim ersten Ausführungsbeispiel gemäß Fig. 17 bis 29B Reibscheiben W_{F} (vgl. Fig. 22 und 26), welche zwischen Außenoberflächen Os der vorderen Antriebseinheits-Schnittstellenanordnung I_{DF} und entsprechenden Innenoberflächen Is der Rahmenschnittstellen I_{F} an den Antriebsgehäuse-Auslegern C_{D} durch die Verschraubung C_{F} der vorderen Antriebseinheits-Schnittstellenanordnung I_{DF} mit der Antriebseinheit Du reibend geklemmt werden (vgl. Fig. 22 und 26).

Wie bereits ausgeführt, dient die Verbindung zwischen Antriebsgehäuse-Ausleger C_{D} und vorderer Antriebseinheits-Schnittstellenanordnung I_{DF} der Rahmenschnittstellen-Einheit Iu lediglich der rotatorischen Fixierung der Antriebseinheit Du und der Drehmomenteinleitung ausgehend von der Antriebseinheit D_{U} in die Rahmenschnittstellen-Einheit I_{U} bzw. in den Fahrradrahmen.

Die vorliegend bevorzugte Verbindung zwischen Antriebsgehäuse-Ausleger C_{D} und vorderer Antriebseinheits-Schnittstellenanordnung I_{DF} durch Reibschluss, beispielsweise mittels Verschraubung C_{F} und Reibscheiben W_{F}, ist diesbezüglich vorteilhaft insofern, als diese keine hohen Anforderungen an die Genauigkeit der rahmenseitigen vorderen Antriebseinheits-Schnittstellenanordnung I_{DF} sowie der antriebsseitigen Rahmenschnittstellenanordnung I_{F}, hier also an die Genauigkeit der Bohrungen, Absätze und Gewinde der Verschraubung C_{F} in radialer Richtung, bezogen auf die vordere Befestigungsachse F_{M2} stellt.

Auch in axialer Richtung, bezogen auf die vordere Befestigungsachse F_{M2} stellt die lediglich als Drehmomentausleger zur Festlegung des Rotation-Freiheitsgrads F_{R} benötigte Verbindung zwischen den Antriebsgehäuse-Auslegern C_{D} und der vorderen Antriebseinheits-Schnittstellenanordnung I_{DF} der Rahmenschnittstellen-Einheit Iu lediglich sehr geringe Anforderungen.

Insbesondere können die Antriebsgehäuse-Ausleger C_{D} so ausgelegt werden, dass diese im kräftefreien, nicht montierten Zustand der Antriebseinheit Du einen gegenüber den Schnittstellenflächen bzw. Schnittstellenebenen P_{iF} der vorderen Antriebseinheits-Schnittstellenanordnung I_{DF} etwas zu großen Abstand aufweisen. Bei der Montage der Antriebseinheit Du werden die Antriebsgehäuse-Ausleger C_{D} sodann durch die Kraft der Verschraubung C_{F} geringfügig nach innen elastisch verformt, wodurch etwaige Abstandstoleranzen der Schnittstellenebenen P_{iF} der vorderen Antriebseinheits-Schnittstellenanordnung I_{DF} großzügig und leicht ausgeglichen werden können.

Hingegen erfolgt die maßliche Fixierung der Antriebseinheit Du gegenüber der Rahmenschnittstellen-Einheit Iu bzw. gegenüber dem Hauptrahmen 1 in allen drei Raumrichtungen und die Übertragung der diesen Raumrichtungen entsprechenden Kräfte praktisch ausschließlich durch die in allen drei Raumrichtungen vorzugsweise formschlüssige Verbindung zwischen hinterer Antriebseinheits-Schnittstellenanordnung I_{DR} und Antriebseinheit Du (vgl. Fig. 22, 26 und 27).

An die Verbindung zwischen Antriebsgehäuse-Ausleger C_{D} und vorderer Antriebseinheits-Schnittstellenanordnung I_{DF} dagegen werden nur geringe Anforderungen hinsichtlich Genauigkeit und Toleranzen gestellt, was - neben den oben bei der Diskussion der Aufgabenverteilung der beiden Rahmenschnittstellenanordnungen I_{F} und I_{R} beschriebenen Vorteilen - auch den Herstellungsaufwand und die Herstellungskosten für die Rahmenschnittstellen-Einheit Iu verringert.

Aus Fig. 22 geht insbesondere unter Zusammenschau mit Fig. 28 hervor, dass das Motorgehäuse H_{M}, welches hier gleichzeitig das gemeinsame Gehäuse Hc für Motor M_{E} und Batterie Si bildet, sich vorzugsweise aus lediglich drei Einzelteilen zusammensetzt, nämlich aus zwei Gehäusedeckeln C_{HL}, C_{HR} und einem bevorzugt im Wesentlichen oder gänzlich prismatischen Gehäuserohr T_{H} wobei die Gehäusedeckel C_{H} zusammen mit dem Gehäuserohr T_{H} mittels einer Mehrzahl von Motorgehäuse-Schrauben B_{D} zu dem Motorgehäuse H_{M} verbindbar sind.

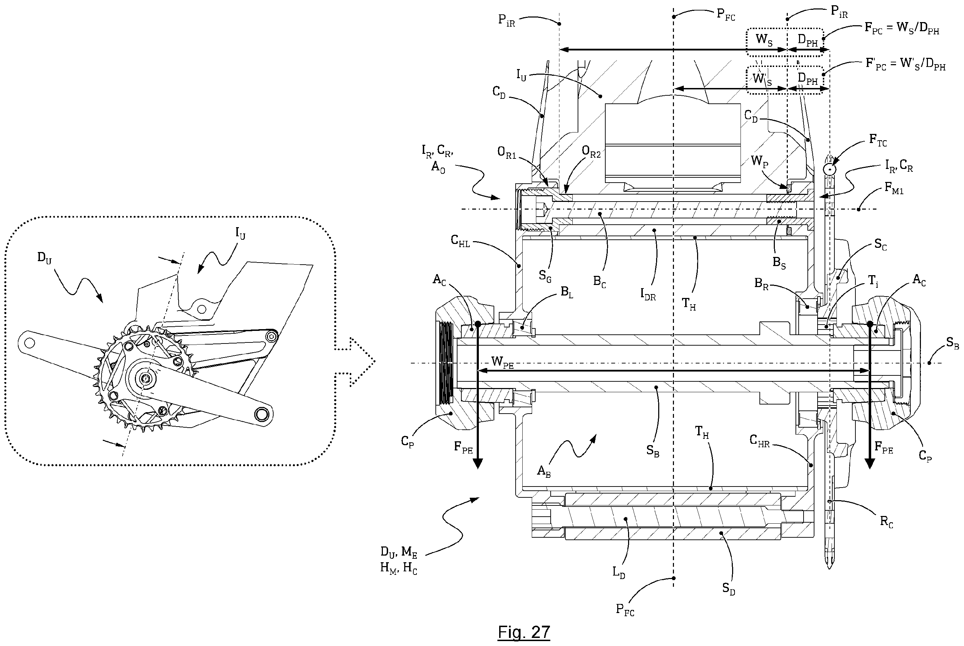

Wie insbesondere Fig. 28 zeigt, umfassen die Gehäusedeckel C_{H} vorzugsweise jeweils einstückig jeweils einen der Antriebsgehäuse-Ausleger C_{D}, und weisen Lageraufnahmen M_{BR}, M_{BL} auf, in welche linksseitig eine Lagerung B_{L} für die Tretlagerwelle S_{B}, und rechtsseitig eine Lagerung B_{R} für eine Motor-Ausgangshohlwelle S_{HM} aufnehmbar ist (vgl. Fig. 29C und 27).

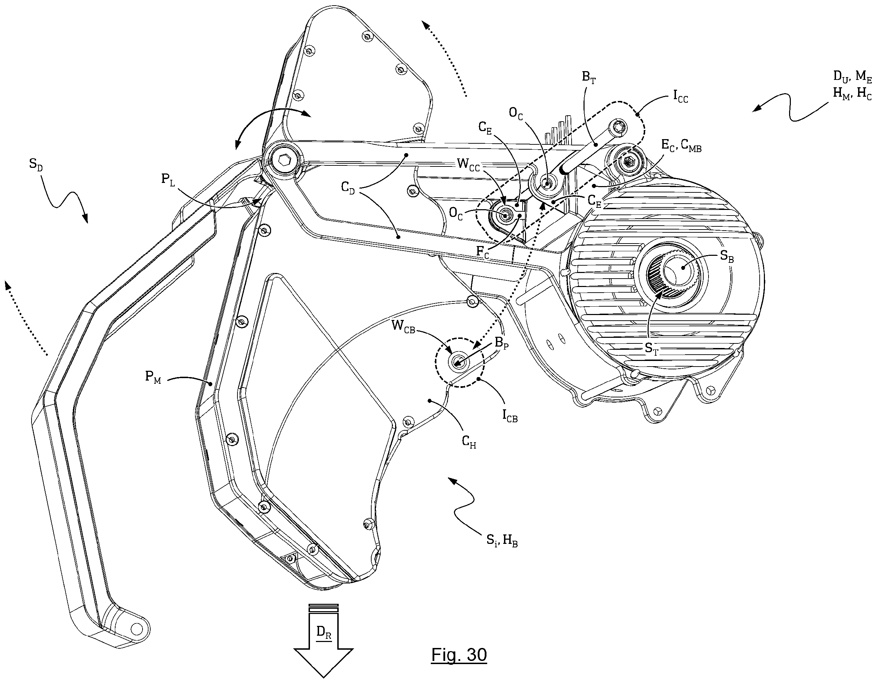

In der Schnittdarstellung von Fig. 27 sind ferner Kurbeladapter Ac erkennbar, welche eine in Fig. 30, 31 und 34 sichtbare, auf der Tretlagerwelle angeordnete Wellenverzahnung S_{T} mit einer in der Pedalkurbel C_{P} angeordneten, wellenförmigen Kerbverzahnung Sw (vgl. die formkorrespondierende wellenförmige Kerbverzahnung Sw am Außendurchmesser des Kurbeladapters wie in Fig. 22, 29C und 34 erkennbar) rotatorisch formschlüssig verbinden.

Der Kurbeladapter Ac ist vorteilhaft in zweierlei Hinsicht. Einerseits ermöglicht dieser ein einfacheres Montagekonzept für die Motoreinrichtung M_{E}, insbesondere ein Montagekonzept für ein (in den Figuren nicht dargestelltes) rechtsseitig angeordnetes Untersetzungsgetriebe der Motoreinrichtung M_{E} für eine linksseitig angeordneten (ebenfalls nicht dargestellten) Elektromotor. Bei der Montagekonzept kann insbesondere die Tretlagerwelle S_{B} ohne aufgesteckte Kurbeladapter Ac einfacher mit weiteren Komponenten der Motoreinrichtung M_{E}, insbesondere mit Komponenten des Untersetzungsgetriebes montiert werden, da die Tretlagerwelle S_{B} ohne aufgesteckte Kurbeladapter Ac eine kleineren Durchmesser aufweist.

Ein weiterer Vorteil der Kurbeladapter Ac liegt in der damit ermöglichten, rotatorisch in beide Drehrichtungen spielfrei formschlüssigen Verbindung zwischen den Pedalkurbeln Cp und der Tretlagerwelle S_{B}.

Bei anderen Anwendungen in der Getriebetechnik müssen Kerbverzahnungen Sw ein Nenndrehmoment zumeist nur in einer Richtung spielfrei übertragen. Beim Fahrrad ist es hingegen erforderlich, hohe Drehmomente zwischen den Pedalkurbeln C_{P} und der Tretlagerwelle S_{B} spielfrei in beiden Drehrichtungen zu übertragen. Beispielsweise kann der Fahrer eines Fahrrads mit seinem gesamten Körpergewicht auf den Pedalen stehen, wodurch jeweils hohe Drehmomente mit gegenläufiger Drehrichtung von den Pedalkurbeln Cp auf die Tretlagerwelle S_{B} wirken. Würden die Drehmomente von den Kerbverzahnungen Sw von den Pedalkurbeln C_{P} auf die Tretlagerwelle S_{B} nicht spielfrei übertragen, so würde dies zu unerwünschten ruckartigen Drehbewegungen zwischen den Pedalkurbeln C_{P} und der Tretlagerwelle S_{B} und zu entsprechenden Knackgeräuschen führen. Zudem würde hierdurch die Verbindung zwischen den Pedalkurbeln Cp und der Tretlagerwelle S_{B} mit der Zeit beschädigt oder lose, was zudem zu Unfallgefahren führen würde.

Aus diesem Grund müssen am Fahrrad Kerbverzahnungen Sw zwischen Pedalkurbeln Cp und Tretlagerwelle S_{B} zusätzlich zur drehmomentübertragenden Verzahnung konisch ausgebildet sein, um die Pedalkurbeln C_{P} axial auf die Tretlagerwelle S_{B} aufpressen zu können und hierdurch eine spielfreie Verbindung zwischen den Pedalkurbeln C_{P} und der Tretlagerwelle S_{B} zu erzeugen. Nur so lässt sich das vom Fahrer in beiden Richtungen aufgebrachte Drehmoment spielfrei in beiden Drehrichtungen übertragen.

Insbesondere wenn der Kurbeladapter Ac aus einem duktilen Material und/oder dünnwandig ausgebildet wird, führt das Aufpressen der Pedalkurbel C_{P} in Axialrichtung auf die Tretlagerwelle S_{B} zu einer radialen Komprimierung des Kurbeladapters Ac auf die Wellenverzahnung S_{T} (vgl. Fig. 30, 31 und 34). Hierdurch wird auch zwischen der Wellenverzahnung S_{T} und dem Kurbeladapter Ac die gewünschte, in beiden Drehrichtungen spielfrei feste formschlüssige Verbindung erzeugt auch dann, wenn die die Wellenverzahnung S_{T} nicht konisch, sondern prismatisch ausgebildet ist, wie in Fig. 30, 31 und 34 dargestellt. Die prismatische Ausbildung der Wellenverzahnung S_{T} spart zudem Kosten bei der Herstellung der Tretlagerwelle S_{B} gegenüber einer ohne den Kurbeladapter Ac sonst erforderlichen konischen Ausbildung der Wellenverzahnung S_{T}.

Die an der Antriebseinheit Du angeordneten Rahmenschnittstellen I_{R}, I_{F} als formkorrespondierende Gegenstücke zu den Antriebseinheits-Schnittstellenanordnungen I_{DR}, I_{DF} der Rahmenschnittstellen-Einheit Iu befinden sich vorzugsweise an den Gehäusedeckeln C_{H} der Antriebseinheit Du, wie insbesondere aus Fig. 22, 28, 31 und 34 hervorgeht Dabei sind die Rahmenschnittstellen I_{R}, I_{F} vorzugsweise einstückig mit den Gehäusedeckeln C_{H} ausgebildet.

Auf diese Weise wird unter anderem eine wünschenswert maximal große Abstützbreite Ws der Verbindung zwischen den Rahmenschnittstellen I_{R}, I_{F} der Antriebseinheit Du und dem Hauptrahmen 1 bzw. der Rahmenschnittstellen-Einheit Iu erreicht (vgl. Fig. 26 bis 28), was die Steifigkeit der Verbindung zwischen Fahrradrahmen und Antriebseinheit Du sowie den direkten Kraftfluss verbessert.

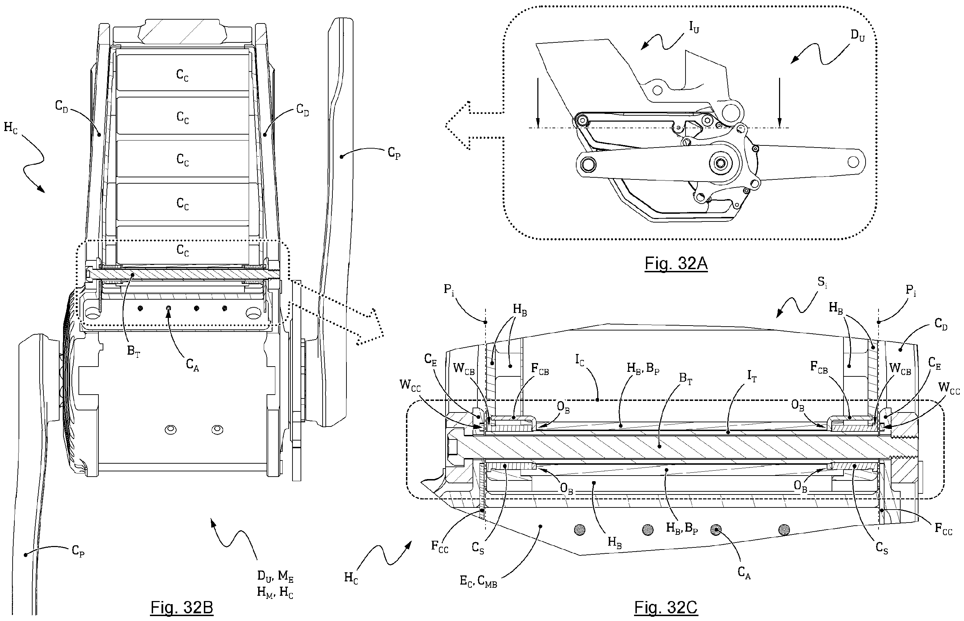

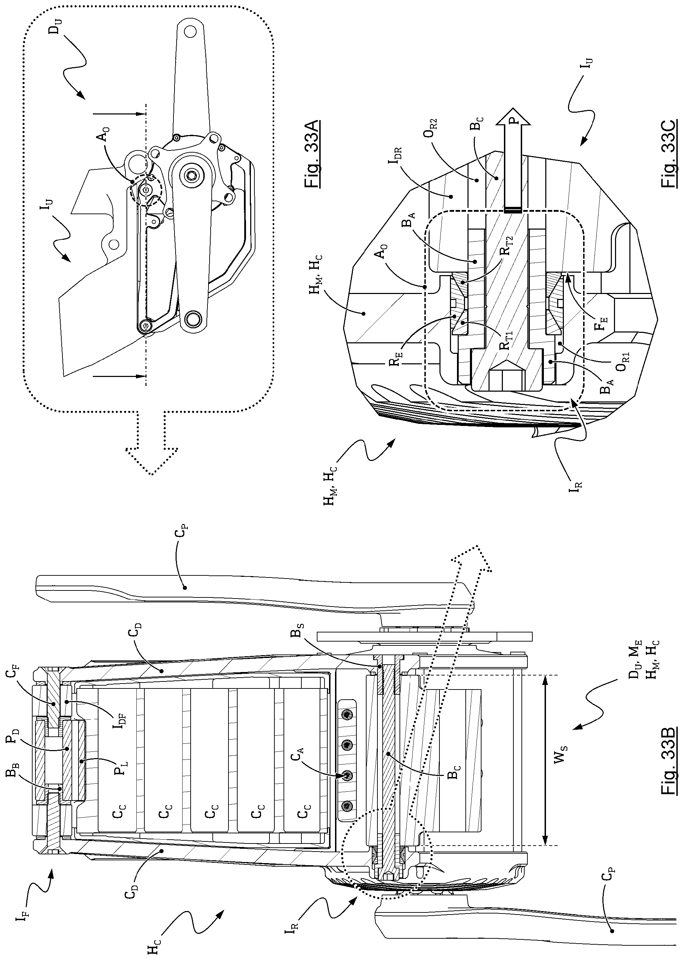

Anders als in Fig. 26 und 27 und ähnlich auch in Fig. 32B und 33B dargestellt, kann die Antriebseinheit Du bezüglich ihrer wesentlichen Abmessungen in Querrichtung (entlang der Achse der Tretlagerwelle S_{B}) auch asymmetrisch in Bezug auf eine Rahmenmittelebene P_{FC} ausgebildet sein (vgl. Fig. 27). Insbesondere können wesentliche Abmessungen in Querrichtung linksseitig größer sein als entsprechende rechtsseitige Abmessungen. Hierdurch wird es möglich, insbesondere die ggf. sehr hohen Kettenzugkräfte F_{TC} mit minimalem Kettenzug-Horizontalabstand D_{PH} zur rechtsseitigen Schnittstellenebene P_{iR} der zugehörigen hinteren Rahmenschnittstellenanordnung I_{R} zu führen. Hierdurch werden die durch die Kettenzugkräfte F_{TC} erzeugten Drehmomente und damit Verwindungen der Antriebseinheit Du, der Rahmenschnittstellen-Einheit Iu sowie des Hauptrahmens 1 minimiert.

Durch die vorzugsweise einstückige Anordnung der Rahmenschnittstellen I_{R}, I_{F} in den Gehäusedeckeln C_{H} werden Gewichts- bzw. Antriebskräfte F_{PE} auf die Tretlagerwelle S_{B} sowie Kettenzugkräfte F_{TC} direkt über die in den Gehäusedeckeln C_{H} angeordneten Lagerungen B_{L}, B_{R} in die Gehäusedeckel C_{H}, und von dort über die Rahmenschnittstellen I_{R}, I_{F} und die Antriebseinheits-Schnittstellenanordnungen I_{DR}, I_{DF} in die Rahmenschnittstellen-Einheit Iu und damit in den Fahrradrahmen geleitet.

Das zentrale Gehäuserohr T_{H} muss demzufolge kaum Last übertragen, und kann hinsichtlich anderer Aspekte, beispielsweise im Hinblick auf Materialauswahl und Fertigungsmöglichkeiten optimiert werden. Aufgrund der vorzugsweise vollständig prismatischen Gestalt des Gehäuserohrs T_{H} ergibt sich auch eine einfache und kostengünstige Fertigung, beispielsweise durch Drehen oder Strangpressen eines Aluminiumrohrs.

Auch lässt sich das Gehäuserohr T_{H} im Hinblick auf maximale Wärmeleitfähigkeit bei gleichzeitig geringem Gewicht optimieren, indem bevorzugt eine Aluminiumlegierung wie beispielsweise AL6060 für das Gehäuserohr T_{H} gewählt wird, welche eine weitaus bessere Wärmeleitfähigkeit als das im Stand der Technik häufig verwendete Magnesium aufweist.

Alternativ können die Gehäusedeckel C_{H} auch am Fahrradrahmen 10 angeordnet, insbesondere einstückig mit dem Fahrradrahmen ausgebildet sein. Es ist ebenfalls eine Ausführungsform vorgesehen, bei der einer der Gehäusedeckel, bevorzugt der auf der Antriebsseite, also fahrerbezogen rechtsseitig angeordnete Gehäusedeckel C_{HR} am Fahrradrahmen angeordnet und vorzugsweise einstückig mit dem Fahrradrahmen ausgebildet ist, während der andere, linksseitige Gehäusedeckel C_{HL} als separates, vom Gehäuserohr T_{H} trennbares Bauteil ausgebildet ist. Hierdurch wird eine einfache Zugangsmöglichkeit zu dem dergestalt zumindest teilweise einstückig mit dem Hauptrahmen 1 ausgebildeten Motorgehäuse H_{M} geschaffen, beispielsweise zu Wartungszwecken.

Die (in den Figuren des ersten Ausführungsbeispiels gemäß Fig. 17 bis 29B nicht dargestellte, jedoch in Fig. 29C des zweiten Ausführungsbeispiels gemäß Fig. 29C bis 34 erkennbare) Motor-Ausgangshohlwelle S_{HM}, welche in ähnlicher Form auch beim ersten Ausführungsbeispiel vorhanden ist, weist eine Außenverzahnung T_{E} auf, die zum Eingriff in eine formkorrespondierende Innenverzahnung Ti eines Kettenrad-Spiders Sc (vgl. Fig. 22) eingerichtet ist. Über die durch Innenverzahnung Ti und Außenverzahnung T_{E} gebildete Drehmoment-Schnittstelle wird das aus dem Fahrer-Drehmoment und dem Motor-Drehmoment gebildete Summen-Drehmoment aus der Antriebseinheit Du in den Antriebsstrang 3 (vgl. Fig. 1) übertragen.

Die Innenverzahnung Ti kann (unter Wegfall des Kettenrad-Spiders Sc) auch unmittelbar in einem Kettenrad Rc angeordnet sein. Vorzugsweise ist jedoch ein Kettenrad-Spider Sc vorhanden, auf dem wahlweise Kettenräder Rc mit beispielsweise unterschiedlicher Zähnezahl oder unterschiedlicher Kettenlinie Lc montiert werden können (vgl. Fig. 26 und 22).

Nachfolgend werden bevorzugte Positionen der Rahmenschnittstellen I_{R}, I_{F} bzw. Antriebseinheits-Schnittstellenanordnungen I_{DR}, I_{DF} relativ zur Antriebseinheit Du bzw. relativ zur Rahmenschnittstellen-Einheit I_{U} beschrieben (vgl. Fig. 17 bis 19 und Fig. 22 bis 26).

Wie insbesondere aus Fig. 18 hervorgeht, liegen bevorzugt alle Rahmenschnittstellenanordnungen I_{R}, I_{F} bzw. Antriebseinheits-Schnittstellenanordnungen I_{DR}, I_{DF} und damit die beiden Befestigungsachsen F_{M1}, F_{M2} als Schnittstellen zwischen Antriebseinheit Du und Hauptrahmen 1 bzw. zwischen Antriebseinheit D_{U} und Rahmenschnittstellen-Einheit I_{U} in einem vertikalen Bereich oberhalb einer gedachten Horizontalebene P_{HB}, welche die Drehachse der Tretlagerwelle S_{B} enthält, sowie unterhalb einer Horizontalebene P_{HC}, welche den Angriffspunkt Pc der Kettenzugkraft F_{TC} enthält.

Zur Minimierung von durch die Kettenzugkraft F_{TC} erzeugten Drehmomenten und entsprechenden Belastungen bzw. Verformungen von Antriebseinheit Du, Rahmenschnittstellen-Einheit Iu bzw. Hauptrahmen 1 ist dabei der vertikale Abstand D_{PV} zwischen der hinteren Befestigungsachse F_{M1} und dem Angriffspunkt Pc der Kettenzugkraft F_{TC} möglichst klein, vorzugsweise kleiner als 30 mm, besonders bevorzugt kleiner als 21 mm.

Ebenfalls bevorzugt liegen die beiden Befestigungsachsen F_{M1}, F_{M2} weiter vorn als eine gedachte Vertikalebene P_{VB}, welche die Drehachse der Tretlagerwelle S_{B} enthält, bevorzugt mehr als 15 mm weiter vorn als die gedachte Vertikalebene P_{VB}.

Vorzugsweise liegen die beiden Befestigungsachsen F_{M1}, F_{M2} vor einer gedachten schrägen Ebene Ip, welche die Drehachse der Tretlagerwelle S_{B} enthält, wobei die schräge Ebene Ip relativ zu einer Horizontalebene um einen Winkel β von 50° nach vorne gekippt ist, mit anderen Worten im Uhrzeigersinn gekippt, bezogen auf eine Ansicht von rechts wie beispielsweise gemäß Fig. 17 und 18.

In einer besonders bevorzugten Kombination der drei vorstehend genannten Ausführungen liegen die beiden Befestigungsachsen F_{M1}, F_{M2} in einem vertikalen Bereich zwischen den beiden Horizontalebenen P_{HB} und P_{HC}, vor der Vertikalebene P_{VB}, sowie vor der schrägen Ebene Ip.

Ebenfalls vorzugsweise liegen die beiden Befestigungsachsen F_{M1}, F_{M2} innerhalb eines im rechts oben liegenden Tretlager-Quadranten Q_{B1} lokalisierten Winkels α von 30° bis 80°, besonders bevorzugt innerhalb eines Winkels α von 50° bis 60°, wobei der Scheitel des Winkels mit der Drehachse der Tretlagerwelle S_{B} zusammenfällt (vgl. Fig. 18 und 19).

Besonders bevorzugt ist weiterhin eine Kombination der vorstehend genannten Ausführungsformen, bei der die beiden Befestigungsachsen F_{M1}, F_{M2} in einem vertikalen Bereich zwischen den beiden Horizontalebenen P_{HB} und P_{HC} sowie vor der Vertikalebene P_{VB}, weiterhin vor der schrägen Ebene I_{P}, sowie innerhalb eines Winkels α von 30° bis 80°, besonders bevorzugt innerhalb eines Winkels α von 50° bis 60° liegen.

Mit einer solchen Anordnung der beiden Befestigungsachsen F_{M1}, F_{M2} als Schnittstellen zwischen Antriebseinheit Du und Hauptrahmen 1 bzw. zwischen Antriebseinheit Du und Rahmenschnittstellen-Einheit Iu lassen sich gegenüber dem Stand der Technik zahlreiche Vorteile erzielen.

Zunächst steht durch derartige Bauweisen wesentlich mehr Bauraum für Baugruppen der Hinterbaufederung wie Schwingenlager und Dämpferanlenkung zur Verfügung, da der Hauptrahmen 1 nicht mehr wie beim Stand der Technik verhältnismäßig weit bis hinter das Tretlager und dabei teilweise sogar bis unterhalb der Tretlagerhöhe reichen muss. Hierdurch verringern sich auch Komplexität, Gewicht und Kosten, und der Rahmenhersteller erhält wesentlich mehr Gestaltungsfreiheit in dem funktional sehr wichtigen Bereich direkt hinter dem Tretlager.

Weiterhin verbessern sich gegenüber dem Stand der Technik, bei dem der Rahmen die Antriebseinheit oftmals zu einem großen Teil umschließt, zumindest jedoch im Bereich der Befestigungsachsen, mit den vorstehend beschriebenen Bauweisen auch die Möglichkeiten zur Kühlung der elektrischen und elektronischen Komponenten der Antriebseinheit. Dies spielt eine zunehmende Rolle bei den aktuell immer weiter abnehmenden Baugrößen dieser Komponenten bei gleichzeitig tendenziell steigenden Motorleistungen.

Bezüglich der seitlichen Positionierung der Rahmenschnittstellen ist bevorzugt vorgesehen, dass die Schnittstellenebenen P_{iR} zwischen den hinteren Rahmenschnittstellenanordnungen I_{R} der Antriebseinheit Du und den zugehörigen, hinteren Antriebseinheits-Schnittstellenanordnungen I_{DR} des Rahmens bzw. der Rahmenschnittstellen-Einheit Iu im Hinblick auf optimale Momenten- und Kraftübertragung von der Antriebseinheit Du auf den Hauptrahmen 1, und im Hinblick auf hohe Steifigkeit der Antriebseinheit Du, links und rechts jeweils outboardseitig des Hauptrahmens 1 positioniert sind, wodurch sich eine entsprechend vorteilhaft große Abstützbreite Ws ergibt (vgl. Fig. 22, 26 und 27).

In diesem Zusammenhang kann als Quotient aus der Abstützbreite Ws und einer Pedalkraft-Wirkungsbreite W_{PE}, welche dem horizontalen Abstand der effektiven Pedalkraft-Angriffspunkte auf die Verbindungsflächen zwischen Tretkurbel und Tretlagerwelle entspricht (vgl. Fig. 26 und 27), ein Abstützungsfaktor Fs gebildet werden (siehe Figur 26). Der Abstützungsfaktor Fs ist größer als 0,5, bevorzugt größer als 0,55 und besonders bevorzugt größer als 0,6.

Alternativ bzw. zusätzlich zu den bevorzugten Werten des Abstützungsfaktors Fs wird die Abstützbreite Ws so gewählt, dass ein als Quotient aus der Abstützbreite Ws und einem Kettenzug-Horizontalabstand D_{PH} zwischen dem Angriffspunkt der Kettenzugkraft F_{TC} und der rechtsseitigen Schnittstellenebene P_{iR} gebildeter Kettenzugfaktor F_{PC} größer ist als 5, bevorzugt größer als 5,5 und besonders bevorzugt größer als 6.

Auf diese Weise wird eine optimale Übertragung der auf die Antriebseinheit Du wirkenden Querkräfte, insbesondere der Pedalkräfte F_{PE}, und ebenso der Kettenzugkräfte F_{TC}, auf kürzestem Weg in den Fahrradrahmen gewährleistet. Auch erhalten hierdurch die an dieser Kraftübertragung beteiligten Strukturen der Antriebseinheit Du und des Hauptrahmens 1 bzw. der Rahmenschnittstellen-Einheit Iu bei geringem Gewicht eine besonders hohe Steifigkeit, was unerwünschten Verwindungen und damit verbundenen Kraftverlusten im Betrieb der Antriebseinheit Du entgegenwirkt.

Bei Antriebseinheiten aus dem Stand der Technik liegen Werte für den Abstützungsfaktor Fs hingegen zumeist deutlich unter 0,4, und Werte für den Kettenzugfaktor F_{PC} zumeist deutlich unter 3.

Damit ergeben sich beim Stand der Technik hohe Biegemomente durch die Wirkung der Pedalkräfte F_{PE} und der Kettenzugkräfte F_{TC}, die entweder zu entsprechend großen Verformungen der Antriebseinheit bzw. des Fahrradrahmens im Tretlagerbereich führen, oder mit großen Wandstärken in diesen Bereichen aufgefangen und kompensiert werden müssen, was zu entsprechend hohen Gewichten von Antriebseinheit und Rahmen führt.

Wird die Antriebseinheit Du bezüglich ihrer wesentlichen Abmessungen in Querrichtung (entlang der Achse der Tretlagerwelle S_{B}) asymmetrisch in Bezug auf eine Rahmenmittelebene P_{FC} ausgebildet, wie weiter oben mit Bezug auf Fig. 27 beschrieben, so kann alternativ oder zusätzlich zu einem als Quotient aus Abstützbreite Ws und Kettenzug-Horizontalabstand D_{PH} gebildeten Kettenzugfaktor F_{PC} ein Kettenzugfaktor F'_{PC} als Quotient aus einem rechtsseitigen Abstützabstand W's (siehe Fig. 27) und dem Kettenzug-Horizontalabstand D_{PH} gebildet werden. Dieser Kettenzugfaktor F'_{PC} ist gemäß der vorliegenden Offenbarung größer als 2,5, bevorzugt größer als 2,75 und besonders bevorzugt größer als 3.

In Fig. 29C bis 34 ist ein gegenüber dem ersten Ausführungsbeispiel gemäß Fig. 17 bis 29B geändertes und konstruktiv verfeinertes zweites Ausführungsbeispiel dargestellt. Einige wesentliche Unterschiede zwischen dem ersten Ausführungsbeispiel gemäß Fig. 17 bis 29B und dem zweiten Ausführungsbeispiel gemäß Fig. 29C bis 34 gehen dabei aus einer Zusammenschau von Fig. 29A bis Fig. 29D hervor.

Man erkennt dort zunächst insbesondere, dass der Motor- und/oder Batteriecontroller C_{MB}, welcher bei dem ersten Ausführungsbeispiel gemäß Fig. 17 bis 29B im Wesentlichen nur schematisch gezeigt ist, bei dem zweiten Ausführungsbeispiel gemäß Fig. 29C bis 34, dort konkretisiert als Motorcontroller C_{M}, mit höherem Detaillierungsgrad dargestellt ist.

So stellt der Motorcontroller C_{M} des zweiten Ausführungsbeispiels u.a. eine Anzahl von Zusatzanschlüssen C_{A} bereit, an denen sich weitere Stromverbraucher anschließen lassen wie beispielsweise Fahrradbeleuchtung, ein elektrisches Schaltwerk 4 gemäß Fig. 1, eine elektrisch gesteuerte höhenverstellbare Sattelstütze 8 gemäß Fig. 1, oder im Markt z.B. unter dem Begriff "Flight Attendant" bekannte elektrisch bzw. elektronisch gesteuerte Feder/Dämpferelemente für eine vordere Federgabel und/oder für eine Hinterbaufederung 2, Ds (vgl. Fig. 1).

Über einen oder mehrere der Zusatzanschlüsse C_{A} lässt sich beispielsweise auch die Stromversorgung für eine Mensch-Maschinen-Schnittstelle bzw. Betätigungsschnittstelle H_{Mi} realisieren, welche zur Steuerung der diversen elektrischen bzw. elektronischen Systeme des Fahrrads eingerichtet ist. An der Betätigungsschnittstelle H_{Mi} oder an anderer Stelle am Fahrrad, beispielsweise im Bereich eines Oberrohrs Tu des Fahrradrahmens, können auch Ladebuchsen zum Betreiben oder Aufladen von Zusatzgeräten wie beispielsweise von Smartphones angeordnet sein, deren Stromversorgung ebenfalls über einen der Zusatzanschlüsse C_{A} realisiert werden kann.

Vorzugsweise dienen die Zusatzanschlüsse C_{A} lediglich der Stromversorgung von Zusatzgeräten wie beispielsweise die vorstehend erwähnten, während ein Datenaustausch zwischen dem Motorcontroller C_{M} und den Zusatzgeräten, bzw. ein Datenaustausch zwischen verschiedenen Zusatzgeräten, insbesondere zum Zweck der Steuerung von Zusatzgeräten bzw. des Motorcontrollers C_{M}, mittels eines drahtlosen Kommunikationsprotokolls erfolgt, beispielsweise über Bluetooth.

In Fig. 29D (sowie in Fig. 30) ist erkennbar, dass das Batteriegehäuse H_{B} bei diesem Ausführungsbeispiel ein Gehäuse-Mittelteil P_{M} sowie zwei Gehäuse-Deckelplatten C_{H} umfasst. Das Gehäuse-Mittelteil P_{M}, welches zur Aufnahme und Fixierung der Batteriezellen Cc vorzugsweise ähnlich wie in den Schnittdarstellungen von Fig. 23 und 24 ausgebildet ist, ist beidseitig mit Gehäuse-Deckelplatten C_{H} verschlossen, welche mit dem Gehäuse-Mittelteil P_{M} vorzugsweise verschraubt sind, um Reparaturen bzw. den Austausch von verbrauchten oder defekten Batteriezellen zu erleichtern. Die Schrauben zur Verbindung der Gehäuse-Deckelplatten C_{H} mit dem Gehäuse-Mittelteil P_{M} sind in Fig. 29C und 30 nicht dargestellt.

Als weiteren wesentlichen Unterschied zwischen dem ersten Ausführungsbeispiel gemäß Fig. 17 bis 29B und dem zweiten Ausführungsbeispiel gemäß Fig. 29C bis 34 erkennt man in Fig. 29C und 29D eine im Wesentlichen achsenförmig ausgebildete bzw. angeordnete Stromschnittstelle Ic, welche eine controllerseitige Stromschnittstellen-Baugruppe Icc und eine batterieseitige Stromschnittstellen-Baugruppe I_{CB} umfasst.

Die Stromschnittstelle I_{C} kann einerseits zur zusätzlichen mechanischen Fixierung der Batterie Si in deren betriebsbereit eingeschwenkten Position ähnlich Fig. 23 eingerichtet sein. Insbesondere dient die Stromschnittstelle Ic jedoch der stromübertragenden Kontaktierung und Verbindung zwischen der Batterie Si und dem Motorcontroller C_{M}, welcher die aus der Batterie Si als Fahrstrom entnommene Antriebsenergie wiederum an den Motor M_{E} weitergibt.

Beim Stand der Technik, für den Fig. 1 ein Beispiel angibt, wird die Batterie Si üblicherweise mittels einer Steckerverbindung mit dem Motorcontroller C_{M} oder mit einem kombinierten Controller C_{MB} für Motor und/oder Batterie verbunden. Derartige aus dem Stand der Technik bekannte Steckerverbindungen sind üblicherweise vielpolig ausgeführt und zur Übertragung sowohl von Fahrströmen in Richtung Controller und Motor, als auch von Ladeströmen in Richtung Batterie, und ebenso zur Übertragung von Steuersignalen zwischen Controller und Batterie bzw. zwischen einem etwa vorhandenen separaten Ladegerät, Ladeanschluss oder Ladecontroller und Batterie ausgebildet.

Solche bekannte Steckerverbindungen sind elektrisch sowie mechanisch aufwändig und verursachen daher einerseits verhältnismäßig hohe Kosten in Produktion und Montage. Andererseits sind derartige Steckerverbindungen häufig Ursache von Störungen oder Ausfällen beispielsweise durch Verschmutzung oder durch unsachgemäße Behandlung bei der Entnahme oder beim Wiedereinsetzen der Batterie Si.

Wie vorstehend bzw. weiter oben in der Beschreibung zu Fig. 23 und 24 ausgeführt, erfolgt die Übertragung von Steuersignalen zwischen Controller C_{MB} und Batterie Si bei der elektrischen Fahrrad-Antriebseinheit Du gemäß der vorliegenden Offenbarung bevorzugt mittels eines drahtlosen Übertragungsprotokolls. Auf diese Weise entfällt bereits die Notwendigkeit, eine diverse Steuerleitungen umfassende, vielpolige Steckerverbindung zwischen Controller C_{MB} und Batterie Si vorzusehen.

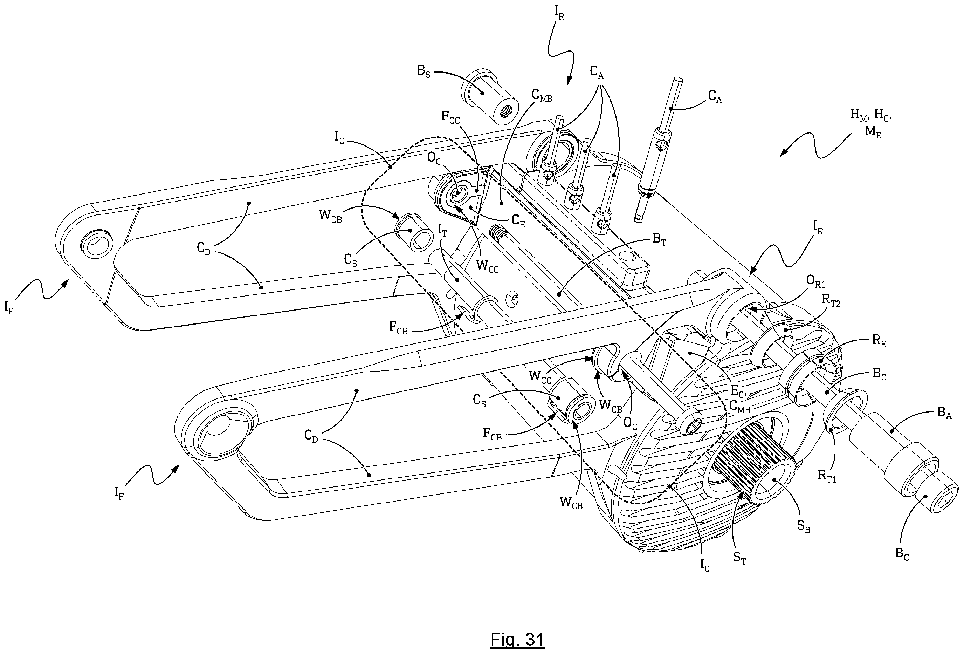

Mit diesem Hintergrund ist die Stromschnittstelle Ic vorzugsweise zweipolig ausgebildet und umfasst besonders bevorzugt keine Steckerverbindung. Die Funktionsweise einer solchen besonders bevorzugten Ausführungsform der Stromschnittstelle Ic ist einer Zusammenschau von Fig. 30 und 31 zu entnehmen. Man erkennt, dass die sich hier wieder aus controllerseitiger Stromschnittstellen-Baugruppe Icc und batterieseitiger Stromschnittstellen-Baugruppe I_{CB} zusammensetzende Stromschnittstelle Ic einen Schraubenbolzen B_{T} umfasst, welcher - zusätzlich zum Einschluss der Batterie Si zwischen des Antriebsschutzschilds S_{D} und dem Gehäuse Hc - sowohl zur mechanischen Befestigung der Batterie Si an den Antriebsgehäuse-Auslegern C_{D} eingerichtet ist, als auch zur Herstellung einer elektrischen Kontaktverbindung zwischen der Batterie Si und dem Controller C_{MB}.

Zur Herstellung dieser elektrischen Kontaktverbindung sind an der Batterie Si sowohl linksseitig (gemäß Fig. 30) als auch rechtsseitig (in Fig. 30 verdeckt, sichtbar jedoch in Fig. 32C) metallische Kontaktscheiben W_{CB} angeordnet, wobei jede der beiden metallischen Kontaktscheiben W_{CB} mit einer der beiden Spannungs-Pole der Batterie verbunden ist. Die Kontaktoberflächen sowohl der Kontaktscheiben W_{CB} als auch der Kontaktscheiben Wcc verlaufen in Schnittstellenebenen Pi, welche parallel zur Entnahmerichtung der Batterie Si angeordnet sind, vgl. Fig. 32C.

Korrespondierende metallische Kontaktscheiben Wcc sind rechtsseitig (gemäß Fig. 30) sowie linksseitig (in Fig. 30 verdeckt, sichtbar jedoch in Fig. 32C) an Innenseiten von Vorsprüngen C_{E} des Controllers C_{MB} angeordnet, wobei jeder der beiden metallischen Kontaktscheiben Wcc mit entsprechenden Spannungs-Polen des Controllers verbunden ist.

Beim Einsetzen der Batterie Si entgegen der Entnahmerichtung D_{R} in Fig. 30 und beim anschließenden Einschwenken der Batterie Si, in der Darstellung von Fig. 30 entgegen dem Uhrzeigersinn, geraten die metallischen Kontaktscheiben W_{CB} der Batterie Si mit den korrespondierenden metallischen Kontaktscheiben Wcc des Controllers C_{MB} in gegenseitige Überdeckung, was besonders deutlich Fig. 32C entnommen werden kann.

Wird sodann der Schraubenbolzen B_{T} durch die zugehörigen Klemmöffnungen Oc sowie bei Bp gemäß Fig. 30 und 32C durch die Batterie hindurchgeführt und festgezogen, so legen sich aufgrund geringfügiger elastischer Verformung der Antriebsgehäuse-Ausleger C_{D} durch die Schraubenkraft des Schraubenbolzens B_{T} die metallischen Kontaktscheiben Wcc des Controllers C_{MB} auf die metallischen Kontaktscheiben W_{CB} der Batterie Si, und werden aufgrund der Schraubenkraft des Schraubenbolzens B_{T} fest auf einander gepresst.

Der Aufbau des Stromschnittstelle I_{C} ist im Einzelnen besonders deutlich nochmals Fig. 31 zu entnehmen. Man erkennt wieder den Schraubenbolzen B_{T} sowie metallische Kontaktscheiben W_{CB}, Wcc von Batterie Si und Controller C_{MB}, welche beim Einschwenken der Batterie Si und beim anschließenden Festziehen des Schraubenbolzens B_{T} miteinander zur Deckung gebracht und aufeinander gepresst werden, wie vorstehend beschrieben.

Die der Batterie Si zugeordneten Kontaktscheiben W_{CB} sind bei der dargestellten Ausführungsform der Stromschnittstelle Ic durch äußere Stirnflächen metallischer Kontakthülsen Cs gebildet, während die dem Controller C_{MB} zugeordneten Kontaktscheiben Wcc jeweils eine angeformte Kontaktfahne Fcc aufweisen. Somit bilden die Kontaktscheiben Wcc zusammen mit den Kontaktfahnen Fcc eine zweipolige elektrische Stromverbindung von den scheibenförmigen Elementen Wcc in das Gehäuse des Controllers C_{MB} hinein.

Die der Batterie Si zugeordneten Kontaktscheiben W_{CB} sind bei der dargestellten Ausführungsform der der Stromschnittstelle Ic durch Stirnseiten von metallisch leitfähigen Kontakthülsen Cs gebildet, welche, ebenfalls durch die Anpresskraft des Schraubenbolzens B_{T}, auf Kontaktfahnen F_{CB} gepresst werden. Dabei bilden die Kontaktfahnen F_{CB} eine zweipolige elektrische Stromverbindung von den leitfähigen Kontakthülsen Cs in das Gehäuse der Batterie Si hinein, vgl. auch Fig. 32C.

Fig. 32C zeigt einen Längsschnitt durch die Stromschnittstelle Ic gemäß Fig. 29C bis 31, wobei sich der Schnittverlauf des in Fig. 32C dargestellten Längsschnitts aus den Figuren 32A und 32B ableiten lässt.

Man erkennt zunächst die nur ausschnittsweise bzw. teilweise weggeschnitten dargestellten Baugruppen des Antriebsgehäuses Hc mit dessen Antriebsgehäuse-Auslegern C_{D}, sowie die ebenfalls nur teilweise und geschnitten dargestellten Baugruppen Controller C_{MB} und Batterie Si mit Batteriegehäuse H_{B}.

Die Stromschnittstelle Ic umfasst Schraubenbolzen B_{T}, batterieseitige Kontaktfahnen F_{CB}, Kontakthülsen Cs und Kontaktscheiben W_{CB} sowie controllerseitige Kontaktscheiben Wcc und Kontaktfahnen Fcc. In der Darstellung von Fig. 32C ist der Schraubenbolzen B_{T} noch nicht festgezogen, so dass die Antriebsgehäuse-Ausleger C_{D} zusammen mit den daran innenseitig anliegenden Vorsprüngen C_{E} des Controllers C_{MB} noch nicht durch die Schraubenkraft des Schraubenbolzens B_{T} nach innen gebogen sind, siehe den Luftspalt bei Pi zwischen den Außenflächen des Batteriegehäuses H_{B} bzw. den damit bündigen stirnseitigen Kontaktflächen der Kontaktscheiben W_{CB} der Kontakthülsen Cs und den Innenflächen der Vorsprünge C_{E} des Controllers C_{MB} und den damit bündigen, controllerseitigen Kontaktscheiben Wcc und Kontaktfahnen Fcc.

Beim Festziehen des Schraubenbolzens B_{T} werden die Antriebsgehäuse-Ausleger C_{D} zusammen mit den daran innenseitig anliegenden Vorsprüngen C_{E} des Controllers C_{MB} die Schraubenkraft des Schraubenbolzens B_{T} geringfügig nach innen gebogen, wodurch die batterieseitigen Kontaktscheiben W_{CB} und die controllerseitigen Kontaktscheiben Wcc fest aufeinander gepresst werden.

Gleichzeitig werden hierdurch auch die batterieseitigen Kontakthülsen Cs und die ebenfalls batterieseitigen Kontaktfahnen aufeinander gepresst, wobei die ringförmigen Bereiche der Kontaktfahnen F_{CB} (vgl. Fig. 31) auf Bohrungsabsätzen O_{B} der vorliegend zylindrischen Durchdringungsausnehmung BP des Batteriegehäuses Si, in welcher der Schraubenbolzen B_{T} das Batteriegehäuse quer durchdringt (vgl. Fig. 30), zur Anlage kommen.

Auf diese Weise wird über den Kontaktweg F_{CB} -> Cs -> W_{CB} -> Wcc -> Fcc eine zuverlässige, zweipolige elektrische Verbindung mit hoher Strombelastbarkeit zwischen Batterie Si und Controller C_{MB} hergestellt, ohne dass hierfür technisch aufwändige, teure und zudem anfällige Steckerverbindungen gemäß dem Stand der Technik notwendig wären. Dabei sind beispielsweise die linksseitigen Kontaktelemente F_{CB}, Cs, W_{CB}, Wcc und Fcc dem Pluspol der Stromversorgung durch die Batterie Si zugeordnet, und die rechtsseitigen Kontaktelemente F_{CB}, Cs, W_{CB}, Wcc und Fcc dem Minuspol. Eine umgekehrte Zuordnung von Pluspol und Minuspol ist ebenfalls ohne weiteres möglich.

Um die den beiden elektrischen Polen zugeordneten linksseitigen und rechtsseitigen Kontaktelemente F_{CB}, Cs, W_{CB}, Wcc und Fcc elektrisch voneinander zu isolieren, ist der Ausführungsform der Stromschnittstelle Ic gemäß Fig. 29C bis 32C eine zum Schraubenbolzen B_{T} koaxial in der Durchdringungsausnehmung BP des Batteriegehäuses H_{B} angeordnete Isolationshülse I_{T} aus nichtleitendem Material auf dem Schraubenbolzen B_{T} angeordnet, wie aus einer Zusammenschau von Fig. 32C mit Fig. 31 hervorgeht.

Die Isolationshülse I_{T} dient dabei der elektrischen Isolierung der linksseitigen Kontaktelemente, also der elektrisch leitenden Kontakthülsen Cs mit den daran (hier einstückig) angeordneten Kontaktscheiben W_{CB}, als auch der Kontaktfahnen F_{CB} gegenüber dem Schraubenbolzen B_{T}, von den korrespondierenden rechtsseitigen Kontaktelementen Cs, W_{CB} und F_{CB}.

Vorzugsweise ist an dem Gehäuse Ec des Controllers C_{MB} auch ein Ladeport (in den Figuren nicht dargestellt) zur Verbindung eines bezüglich der Antriebseinheit Du externen oder internen Ladegeräts mit dem Stromnetz angeordnet. Eine weitere Funktion des Gehäuses Ec des Controllers C_{MB} kann darin bestehen, elektrische bzw. elektronische Baugruppen der Antriebseinheit D_{U}, die im Bereich unterschiedlicher Seiten der Antriebseinheit Du angeordnet sind, miteinander zu verbinden, ohne dass hierzu Stromleitungen insbesondere innerhalb der bzw. quer durch die Motoreinrichtung M_{E} erforderlich sind.

Beispielsweise kann eine Drehmoment-Sensoreinrichtung der Antriebseinheit Du in einem rechtsseitigen Bereich der Antriebseinheit Du in der Nähe der Drehmomentverbindung zum Kettenrad Rc angeordnet sein, während zumindest Teile des Motorcontrollers C_{MB}, insbesondere Teile der Leistungselektronik, in einem linksseitigen Bereich der Antriebseinheit in der Nähe des Elektromotors angeordnet sein können. In solchen Fällen bietet das Gehäuse Ec des Controllers C_{MB} die Möglichkeit, beispielsweise die Drehmoment-Sensoreinrichtung mit der Leistungselektronik oder mit deren Ansteuerungs-Schaltung durch das Gehäuse Ec hindurch zu verbinden, ohne dass Leitungen weder durch die Motoreinrichtung noch, weitgehend ungeschützt, außerhalb der Motoreinrichtung verlegt werden müssen. Insbesondere letzteres ist im Stand der Technik üblich.

Es ist auch möglich und vorgesehen, lediglich bestimmte Teile der Leistungselektronik zum Betrieb des Elektromotors, insbesondere die relativ voluminösen Kondensatoren einer elektronischen Motorkommutierung im Gehäuse E_{C} des Controllers C_{MB} anzuordnen, während andere Teile der Leistungselektronik, insbesondere die Leistungstransistoren, im Motorgehäuse H_{M} angeordnet sind, beispielsweise auf einer Innenseite insbesondere des linksseitigen Gehäusedeckels C_{HL}. Letzteres ermöglicht eine optimale Kühlung der Leistungstransistoren insbesondere dann, wenn der entsprechende Gehäusedeckel C_{HL} außenseitig mit Kühlrippen versehen ist (vgl. Fig. 30, 31 und 34).

Fig. 33C zeigt einen Längsschnitt durch eine linke hintere Rahmenschnittstellenanordnung I_{R} und durch die zugehörige linke hintere Antriebseinheits-Schnittstellenanordnung I_{DR} der Rahmenschnittstellen-Einheit Iu mit einem dort angeordneten Rahmen-Ausgleichsadapter Ao zur variablen spielfreien Einstellung der Klemmung in Axialrichtung zwischen Motorgehäuse H_{M} bzw. Rahmenschnittstellenanordnung I_{R} und Antriebseinheits-Schnittstellenanordnung I_{DR}. Dabei lässt sich der Schnittverlauf des in Fig. 33C dargestellten Längsschnitts aus den Figuren 33A und 33B ableiten.

Beim ersten Ausführungsbeispiel gemäß Fig. 17 bis 29B war der Rahmen-Ausgleichsadapter Ao als in Axialrichtung mittels Gewinde verstellbare Anschlagshülse ausgebildet, vgl. Fig. 22, 26 und 27 und die zugehörige Beschreibung weiter oben. Durch unterschiedlich tiefes Einschrauben des Ausgleichsadapters Ao lassen sich dort Breiten- bzw. Abstandstoleranzen bezüglich der Abstützbreite Ws (vgl. auch Fig. 28) des Fahrradrahmens bzw. der Rahmenschnittstellen-Einheit Iu sowie des Motorgehäuses H_{M} ausgleichen.

Der Ausgleichsadapter Ao des zweiten Ausführungsbeispiels gemäß Fig. 29C bis 34 hingegen benötigt keinen aktiven manuellen Ausgleich der Toleranzen bezüglich der Abstützbreite Ws. Wie aus einer Zusammenschau von Fig. 33C mit Fig. 31 hervorgeht, umfasst der Ausgleichsadapter Ao des zweiten Ausführungsbeispiels gemäß Fig. 29C bis 34 zwei an ihrem Außenumfang keilförmig zulaufende Schubringe R_{T1}, R_{T2}, einen entlang seiner Umfangsrichtung in mehrere Segmente aufgeteilten Expansionsring R_{E} sowie eine Ausrichtungshülse B_{A}.

Bei der Montage der Antriebseinheit Du am Hauptrahmen 1 bzw. an der Rahmenschnittstellen-Einheit Iu wird der Verbindungsbolzen Bc in die Schraubhülse Bs, eingeschraubt (vgl. Fig. 31 und 33B).

Beim Festziehen des Verbindungsbolzens Bc wird dann der Schubringe R_{T1}, R_{T2}, Expansionsring R_{E} sowie Ausrichtungshülse S_{A} umfassende Ausgleichsadapter Ao in der Aufnahmebohrung O_{R} der hinteren Rahmenschnittstellenanordnung I_{R} nach innen gezogen (in Fig. 33C zeichnungsbezogen nach rechts gemäß Pfeilrichtung P) so lange, bis der innere Schubring R_{T2} an der äußeren Stirnseite F_{E} der hinteren Antriebseinheits-Schnittstellenanordnung I_{DR} der Rahmenschnittstellen-Einheit Iu zur Anlage kommt.

Beim weiteren Festziehen des Verbindungsbolzens Bc erfolgte dann eine axiale Kompression des Ausgleichsadapters Ao dergestalt, dass die Schubringe R_{T1} und R_{T2} in Axialrichtung in den Expansionsring R_{E} gepresst werden, wodurch sich der Außendurchmesser des Expansionsrings R_{E} vergrößert so lange, bis der Expansionsring R_{E} reibschlüssig fest in die Aufnahmebohrung O_{R} gepresst ist.

Es ergibt sich somit lediglich durch das Festziehen des Verbindungsbolzens Bc selbsttätig eine sowohl axial als auch radial (bezogen auf den Verbindungsbolzen Bc) spielfreie, feste Verbindung zwischen der Antriebseinheit Du und dem Hauptrahmen 1 bzw. der Rahmenschnittstellen-Einheit Iu.

Dies beschleunigt und erleichtert die Montage der Antriebseinheit Du, insbesondere unter dem Gesichtspunkt, dass diese in der Praxis des Fahrradmarkts mit verschiedensten Fahrradrahmen bzw. mit ggf. unterschiedlichen Rahmenschnittstellen-Einheiten Iu kombiniert werden wird, wobei der Fahrradrahmen, oder ggf. die Rahmenschnittstellen-Einheit Iu, von verschiedensten Herstellern stammen bzw. zugeliefert sein können.

Hierdurch können sich erfahrungsgemäß unterschiedlichste Toleranzsituationen bezüglich der Abstützbreite Ws der hinteren Antriebseinheits-Schnittstellenanordnung I_{DR} ergeben. Derartige unterschiedliche Toleranzsituationen, je nach dem Ursprung des Fahrradrahmens bzw. der Rahmenschnittstellen-Einheit Iu, lassen sich somit insbesondere mit dem Ausgleichsadapter Ao des zweiten Ausführungsbeispiels gemäß Fig. 29C bis 34 auf einfachste Weise handhaben und ausgleichen.

Eine exakte Anpassung an etwaige Toleranzen des Hauptrahmens 1 bzw. der Rahmenschnittstellen-Einheit Iu und eine feste spielfreie Verbindung zwischen der Antriebseinheit Du und dem Hauptrahmen 1 bzw. der Rahmenschnittstellen-Einheit Iu in allen drei Raumrichtungen ist nicht nur von Bedeutung hinsichtlich der sicheren und zuverlässigen Übertragung der erheblichen Antriebs- und Kettenzugkräfte, wie weiter oben bei Fig. 17ff. beschrieben, sondern auch zur Vermeidung von störenden Geräuschen wie beispielsweise Knarzen oder Quietschen.

Da beim Stand der Technik üblicherweise mindestens zwei oder mehr Befestigungsachsen zur Verbindung von Antriebseinheit und Fahrradrahmen zum Einsatz kommen, bei denen jedoch, anders als bei der vorliegenden Offenbarung, unter den verschiedenen Befestigungsachsen keine spezifische Aufgabenteilung hinsichtlich Kraftübertragung, Momentenübertragung und Festlegung der Bewegungsfreiheitsgrade der Antriebseinheit relativ zum Fahrradrahmen getroffen wird, ergeben sich dort häufig erhebliche Schwierigkeiten hinsichtlich des Toleranzausgleichs bei der Montage der Antriebseinheit im Fahrradrahmen, sowie im Hinblick auf eine dauerhaft feste und spielfreie Verbindung zwischen Antriebseinheit und Fahrradrahmen.

Wie bereits weiter oben bei der Beschreibung von Fig. 17ff. ausführlich dargelegt, wird diese Problematik mit der Antriebseinheit Du gemäß der vorliegenden Offenbarung eliminiert insbesondere dadurch, dass genau zwei Befestigungsachsen vorgesehen sind, von denen die hintere Befestigungsachse sehr nahe an den wesentlichen Kraftangriffslinien positioniert ist und die Festlegung aller Bewegungsfreiheitsgrade außer einem Rotations-Freiheitsgrad F_{R} der Antriebseinheit Du übernimmt, und dass die vordere Befestigungsachse lediglich und spezifisch als Drehmomentausleger zur Festlegung des verbleibenden Rotationsfreiheitsgrads F_{R} der Antriebseinheit Du ausgebildet ist.

Fig. 34 zeigt das zweite Ausführungsbeispiel für die Antriebseinheit Du gemäß Fig. 29C bis 33 nochmals in einer perspektivischen Gesamtansicht von hinten links betrachtet. Man erkennt wieder, dass die Antriebseinheit Du eine Motoreinrichtung ME sowie eine Tretlagerbaugruppe A_{B} mit einer Tretlagerwelle S_{B}, umfasst. Ferner erkennbar ist die Batterie bzw. integrative Energiespeichereinrichtung Si zur Energieversorgung der Motoreinrichtung M_{E}. Die integrative Energiespeichereinrichtung Si ist benachbart zu der Motoreinrichtung M_{E} angeordnet.

Da insbesondere die für die Schwerpunktlagen C_{GE}, C_{GC} wesentlichen Eigenschaften und Baugruppen der Antriebseinheit Du nach dem zweiten Ausführungsbeispiel gemäß Fig. 29C bis 34, besonders die Eigenschaften der integrativen Energiespeichereinrichtung Si, mit denjenigen des ersten Ausführungsbeispiels übereinstimmen (vgl. Fig. 29A bis 29D), ergibt eine Zusammenschau von Fig. 34 mit einer der Fig. 17 bis 19 und 23, dass die Schwerpunktlagen C_{GE}, C_{GC} von Energiespeichereinrichtung Si und Antriebseinheit D_{U} auch bei der Antriebseinheit D_{U} nach dem zweiten Ausführungsbeispiel gemäß Fig. 29C bis 34 vorteilhaft innerhalb des Tretlagerbereichs R liegen.

Auch sämtliche anderen Eigenschaften und Vorteile, wie vorstehend in Bezug auf das erste Ausführungsbeispiel gemäß Fig. 17 bis 29B, ebenso wie in Bezug auf die Ausführungsformen gemäß Fig. 2 bis 16 beschrieben, sind auch bei dem zweiten Ausführungsbeispiel gemäß Fig. 29C bis 34 vorhanden.

## Patentansprüche

1. Elektrische Fahrrad-Antriebseinheit (Du) zur Anordnung in einem Tretlagerbereich (R) eines Fahrradrahmens (1), die Antriebseinheit (Du) umfassend eine elektrische Motoreinrichtung (M_{E}) sowie eine Tretlagerbaugruppe (A_{B}) mit einer Tretlagerwelle (S_{B}),
**dadurch gekennzeichnet,**
**dass** die Antriebseinheit (Du) eine integrative Energiespeichereinrichtung (Si) zur Energieversorgung der Motoreinrichtung (M_{E}) umfasst, wobei die integrative Energiespeichereinrichtung (Si) zur Anordnung benachbart zu der Motoreinrichtung (M_{E}) eingerichtet ist dergestalt, dass die Schwerpunktlage (C_{GE}) der Energiespeichereinrichtung (Si) und die Schwerpunktlage (C_{GC}) der Antriebseinheit (Du) innerhalb des Tretlagerbereichs (R) liegen.

2. Antriebseinheit (Du) nach Anspruch 1,
**dadurch gekennzeichnet,**
**dass** die integrative Energiespeichereinrichtung (Si) zur unmittelbaren Anordnung an einem Gehäuse (H_{M}) der Motoreinrichtung (M_{E}) eingerichtet ist.

3. Antriebseinheit (Du) nach Anspruch 1 oder 2,
**dadurch gekennzeichnet,**
**dass** die Antriebseinheit (D_{U}) zur zumindest teilweisen Umschließung der integrativen Energiespeichereinrichtung (Si) von einem Gehäuse (H_{M}) der Motoreinrichtung (M_{E}) eingerichtet ist.

4. Antriebseinheit (Du) nach einem der Ansprüche 1 bis 3,
**dadurch gekennzeichnet,**
**dass** die Antriebseinheit (Du) zur zumindest teilweisen Anordnung der integrativen Energiespeichereinrichtung (Si) zusammen mit der Motoreinrichtung (M_{E}) in einem gemeinsamen Gehäuse (H_{C}) eingerichtet ist.

5. Antriebseinheit (Du) nach einem der Ansprüche 1 bis 4,
**dadurch gekennzeichnet,**
**dass** die integrative Energiespeichereinrichtung (Si) im betriebsbereiten Zustand der Antriebseinheit (D_{U}) ausschließlich an der Motoreinrichtung (M_{E}), oder an einem Gehäuse (H_{M}) der Motoreinrichtung (M_{E}), oder an dem gemeinsamen Gehäuse (H_{C}), und nicht an dem Fahrradrahmen (1) befestigt ist.

6. Antriebseinheit (Du) nach einem der Ansprüche 1 bis 5,
**dadurch gekennzeichnet,**
**dass** Antriebseinheit (Du) und integrative Energiespeichereinrichtung (Si) zur zumindest teilweisen Anordnung der integrativen Energiespeichereinrichtung (Si) in einem Unterrohr (T_{L}) des Fahrradrahmens (1) eingerichtet sind.

7. Antriebseinheit (Du) nach einem der Ansprüche 1 bis 6,
**dadurch gekennzeichnet,**
**dass** der Antriebseinheit (Du) eine Zusatz-Energiespeichereinrichtung (S_{A}) zugeordnet ist, wobei Antriebseinheit (Du) und Zusatz-Energiespeichereinrichtung zur zumindest teilweisen Anordnung der Zusatz-Energiespeichereinrichtung (S_{A}) in einem Unterrohr (T_{L}) des Fahrradrahmens (1) eingerichtet sind.

8. Antriebseinheit (Du) nach Anspruch 7,
**dadurch gekennzeichnet,**
**dass** die Zusatz-Energiespeichereinrichtung (S_{A}) zur mechanischen Fixierung an der Antriebseinheit (Du) oder an der integrativen Energiespeichereinrichtung (Si) eingerichtet ist.

9. Antriebseinheit (Du) nach Anspruch 7 oder 8,
**dadurch gekennzeichnet,**
**dass** die Zusatz-Energiespeichereinrichtung (S_{A}) in die integrative Energiespeichereinrichtung (Si) integriert ist.

10. Antriebseinheit (Du) nach einem der Ansprüche 1 bis 9,
**dadurch gekennzeichnet,**
**dass** Antriebseinheit (Du) und integrative Energiespeichereinrichtung (Si) zur Anordnung der integrativen Energiespeichereinrichtung (Si), in einem montierten Zustand der Antriebseinheit (Du) an dem Fahrradrahmen (1), zu einem größeren Teil außerhalb eines Unterrohrs (T_{L}) des Fahrradrahmens (1) eingerichtet sind.

11. Antriebseinheit (Du) nach einem der Ansprüche 1 bis 10,
**dadurch gekennzeichnet,**
**dass** sich die integrative Energiespeichereinrichtung (Si) in einer dem montierten Zustand der Antriebseinheit (Du) an dem Fahrradrahmen (1) entsprechenden Lage zumindest teilweise unterhalb der Drehachse der Tretlagerwelle (S_{B}) befindet.

12. Antriebseinheit (Du) nach einem der Ansprüche 1 bis 11,
**dadurch gekennzeichnet,**
**dass** sich ein Massenschwerpunkt (C_{GE}) der integrativen Energiespeichereinrichtung (Si) und/oder ein Massenschwerpunkt (C_{GC}) der Antriebseinheit (D_{U}) in einer Fahrrad-Seitenansicht und in einer dem montierten Zustand der Antriebseinheit (Du) an dem Fahrradrahmen (1) entsprechenden Lage der Antriebseinheit (Du) innerhalb eines Umkreises mit dem Radius 175 mm (R₁), bevorzugt innerhalb eines Umkreises mit dem Radius 125 mm (R₃), besonders bevorzugt innerhalb eines Umkreises mit dem Radius 100 mm (R₄) um die Drehachse der Tretlagerwelle (S_{B}) befindet.

13. Antriebseinheit (Du) nach Anspruch 12,
**dadurch gekennzeichnet,**
**dass** sich ein Massenschwerpunkt (C_{GE}) der integrativen Energiespeichereinrichtung (Si) und/oder ein Massenschwerpunkt (C_{GC}) der Antriebseinheit (Du) in einer Seitenansicht von rechts und bezogen auf die Drehachse der Tretlagerwelle (S_{B}) innerhalb eines rechts oben liegenden Tretlager-Quadranten (Q_{B1}) mit der Seitenlänge 175 mm (R₁), bevorzugt innerhalb eines Tretlager-Quadranten (Q_{B3}) mit der Seitenlänge 125 mm (R₃), besonders bevorzugt innerhalb eines Tretlager-Quadranten (Q_{B4}) mit der Seitenlänge 100 mm (R₄) befindet.

14. Antriebseinheit (Du) nach Anspruch 13,
**dadurch gekennzeichnet,**
**dass** sich der Batterie-Massenschwerpunkt (C_{GE}) und/oder der Antriebseinheits-Massenschwerpunkt (C_{GC}), bezogen auf die Drehachse der Tretlagerwelle (S_{B}), in einer Höhe (H_{GC}) von 50 mm, bevorzugt von 30 mm, besonders bevorzugt von 20 mm oberhalb der Drehachse der Tretlagerwelle (S_{B}) befindet.

15. Antriebseinheit (Du) nach einem der Ansprüche 1 bis 14,
**gekennzeichnet durch**
ein ausschließlich an dem Gehäuse (H_{M}) der Motoreinrichtung (M_{E}) oder an dem gemeinsamen Gehäuse (Hc) der Antriebseinheit (Du) befestigtes Antriebsschutzschild (S_{D}), wobei das Antriebsschutzschild (S_{D}) gleichzeitig eine bewegliche Verschlussklappe zur Abdeckung und/oder Halterung der integrativen Energiespeichereinrichtung (Si) bildet.

16. Antriebseinheit (Du) nach einem der Ansprüche 1 bis 15,
**gekennzeichnet durch**
genau zwei Rahmenschnittstellenanordnungen (I_{DR}, I_{DF}), welche eine vordere und eine hintere Befestigungsachse (F_{M1}) und (F_{M2}) definieren.

17. Antriebseinheit (Du) nach Anspruch 16,
**dadurch gekennzeichnet,**
**dass** die Befestigungsachsen (F_{M1}) und (F_{M2}) in einem vertikalen Bereich oberhalb einer Horizontalebene P_{HB}, welche die Drehachse der Tretlagerwelle (S_{B}) enthält, und unterhalb einer Horizontalebene P_{HC}, welche den Angriffspunkt Pc der Kettenzugkraft F_{TC} enthält, angeordnet sind.

18. Antriebseinheit (Du) nach Anspruch 16 oder 17,
**dadurch gekennzeichnet,**
**dass** die Befestigungsachsen (F_{M1}) und (F_{M2}) vor einer Vertikalebene P_{VB} angeordnet sind, welche die Drehachse der Tretlagerwelle S_{B} enthält.

19. Antriebseinheit (Du) nach einem der Ansprüche 16 bis 18, **dadurch gekennzeichnet,**
**dass** die Befestigungsachsen (F_{M1}) und (F_{M2}) vor einer schrägen Ebene Ip angeordnet sind, welche die Drehachse der Tretlagerwelle S_{B} enthält, wobei die schräge Ebene Ip relativ zu einer Horizontalebene um einen Winkel (β) von 50° nach vorne gekippt ist.

20. Antriebseinheit (Du) nach einem der Ansprüche 16 bis 19, **dadurch gekennzeichnet,**
**dass** die Befestigungsachsen (F_{M1}) und (F_{M2}) innerhalb eines im rechts oben liegenden Tretlager-Quadranten (Q_{B1}) lokalisierten Winkels (α) von 30° bis 80°, besonders bevorzugt innerhalb eines Winkels (α) von 50° bis 60° angeordnet sind, wobei der Scheitel des Winkels (α) mit der Drehachse der Tretlagerwelle (S_{B}) zusammenfällt.

21. Antriebseinheit (Du) nach einem der Ansprüche 1 bis 20,
**dadurch gekennzeichnet,**
**dass** eine Abstützbreite Ws als Abstand der linksseitigen und rechtsseitigen Schnittstellenebenen (P_{iR}) der hinteren Rahmenschnittstellenanordnungen (I_{R}) so gewählt ist, dass ein als Quotient aus der Abstützbreite Ws und einer Pedalkraft-Wirkungsbreite W_{PE} gebildeter Abstützungsfaktor Fs größer ist als 0,5, bevorzugt größer als 0,55 und besonders bevorzugt größer als 0,6.

22. Antriebseinheit (Du) nach einem der Ansprüche 1 bis 21,
**dadurch gekennzeichnet,**
**dass** eine Abstützbreite Ws als Abstand der linksseitigen und rechtsseitigen Schnittstellenebenen (P_{iR}) der hinteren Rahmenschnittstellenanordnungen (I_{R}) so gewählt ist, dass ein als Quotient aus der Abstützbreite Ws und einem Kettenzug-Horizontalabstand D_{PH} gebildeter Kettenzugfaktor F_{PC} größer ist als 5, bevorzugt größer als 5,5 und besonders bevorzugt größer als 6.

23. Antriebseinheit (Du) nach einem der Ansprüche 1 bis 22,
**dadurch gekennzeichnet,**
**dass** die Antriebseinheit (Du) zur Fixierung sämtlicher Bewegungsfreiheitsgrade der Antriebseinheit (Du) gegenüber dem Fahrradrahmen (1) bzw. gegenüber einer Rahmenschnittstellen-Einheit (IU), außer einem Rotationsfreiheitsgrad (F_{R}) um eine zur Drehachse der Tretlagerwelle (S_{B}) parallele Rotationsachse (FM1), über die hintere Rahmenschnittstellenanordnung (I_{R}) eingerichtet ist.

24. Antriebseinheit (Du) nach Anspruch 23,
**dadurch gekennzeichnet,**
**dass** die Antriebseinheit (Du) zur Fixierung des Rotationsfreiheitsgrads (F_{R}) gegenüber dem Fahrradrahmen (1) bzw. gegenüber einer Rahmenschnittstellen-Einheit (IU) durch die vordere Rahmenschnittstellenanordnung (I_{F}) mittels einer Reibungsverbindung (CF, W_{F}) eingerichtet ist.

25. Antriebseinheit (Du) nach Anspruch 23 oder 24,
**dadurch gekennzeichnet,**
**dass** die hintere Rahmenschnittstellenanordnung (I_{R}) einen Rahmen-Ausgleichsadapter (A_{O}) zum Ausgleich von Breitentoleranzen des Fahrradrahmens (1) bzw. der Rahmenschnittstellen-Einheit (IU) aufweist, wobei der Rahmen-Ausgleichsadapter (A_{O}) zur radialen Fixierung der hinteren Rahmenschnittstellenanordnung (I_{R}) relativ zum Fahrradrahmen (1) bzw. relativ zur Rahmenschnittstellen-Einheit (IU) sowie zum stufenlos spielfrei einstellbaren Axial-Toleranzausgleich zwischen hinterer Rahmenschnittstellenanordnung (I_{R}) und Fahrradrahmen (1) bzw. Rahmenschnittstellen-Einheit (IU) eine in eine Aufnahmebohrung (O_{R}) des Antriebsgehäuses (HC) axial verstellbar einschraubbare Stufenhülse (SG), oder eine in eine Aufnahmebohrung (O_{R}) des Antriebsgehäuses (HC) axial verschiebbar aufnehmbare Radialklemmeinrichtung (RE, R₁₁, R_{T2}) umfasst.

26. Antriebseinheit (Du) nach einem der Ansprüche 1 bis 25,
**gekennzeichnet durch**
ein in einem Raumbereich zwischen Motoreinrichtung (M_{E}) und Energiespeichereinrichtung (Si) angeordnetes, hermetisch geschlossenes Controllergehäuse (Ec) zur Aufnahme einer Controllereinrichtung (C_{MB}) für die Steuerung von Motoreinrichtung (M_{E}) und/oder Energiespeichereinrichtung (Si).

27. Antriebseinheit (Du) nach Anspruch 26,
**gekennzeichnet durch**
dass das Controllergehäuse (Ec) eine steckerlose Stromschnittstelle (Ic) zur Verbindung der Controllereinrichtung (C_{MB}) mit der Energiespeichereinrichtung (Si) mit parallel zu einer Entnahmerichtung (D_{R}) der Energiespeichereinrichtung (Si) angeordneten Schnittstellenebenen (Pi) aufweist dergestalt, dass die Stromschnittstelle **durch** Entnahme der Batterie geöffnet und **durch** Einsetzen und/oder Befestigen (B_{T}) der Batterie verbunden wird.

28. Antriebseinheit (Du) nach einem der Ansprüche 1 bis 27,
**dadurch gekennzeichnet,**
**dass** eine Abtriebswelle (S_{M}) der Motoreinrichtung (M_{E}) koaxial zu der Tretlagerwelle (S_{B}) angeordnet ist.

29. Antriebseinheit (Du) nach einem der Ansprüche 1 bis 28,
**dadurch gekennzeichnet,**
**dass** das Gehäuse (H_{M}) der Motoreinrichtung (M_{E}) oder das gemeinsame Gehäuse (Hc) von Motoreinrichtung (M_{E}) und integrativer Energiespeichereinrichtung (Si) Lageraufnahmen (Mp) für eine Schwinge (As) eines gefederten Hinterbaurahmens (2) aufweist.

30. Fahrradrahmen (1) oder Rahmenschnittstellen-Einheit (Iu), aufweisend eine hintere Antriebseinheits-Schnittstellenanordnung (I_{DR}) und eine vordere Antriebseinheits-Schnittstellenanordnung (I_{DF}) zur Verbindung mit einer Antriebseinheit (Du) nach einem der Ansprüche 1 bis 29,
**gekennzeichnet durch**
genau zwei Antriebseinheits-Schnittstellenanordnungen (I_{DR}, I_{DF}), welche eine hintere Befestigungsachse (F_{M1}) und eine vordere Befestigungsachse (F_{M1}) definieren, wobei über die hintere Antriebseinheits-Schnittstellenanordnung (I_{DR}) sämtliche Bewegungsfreiheitsgrade der Antriebseinheit (Du) gegenüber dem Fahrradrahmen (1) bzw. der Rahmenschnittstellen-Einheit (IU) festlegbar sind außer dem Rotationsfreiheitsgrad (F_{R}) um die hintere Befestigungsachse (FM1), und wobei die vordere Antriebseinheits-Schnittstellenanordnung (I_{DF}) als Drehmomentstütze zur Festlegung des Rotationsfreiheitsgrads (F_{R}) ausgebildet ist.

31. Fahrradrahmen (1) oder Rahmenschnittstellen-Einheit (Iu) nach Anspruch 30,
**gekennzeichnet durch**
eine Anordnung der Befestigungsachsen (F_{M1}) und (F_{M2}) analog zur Anordnung der Befestigungsachsen (F_{M1}) und (F_{M2}) bei der Antriebseinheit (Du) nach einem der Ansprüche 1 bis 29.

32. Fahrradrahmen (1) oder Rahmenschnittstellen-Einheit (Iu) nach Anspruch 30 oder 31,
**gekennzeichnet durch**
einen Abstützungsfaktor (Fs) analog zu Anspruch 21 und/oder einen Kettenzugfaktor (F_{PC}) analog zu Anspruch 22.

33. Fahrradrahmen (1) oder Rahmenschnittstellen-Einheit (Iu) nach einem der Ansprüche 30 bis 32,
**gekennzeichnet durch**
Lageraufnahmen (Mp) für eine Schwinge (A_{S}) eines gefederten Hinterbaurahmens (2).

34. Energiespeichereinrichtung (Si) für eine Antriebseinheit nach einem der Ansprüche 1 bis 29,
**gekennzeichnet durch**
die Energiespeichereinrichtung (Si) betreffende Merkmale eines der Ansprüche 1 bis 29.
